(19) Europäisches Patentamt / European Patent Office / Office européen des brevets

(11) **EP 4 674 893 A1**

(12) **EUROPEAN PATENT APPLICATION**
published in accordance with Art. 153(4) EPC


(43) Date of publication:
**07.01.2026 Bulletin 2026/02**

(21) Application number: **24764210.1**

(22) Date of filing: **28.02.2024**

(51) International Patent Classification (IPC):
***C08G 81/00*** (2006.01) ***C08G 65/48*** (2006.01)
***C08G 69/10*** (2006.01) ***A61K 47/34*** (2017.01)
***A61K 47/42*** (2017.01) ***A61K 47/12*** (2006.01)
***A61K 9/00*** (2006.01)

(52) Cooperative Patent Classification (CPC):
**C08G 65/3322; C08G 69/10; C08G 69/40; C08G 73/028; C08G 81/00; C08G 83/004**

(86) International application number:
**PCT/KR2024/002614**

(87) International publication number:
**WO 2024/181811 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:
**28.02.2023 KR 20230027045**
**27.02.2024 KR 20240027834**
**27.02.2024 KR 20240028422**
**27.02.2024 KR 20240028423**



(71) Applicant: **Chung Ang University Industry Academic Cooperation Foundation**
**Seoul 06974 (KR)**

(72) Inventors:
- **NA, Dong Hee**
  **Seoul 06974 (KR)**
- **KIM, Jae Cheon**
  **Seoul 06237 (KR)**
- **JIN, Lan**
  **Seoul 06970 (KR)**
- **RO, Siwon**
  **Seoul 06921 (KR)**
- **KIM, Dohyun**
  **Seoul 06643 (KR)**

(74) Representative: **Office Freylinger**
**P.O. Box 48**
**8001 Strassen (LU)**


(54) **ABSORPTION ENHANCERS FOR ORAL DELIVERY OF BIODRUGS**


(57) The present invention relates to, for oral delivery of biodrugs, a multi-arm polyethylene glycol-KLA peptide conjugate, a PEGylated distearoyl phosphatidylethanolamine-KLA peptide conjugate, a PAMAM dendrimer-KLAL peptide conjugate, and a composition for enhancing absorption, in the gastrointestinal tract, of a biodrug for oral administration containing same as oral absorption enhancers, the conjugates of the present invention reducing cytotoxicity due to the cell permeable properties of a KLA peptide, and maintaining a tight junction modulation function of KLA through effects such as increasing resistance to proteolytic enzymes in the gastrointestinal tract, so as to promote gastrointestinal absorption of biodrugs such as peptides, proteins, polysaccharides, and antibodies when orally administrated, and thus being able to be usefully employed in increasing the bioavailability of a drug.


FIG. 17

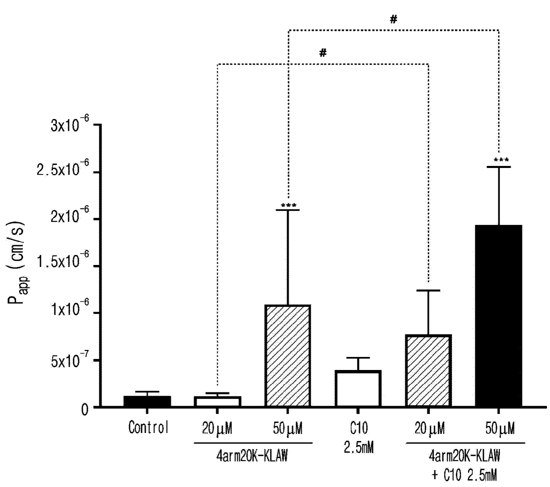


EP 4 674 893 A1

## Description

## BACKGROUND OF THE INVENTION

### 1. Field of the Invention

The present invention relates to an absorption enhancer in the gastrointestinal tract made on the basis of a peptide conjugate for the purpose of oral delivery of peptide and protein drugs.

### 2. Description of the Related Art

Biodrugs include biological pharmaceuticals, which are produced by biological processes such as cell culture using raw materials derived from humans or other living organisms, and peptide drugs, which are amino acid polymers produced synthetically. Biodrugs such as peptides, proteins, and antibodies are therapeutic agents with great therapeutic value in terms of efficacy and safety, and have shown continuous growth in the pharmaceutical field in recent years.

In particular, peptides are considered endogenous signaling molecules and have great therapeutic value. In general, peptides are amino acid polymers with 40 or fewer amino acids or a molecular weight of 5,000 Da or less, and despite their relatively small molecular weight compared to proteins, they have been limited to injectable administration due to their low gastrointestinal tract permeability and enzymatic degradation. With the recent development of peptide drugs for the treatment of metabolic diseases, drug administration using injections in situations where continuous and repeated administration is required is causing discomfort to patients and has a significant impact on patient compliance.

Biodrugs, which are mostly developed and used as injectable drugs, have been developed in a direction that improves the problems of injectable drugs by developing sustained-release or long-acting formulations for patient convenience. However, the development of oral administration formulations using relatively small-molecule peptide drugs has attracted much attention in recent years. Representative oral delivery technologies for peptide and protein drugs include gastrointestinal permeation enhancer, hydrophobic modification by ion pairing, nanoparticles, self-emulsifying drug delivery system, transporter-mediated system, and microneedle device.

Oral drug delivery technology utilizing gastrointestinal permeation enhancers is the most representative strategy that can be applied to peptide and protein drugs. The major gastrointestinal permeation enhancers studied to date can be classified into small molecule chemical permeation enhancers and peptide-based permeation enhancers.

Representative examples of small molecule chemical permeation enhancers include MCFA, Eligen™ technology-based absorption enhancers (SNAC, 5-CNAC, and 4-CNAB), EDTA, bile salts, acyl carnitine, and alkylmaltoside, which have been applied and studied in a variety of biodrugs. Small molecule chemical permeation enhancers have the advantage of having been used for a long time compared to peptide-based permeation enhancers, so safety data has been accumulated. However, they have the disadvantage of requiring very large amounts to be added to the formulation to achieve a permeation enhancing effect, and their targets are often unclear in terms of their mechanism of action (Adv. DrugDeliv. Rev., 2016, 106, 277-319).

Peptide-based permeation enhancers include microbial toxins such as C-CPE, AT1002, and angubindin-1, as well as KLAL peptides, which are synthetic peptides developed using phage display technology. In the prior art, Alexandra Bocsik et al. (2019) revealed that the KLAL peptide simultaneously acts as a cell-permeating peptide (CPP) and a tight junction regulator. WO 2007/014391 discloses that a compound containing the KLAL peptide or a modified peptide thereof modulates mucosal permeability, and US 2007/0154449 discloses a tight junction modulating peptide with excellent cell permeability.

Meanwhile, there are two pathways through which substances pass through the gastrointestinal tract: the paracellular pathway and the transcellular pathway. The paracellular pathway is a pathway through which substances pass through the gaps between cells, and substances with small molecular weights pass through the barrier through this way. Tight junctions can affect the permeation of substances into the gastrointestinal tract by modulating this pathway. When tight junctions are loosened due to intestinal irritation or injury, harmful molecules (pathogens, toxins, antigens, etc.) can be over-permeable to the intestinal epithelium, leading to endotoxemia, mucosal immune system disruption, and inflammatory responses, which may ultimately lead to intestinal or systemic diseases.

Most peptide permeation enhancers are tight junction modulation functional agents that target tight junction proteins. Therefore, if a peptide permeation enhancer acts as a penetration enhancer in the gastrointestinal tract and is then absorbed systemically, various safety issues may arise. In fact, when C-CPE was intravenously injected into a mouse model, it was confirmed that 14.4% of the administered dose accumulated in the kidneys by day 4 post-dose, and hepatotoxicity was confirmed in a toxicity test.

Accordingly, a peptide-based gastrointestinal tract membrane permeation enhancer must prevent the substance itself from being absorbed in large amounts and causing systemic side effects, and must ensure stability against digestive enzymes so as not to be decomposed by digestive enzymes in the gastrointestinal tract.

There are many problems that need to be addressed for peptide permeation enhancers to function as absorption enhancers for oral administration, and the actual development of oral peptide drugs lags behind small molecule compound permeation enhancers, and no case has entered clinical trials yet.

Accordingly, the present inventors have made efforts to solve the above problems and, as a result, have prepared a multi-arm polyethylene glycol-KLA peptide conjugate, a PEGylated distearoyl phosphatidylethanolamine-KLA peptide conjugate, and a polyamidoamine dendrimer-polyethylene glycol-KLA peptide conjugate. The present inventors also completed this invention by confirming that these conjugates can significantly enhance the absorption of orally administered biodrugs in the gastrointestinal tract by exhibiting the property of opening the tight junctions of gastrointestinal tract membrane cells while reducing cytotoxicity due to the cell permeable properties of KLA.

## SUMMARY OF THE INVENTION

It is an object of the present invention to provide a multi-arm polyethylene glycol-KLA peptide conjugate to enhance the absorption of orally administered biodrugs in the gastrointestinal tract by reducing the cytotoxicity of the KLA peptide itself, while activating the tight-junction modulation function, and further increasing the resistance to digestive enzymes in the gastrointestinal tract, thereby maintaining the activity of KLA.

It is another object of the present invention to provide a PEGylated distearoyl phosphatidylethanolamine-KLA peptide conjugate to enhance the absorption of orally administered biodrugs in the gastrointestinal tract by reducing the cytotoxicity of the KLA peptide itself, while activating the tight-junction modulation function, and further increasing the resistance to digestive enzymes in the gastrointestinal tract, thereby maintaining the activity of KLA.

It is also an object of the present invention to provide a novel gastrointestinal tract membrane absorption enhancer having a polyamidoamine dendrimer-polyethylene glycol-KLA peptide conjugate structure for the purpose of oral delivery of biodrugs.

In addition, it is an object of the present invention to provide a composition for enhancing oral absorption of biodrugs in the gastrointestinal tract, comprising said conjugate.

To achieve the above objects, the present invention provides a multi-arm polyethylene glycol-KLA peptide conjugate comprising a plurality of KLA peptides having tight junction modulation function conjugated to a multi-structure made of polyethylene glycol and its chains.

The present invention also provides a PEGylated distearoyl phosphatidylethanolamine-KLA peptide conjugate comprising a plurality of KLA peptides having tight junction modulation function conjugated to a polyethylene glycol structure.

The present invention also provides a polyamidoamine dendrimer-polyethylene glycol-KLA peptide conjugate comprising a plurality of KLA peptides having tight junction modulation function of gastrointestinal tract cells conjugated to a polyamidoamine dendrimer, a branched compound, using a polyethylene glycol linker.

In addition, the present invention provides a composition for enhancing gastrointestinal tract absorption of biodrugs such as peptides, proteins, and antibodies comprising said conjugates.

## ADVANTAGEOUS EFFECT

The present invention relates to a drug absorption enhancer in the gastrointestinal tract for oral delivery of biodrugs. The multi-arm polyethylene glycol-KLA peptide conjugate, PEGylated distearoyl phosphatidylethanolamine-KLA peptide conjugate and polyamidoamine dendrimer-polyethylene glycol-KLA peptide conjugate of the present invention can be effectively used to increase the bioavailability of biodrugs such as peptides, proteins, polysaccharides, and antibodies, by increasing the absorption of drugs when administered orally.

## BRIEF DESCRIPTION OF THE DRAWINGS

Figure 1 is a graph showing the results of trypsin hydrolysis stability test of a C19-KLAW peptide and a 4arm-PEG-MAL-20k-C19KLAW conjugate.

Figure 2a is a graph showing the results of MTT assay of a C19-KLAW peptide.

Figure 2b is a graph showing the results of MTT assay of a 4arm-PEG-MAL-20k-C19KLAW conjugate.

Figure 3a is a graph showing the results of LDH assay of a C19-KLAW peptide.

Figure 3b is a graph showing the results of LDH assay of a 4arm-PEG-MAL-20k-C19KLAW conjugate.

Figure 4 is a graph showing the results of measuring the change in transepithelial/endothelial electrical resistance (TEER) of a C19-KLAW peptide and a 4arm-PEG-MAL-20k-C19KLAW conjugate at different concentrations in a Caco-2 monolayer membrane.

Figure 5 is a graph showing the results of measuring the change in transepithelial/endothelial electrical resistance (TEER) of a C19-KLAW peptide and a 4arm-PEG-MAL-20k-C19KLAW conjugate at different concentrations in a Caco-2 monolayer membrane.

Figure 6 is a graph showing the results of testing the permeability of FITC-dextran (molecular weight 4,000 Da to 40,000 Da) using a 4arm-PEG-MAL-10k-KLAW complex and a 4arm-PEG-MAL-20k-KLAW conjugate in a Caco-2 monolayer membrane.

Figure 7 is a graph showing the results of testing the permeability of FITC-dextran (molecular weight 70,000 Da to 150,000 Da) using a 4arm-PEG-MAL-20k-KLAW conjugate in a Caco-2 monolayer membrane.

Figure 8 is a graph showing the results of a permeability test for Leuprolide after treatment with conjugates using 4arm-PEG-MAL-20K, 4arm-PEG-MAL-10K, and 2arm-PEG-MAL-5K by concentration in a Caco-2 monolayer membrane.

Figure 9 is a graph showing the results of a permeability test for Teriparatide after treatment with a 4arm-PEG-MAL-20k-KLAW conjugate at concentrations of 20 to 200 μM in a Caco-2 monolayer membrane.

Figure 10 is a graph showing the results of a permeability test for Exenatide after treatment with 4arm-PEG-MAL-20K-KLAW and 4arm-PEG-MAL-10K-KLAW conjugates at various concentrations in a Caco-2 monolayer membrane.

Figure 11 is a graph showing the results of a permeability test for Semaglutide after treatment with a 4arm-PEG-MAL-20K-KLAW conjugate at a concentration of 100 μM in a Caco-2 monolayer membrane.

Figure 12 is a graph showing the results of a permeability test for insulin after treatment with a 4arm-PEG-MAL-20k-KLAW conjugate at concentrations of 100 to 300 μM in a Caco-2 monolayer membrane.

Figure 13 is a graph showing the results of a permeability test for growth hormone after treatment with a 4arm-PEG-MAL-20k-KLAW conjugate at concentrations of 100 to 300 μM in a Caco-2 monolayer membrane.

Figure 14 is a graph showing the results of a permeability test for NLY01 after treatment with a 4arm-PEG-MAL-20k-KLAW conjugate at concentrations of 200 and 400 μM in a Caco-2 monolayer membrane.

Figure 15 is a graph showing the results of a permeability test for immunoglobulin G after treatment with a 4arm-PEG-MAL-20k-KLAW conjugate at concentrations of 200 and 400 μM in a Caco-2 monolayer membrane.

Figure 16 is a graph showing the results of testing the absorption enhancement effect on Leuprolide after treatment with a composition prepared by combining a mPEG-MAL-5k-KLAW peptide conjugate and C10 (sodium caprate).

Figure 17 is a graph showing the results of testing the absorption enhancement effect on Leuprolide after treatment with a composition prepared by combining a 4arm-PEG-MAL-20k-KLAW peptide conjugate and C10.

Figure 18 is a graph showing the results of a stability test for trypsin-induced degradation of a KLAW peptide and a DSPE-PEG4k-KLAW conjugate.

Figures 19a and 19b are graphs showing the cytotoxicity results of a KLAW peptide and a DSPE-PEG4k-KLAW conjugate by MTT assay.

Figures 20a and 20b are graphs showing the cytotoxicity results of a KLAW peptide and a DSPE-PEG4k-KLAW conjugate by LDH assay.

Figure 21a is a graph showing the results of measuring the change in transepithelial/endothelial electrical resistance (TEER) depending on the concentrations of a KLAW peptide and a DSPE-PEG4k-KLAW conjugate in a Caco-2 monolayer membrane.

Figure 21b is a graph showing the results of measuring the change in transepithelial/endothelial electrical resistance (TEER) depending on the concentrations of PEG-MAL-5K-KLAW and DSPE-PEG4k-KLAW conjugates in a Caco-2 monolayer membrane.

Figure 22 is a graph showing the results of a permeability test for Leuprolide after treatment with conjugates using PEG-MAL-5K-KLAW and DSPE-PEG4k-KLAW by concentration in a Caco-2 monolayer membrane.

Figure 23 is a graph showing the results of a permeability test for Semaglutide after treatment with a DSPE-PEG4k-KLAW conjugate at various concentrations in a Caco-2 monolayer membrane.

Figure 24 is a graph showing the results of a permeability test for immunoglobulin G (IgG) after treatment with a DSPE-PEG4k-KLAW conjugate at various concentrations in a Caco-2 monolayer membrane.

Figure 25 is a graph showing the results of a stability test for trypsin-induced degradation of a KLAW peptide and a G4-PEG-C19KLAW$_{max}$ conjugate.

Figure 26a is a graph showing the results of MTT assay when a KLAW peptide and a G4-PEG-C19KLAW$_{max}$ conjugate were treated on a Caco-2 monolayer membrane.

Figure 26b is a graph showing the results of LDH assay when a KLAW peptide and a G4-PEG-C19KLAW$_{max}$ conjugate were treated on a Caco-2 monolayer membrane.

Figure 26c is a graph showing the results of MTT assay to determine the extent of cell recovery after a certain period of time when a KLAW peptide and a G4-PEG-C19KLAWmax conjugate were treated on a Caco-2 monolayer membrane.

Figure 27 is a graph showing the results of measuring the change in transepithelial/endothelial electrical resistance (TEER) depending on the concentrations of a KLAW peptide and a G4-PEG-c19KLAW$_{max}$ in a Caco-2 monolayer membrane.

Figure 28 is a graph showing the results of testing the permeability of FITC-dextran (molecular weight 4 kDa) after treatment with various polyamidoamine dendrimer-PEG-c19KLAW conjugates using polyamidoamine dendrimer G3 and G4 in a Caco-2 monolayer membrane.

Figure 29 is a graph showing the results of testing the permeability of FITC-dextran (molecular weight 4 kDa) after treatment with G4, a G4-PEG linker, and a G4-PEG-c19KLAW$_{max}$ conjugate at various concentrations in a Caco-2 monolayer membrane.

Figure 30 is a graph showing the results of testing the permeability of FITC-dextran with different molecular weights (10 kDa, 70 kDa, and 150 kDa) after treatment with a G4-PEG-c19KLAW$_{max}$ conjugate at concentrations of 10 μM and 50 μM, respectively, in a Caco-2 monolayer membrane.

Figure 31 is a graph showing the results of testing the permeability of Leuprolide after treatment with a G4-PEG-c19KLAW$_{max}$ conjugate at different concentrations in a Caco-2 monolayer membrane.

Figure 32 is a graph showing the results of testing the permeability of Semaglutide after treatment with a G4-PEG-c19KLAW$_{max}$ conjugate at different concentrations in a Caco-2 monolayer membrane.

Figure 33 is a graph showing the results of testing the permeability of Teriparatide after treatment with a G4-PEG-c19KLAW$_{max}$ conjugate at different concentrations in a Caco-2 monolayer membrane.

Figure 34 is a graph showing the results of testing the permeability of human immunoglobulin G after treatment with a G4-PEG-c19KLAW$_{max}$ conjugate at different concentrations in a Caco-2 monolayer membrane.

## DESCRIPTION OF THE PREFERRED EMBODIMENTS

Hereinafter, the present invention is described in detail.

The present invention provides a multi-arm polyethylene glycol- KLA peptide conjugate comprising a plurality of KLA peptides, which are the tight junction modulation peptides, conjugated to a multi-structure made of polyethylene glycol and its chains, a PEGylated distearoyl phosphatidylethanolamine-KLA peptide conjugate in which a tight junction modulation function peptide, KLA peptide, is conjugated to a self-assembly micelle structure made of polyethylene glycol (PEG) and a phospholipid chain, and a polyamidoamine dendrimer-polyethylene glycol-KLA peptide conjugate in which a tight junction modulation function peptide, KLA peptide, is multiplexed to a polyamidoamine dendrimer (PAMAM dendrimer) through a polyethylene glycol linker.

As used herein, the term "tight junction modulation function" refers to a function that induces a temporary opening of a tight junction and is intentionally used to distinguish it from "tight junction opening," which is a permanent or irreversible opening of a tight junction.

Said KLA peptide is a KLAL peptide or a modified peptide thereof.

The KLA peptide according to the present invention is a polypeptide having a length of 12 to 32 amino acids and consisting of three kinds of amino acids: Lys, Leu, and Ala.

The modified KLAL peptide according to the present invention is a polypeptide having a length of 13 to 40 amino acids, which is composed of three amino acids, Lys, Leu, and Ala, and one to two additional amino acids selected from Trp and Cys.

A representative example of the KLA peptide according to the present invention is a KLAL peptide having an amino acid sequence represented by KLALKLALKALKAALKLA of formula 5, which has a molecular weight of 1876.5 Da, a theoretical isoelectric point (pI) of 10.6, is rich in lysine, and is cell-penetrating.

The KLA peptide according to the present invention may be a modified KLAL peptide in which the 4th and/or 15th leucine (Leu) of the KLAL peptide represented by the following formula 5 is substituted with tryptophan (Trp).

The KLA peptide according to the present invention may be a modified KLAL peptide additionally including cysteine (Cys) at the C-terminus or N-terminus of the KLAL peptide represented by the following formula 5. Cysteine is added to form disulfide bonds, thioether bonds, and succinimidyl thioether bonds with polyethylene glycol.

The multi-arm polyethylene glycol-KLA peptide conjugate and PEGylated distearoyl phosphatidylethanolamine-KLA peptide conjugate of the present invention are distinguished from the structure of [Formula 1] in which a single KLA peptide is usually bound to polyethylene glycol.

[Formula 1]

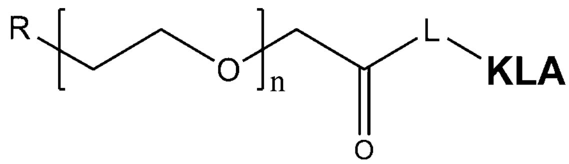

Herein, R is a terminal structural modification group of PEG, which may be hydrogen, a hydroxyl group, or a

substituted or unsubstituted alkoxy group. In the substituted alkoxy group, the hydrogen in the alkyl group can be substituted by a substituent selected from the group consisting of halo, trifluoromethyl, difluoromethyl, amino, alkylamino, cyano, sulfonyl, sulfonamide, sulfoxide, hydroxy, alkoxy, ester, carboxylic acid, alkylthio aryl, C3 to C8 cycloalkyl, C4 to C7 heterocycloalkyl, heteroarylalkyl and heteroaryl.

L is a linker connecting PEG and a KLA peptide, represented by the following formula, * indicates a binding point of PEG and the linker L, # indicates a binding point of the linker L and the KLA peptide, and n is 2 to 2000, preferably 10 to 500.

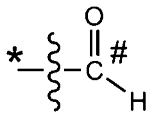
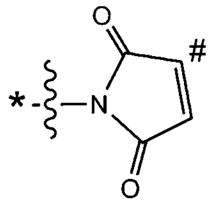
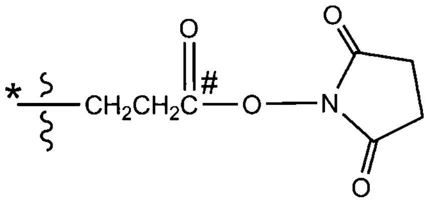
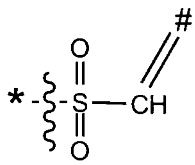
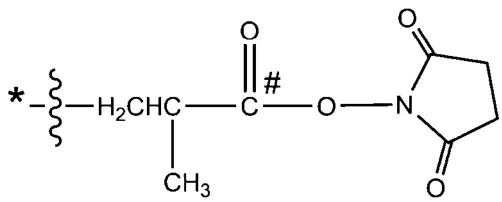
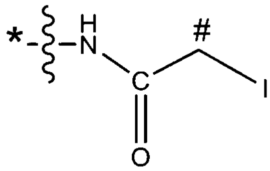
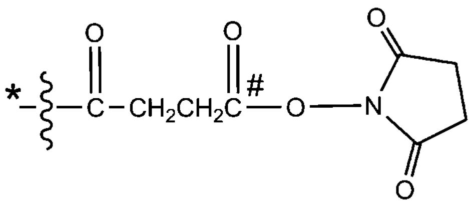
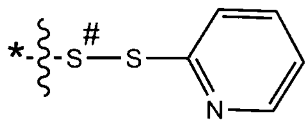

R plays a role in inactivating chemical reactivity by substituting the -OH group, which is the terminal group of PEG.

In a preferred embodiment, the structure of the multi-arm polyethylene glycol-KLA peptide conjugate is as shown in [Formula 2] to [Formula 4] below.

[Formula 2]

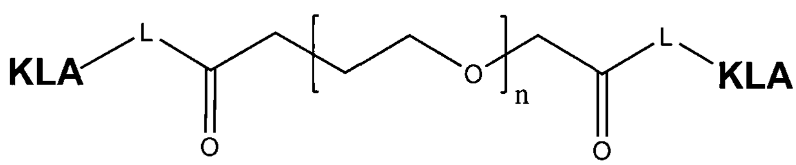

Herein, L is a linker and n is 2 to 2000, preferably 10 to 500.

[Formula 3]

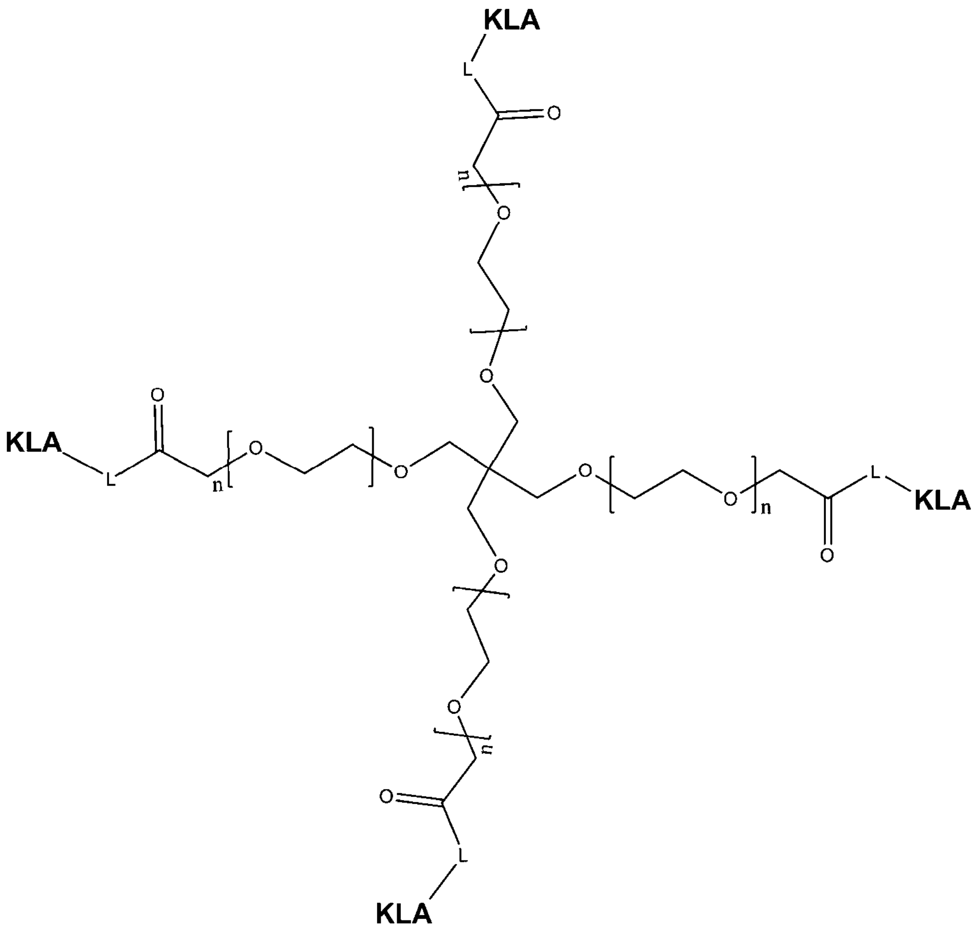

[Formula 4]

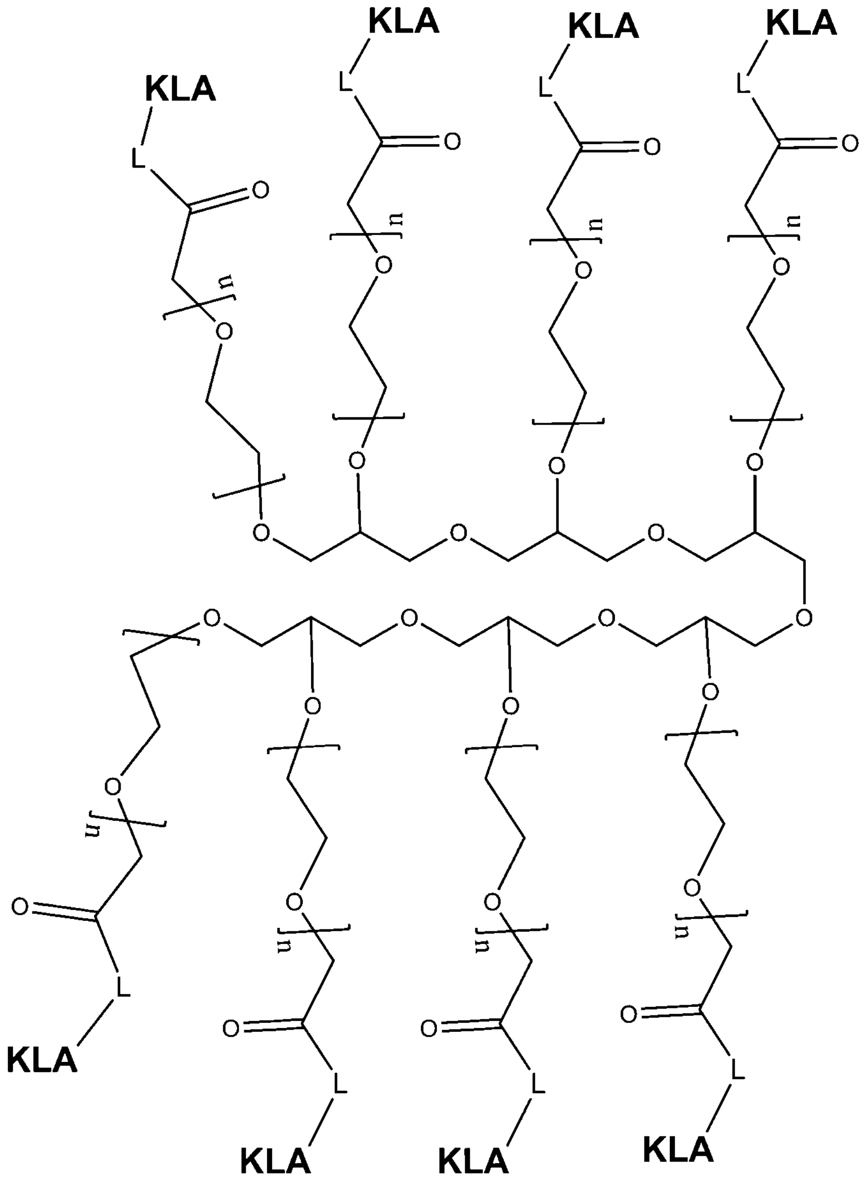

In a preferred embodiment, the structure of the PEGylated distearoyl phosphatidylethanolamine-KLA peptide conjugate is as shown in [Formula 5] below.

[Formula 5]

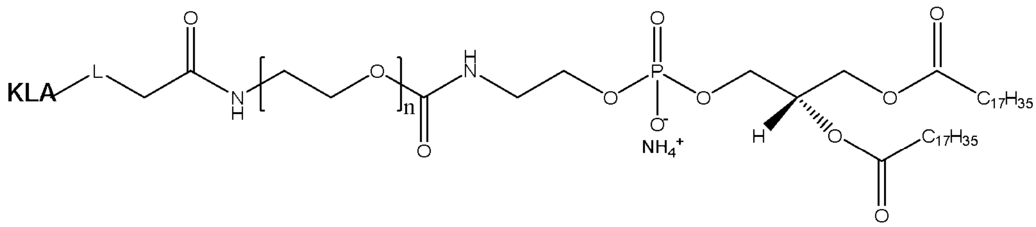

Herein, L is a linker and n is 2 to 1000.

In the conjugate formed by binding the KLA peptide to multi-arm polyethylene glycol and the conjugate formed by binding the KLA peptide to polyethylene glycol, the bonds between the linker L and the KLA peptide include amide bonds, disulfide bonds, thioether bonds, and succinimidyl thioether bonds.

In the present invention, the polyamidoamine dendrimer-polyethylene glycol-KLA peptide conjugate may exhibit reduced cytotoxicity and increased stability in the gastrointestinal tract compared to the KLA peptide to which the

polyethylene glycol linker and the polyamidoamine dendrimer are not bound.

As a specific example, the conjugate is characterized by being a polyamidoamine dendrimer-polyethylene glycol linker-KLA peptide conjugate represented by the following [Formula 6]:

[Formula 6] D - (L)a - (K)b

Wherein, D is a polyamidoamine (PAMAM) dendrimer of generation 0 (G0) to generation 7 (G7) with an amine group as the terminal;
L is a linker, which is a polyethylene glycol (PEG) linker structure containing 5 to 100 ethylene glycol structures;
a is the number of Ls conjugated to one D;
K is a KLA peptide or a variant thereof that has a tight junction modulation function;
The conjugate is a compound in which multiple Ks are covalently linked to one D via the linker L;
b is the number of Ks conjugated to one D.

The polyamidoamine dendrimer utilized as the central support of the polyamidoamine dendrimer-polyethylene glycol-KLA peptide conjugate in the present invention is a spherical nanoparticle having "ethylene diamine' as a core, and its diameter increases by about 1.2 nm per generation from 1 nm to 13 nm up to the 10th generation. The outermost surface terminal group is a strongly hydrophilic spherical nanostructure that can selectively introduce primary amine, carboxylic acid, and hydroxyl groups. The terminal amine group ($-NH_2$) of polyamidoamine dendrimer is known as a functional group that can perform various modifications to polyethylene glycol, lipids, drugs, etc.

In the present invention, it is preferable that the polyamidoamine dendrimer is of the 7th generation or lower. In one embodiment, a third-generation PAMAM dendrimer having 32 surface amine groups and a molecular weight of 6,909 Da (hereinafter referred to as PAMAM dendrimer G3) and a fourth-generation PAMAM dendrimer having 64 surface amine groups and a molecular weight of 14,215 Da (hereinafter referred to as PAMAM dendrimer G4) were used.

In the present invention, L, a polyethylene glycol (PEG) linker, can be used in the production of the conjugate using a structure represented by the following [Formula 7].

[Formula 7] $R^1$-$Y^1$-$(CH_2CH_2O)_n$-$Y^2$-$R^2$

In the above formula, n is an integer of 10 to 100;
$Y^1$ and $Y^2$ denote $-Z^1-(CH_2)_{m1}-Z^2-$, $-Z^1-(CH_2)_{m1}-Z^2-(CH_2)_{m2}-$, amide bonds or single bonds, and m1 and m2 independently denote integers of 1 to 5, respectively;
$Z^1$ and $Z^2$ independently represent an ether bond, a urethane bond, an amide bond, a secondary amino group, a carbonyl group, or a single bond;
$R^1$ and $R^2$ independently comprise a functional group selected from the group consisting of the following formulas (a) to (h).

(a) 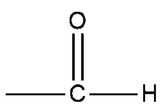

(b) 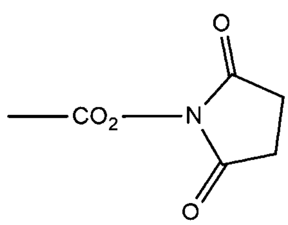

(e) 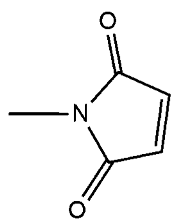

(f) 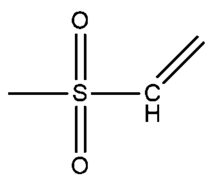

(c) 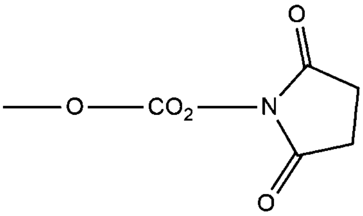

(g) 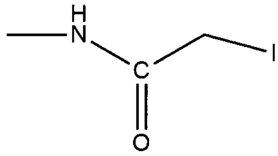

(d) 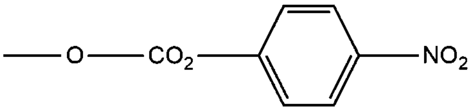

(h) 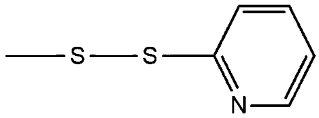

In the polyamidoamine dendrimer-polyethylene glycol-KLA peptide conjugate of the present invention, when both ends of the linker L are bonded to polyamidoamine dendrimer D and K peptides, respectively, to form a conjugate structure of [Formula 1] above, the conjugate structure contains at least one of carbonyl, amide, urethane, secondary amine, thioether, succinimidyl thioether bond, disulfide, or hydrazone.

In the present invention, a in the conjugate structure of the above [Formula 6] represents the number of polyethylene glycol linker L molecules bonded to one D, and a is an integer of 1 to 448,

when D is polyamidoamine dendrimer G0, a is 1 to 4,
when D is polyamidoamine dendrimer G1, a is 2 to 8,
when D is polyamidoamine dendrimer G2, a is 3 to 16,
when D is polyamidoamine dendrimer G3, a is 4 to 28,
when D is polyamidoamine dendrimer G4, a is 5 to 56,
when D is polyamidoamine dendrimer G5, a is 6 to 112,
when D is polyamidoamine dendrimer G6, a is 7 to 224, and
when D is polyamidoamine dendrimer G7, a is 8 to 448.

In addition, in the present invention, b in the conjugate structure of [Formula 6] above represents the number of K peptides bound to one D of the polyamidoamine dendrimer via the linker L, and is characterized by being 1 or more and a or less, specifically 1 to 448.

The KLA peptide of the present invention may be any one selected from the group consisting of the following [Formulae 8] to [Formulae 16].

[Formula 8] KLAL
Lys-Leu-Ala-Leu-Lys-Leu-Ala-Leu-Lys-Ala-Leu-Lys-Ala-Ala-Leu-Lys-Leu-Ala-$NH_2$

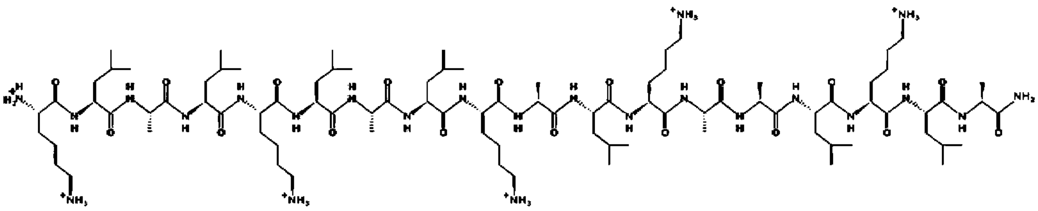

[Formula 9] C1KLAL
Cys-Lys-Leu-Ala-Leu-Lys-Leu-Ala-Leu-Lys-Ala-Leu-Lys-Ala-Ala-Leu-Lys-Leu-Ala-$NH_2$

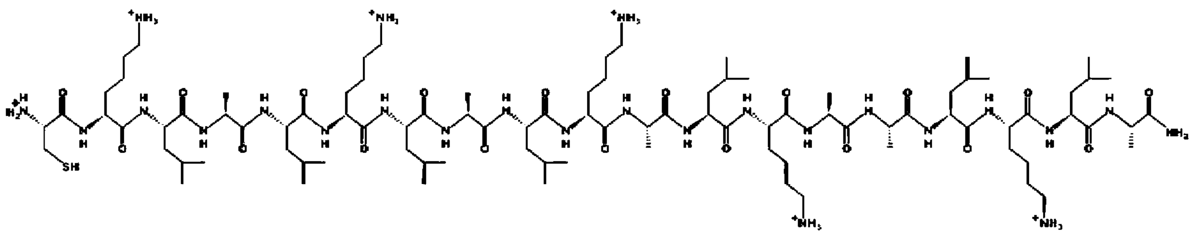

[Formula 10] C19KLAL

Lys-Leu-Ala-Leu-Lys-Leu-Ala-Leu-Lys-Ala-Leu-Lys-Ala-Ala-Leu-Lys-Leu-Ala-Cys-$NH_2$

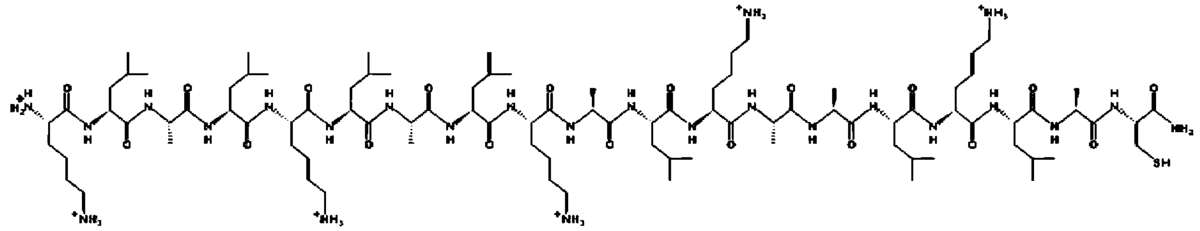

[Formula 11] KLAW
Lys-Leu-Ala-Trp-Lys-Leu-Ala-Leu-Lys-Ala-Leu-Lys-Ala-Ala-Leu-Lys-Leu-Ala-$NH_2$

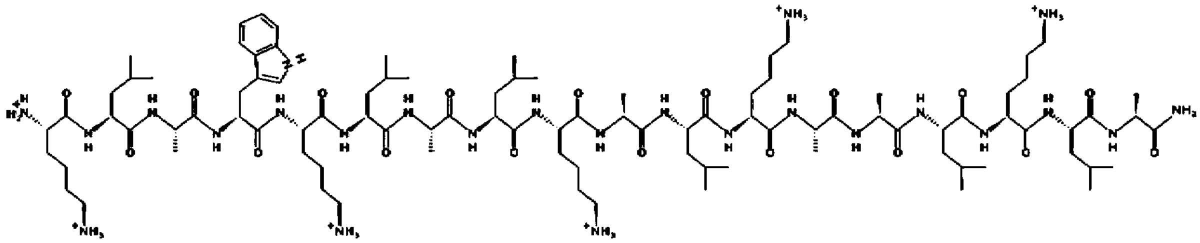

[Formula 12] C1KLAW
Cys-Lys-Leu-Ala-Trp-Lys-Leu-Ala-Leu-Lys-Ala-Leu-Lys-Ala-Ala-Leu-Lys-Leu-Ala-$NH_2$

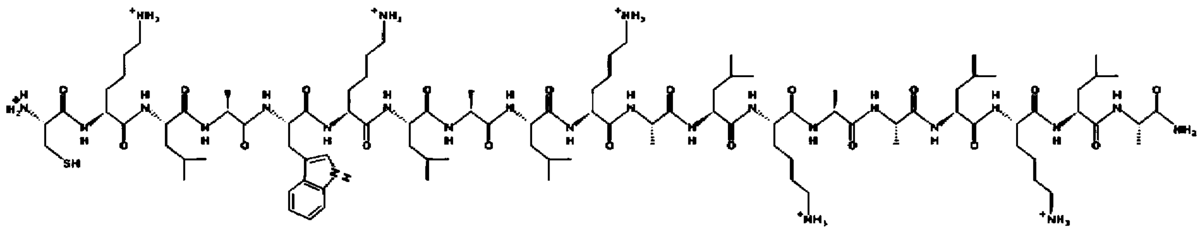

[Formula 13] C19KLAW
Lys-Leu-Ala-Trp-Lys-Leu-Ala-Leu-Lys-Ala-Leu-Lys-Ala-Ala-Leu-Lys-Leu-Ala-Cys-$NH_2$

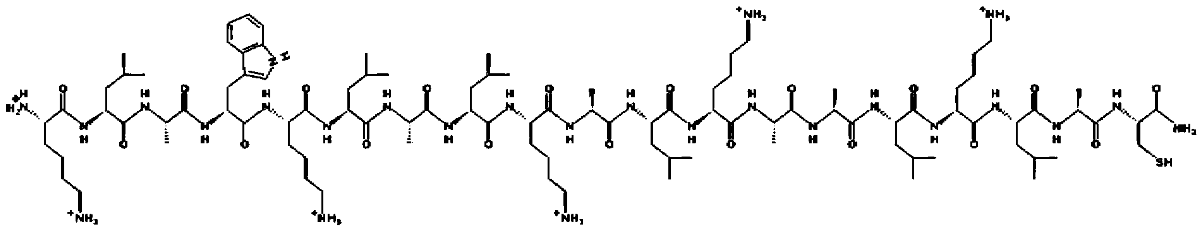

[Formula 14] KLAW2
Lys-Leu-Ala-Trp-Lys-Leu-Ala-Leu-Lys-Ala-Leu-Lys-Ala-Ala-Trp-Lys-Leu-Ala-$NH_2$

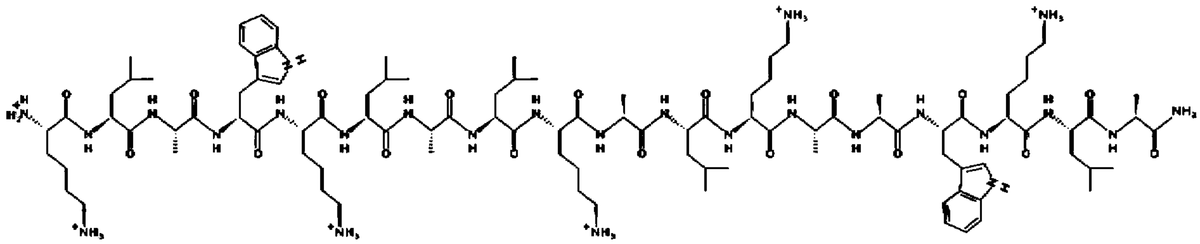

[Formula 15] C1KLAW2

Cys-Lys-Leu-Ala-Trp-Lys-Leu-Ala-Leu-Lys-Ala-Leu-Lys-Ala-Ala-Trp-Lys-Leu-Ala-$NH_2$

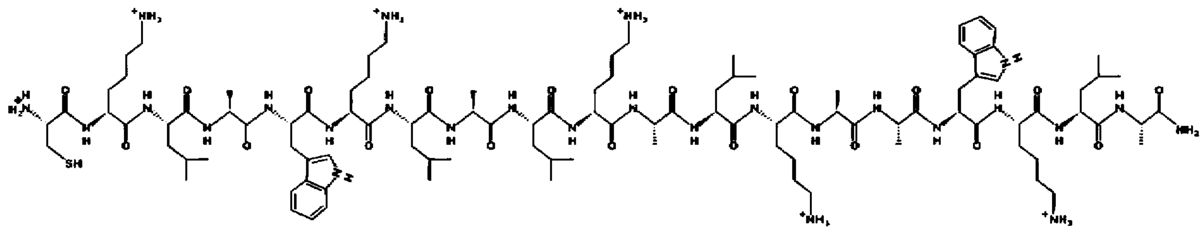

[Formula 16] C19KLAW2

Lys-Leu-Ala-Trp-Lys-Leu-Ala-Leu-Lys-Ala-Leu-Lys-Ala-Ala-Trp-Lys-Leu-Ala-Cys-$NH_2$

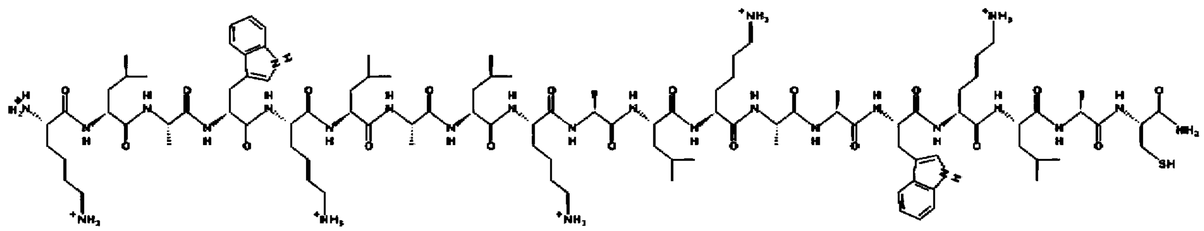

In one embodiment, a multi-arm polyethylene glycol-KLA peptide conjugate can be prepared by reacting a KLA peptide (C1KLAL, C1KLAW, or C1KLAW2) with a multi-arm PEG-maleimide as shown in the reaction formula below.

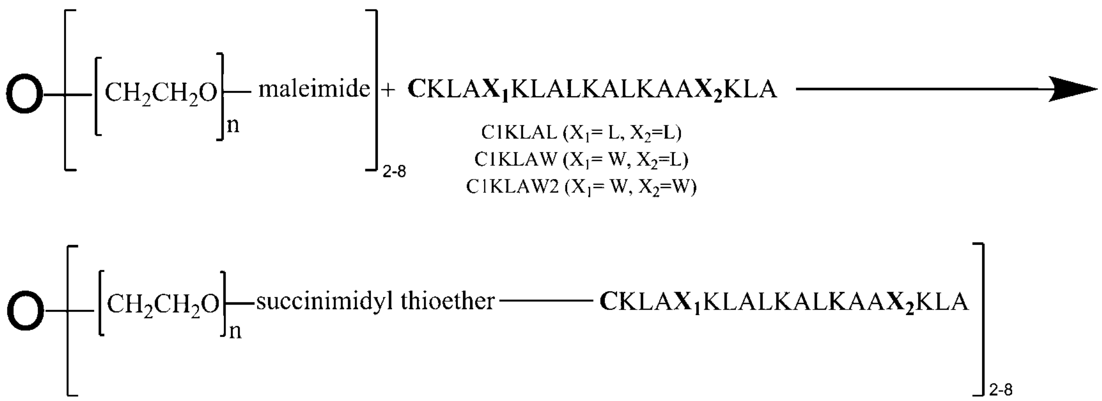


Herein, the bold O on the far left represents the core, and 2-8 represents integers of 2 to 8.

In one embodiment, a multi-arm polyethylene glycol-KLA peptide conjugate can be prepared by reacting a KLA peptide (C19KLAL, C19KLAW, or C19KLAW2) with a multi-arm PEG-maleimide as shown in the reaction formula below.

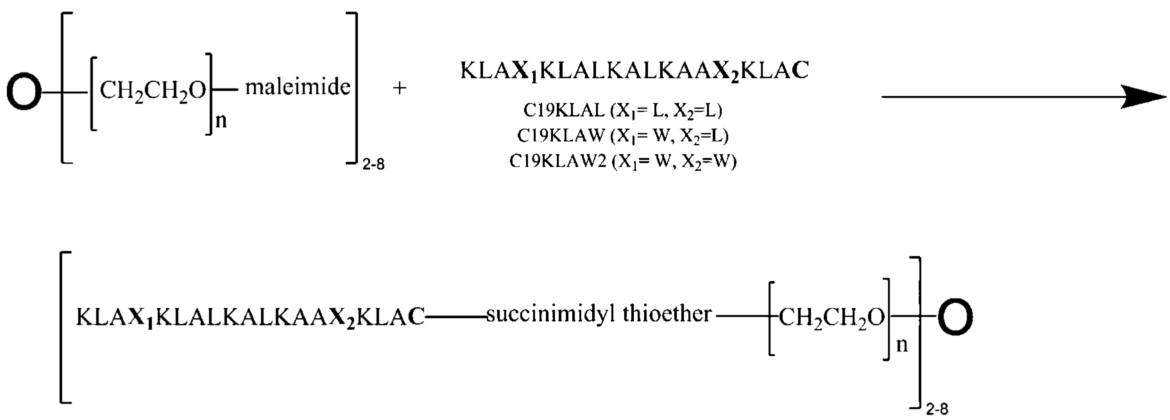


In one embodiment, a multi-arm polyethylene glycol-KLA peptide conjugate can be prepared by reacting a KLA

peptide (KLAL, KLAW, or KLAW2) with a multi-arm PEG-N-hydroxysuccinimide (NHS) as shown in the reaction formula below.

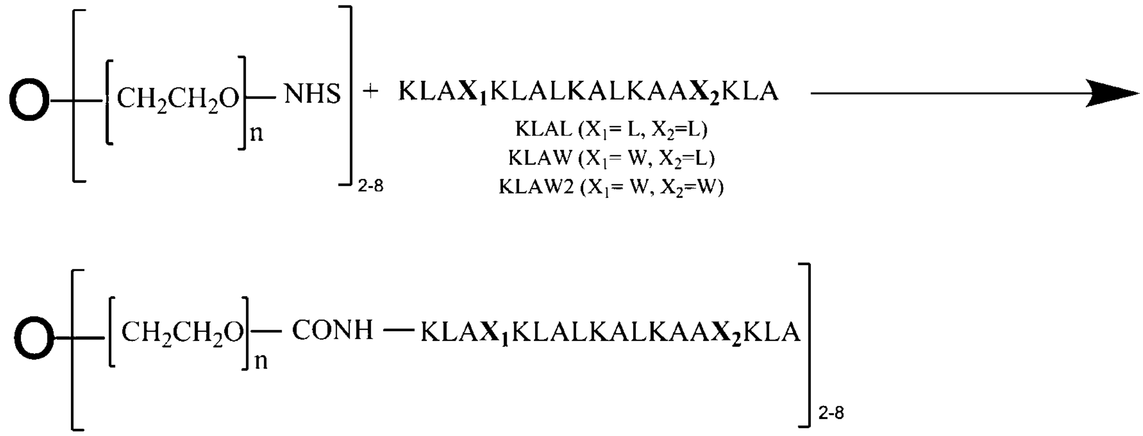


In one embodiment, a DSPE-PEG4k-KLAW peptide conjugate can be prepared by reacting a KLA peptide (C1KLAL, C1KLAW, or C1KLAW2) with DSPE-PEG-MAL-4k as shown in the reaction formula below.

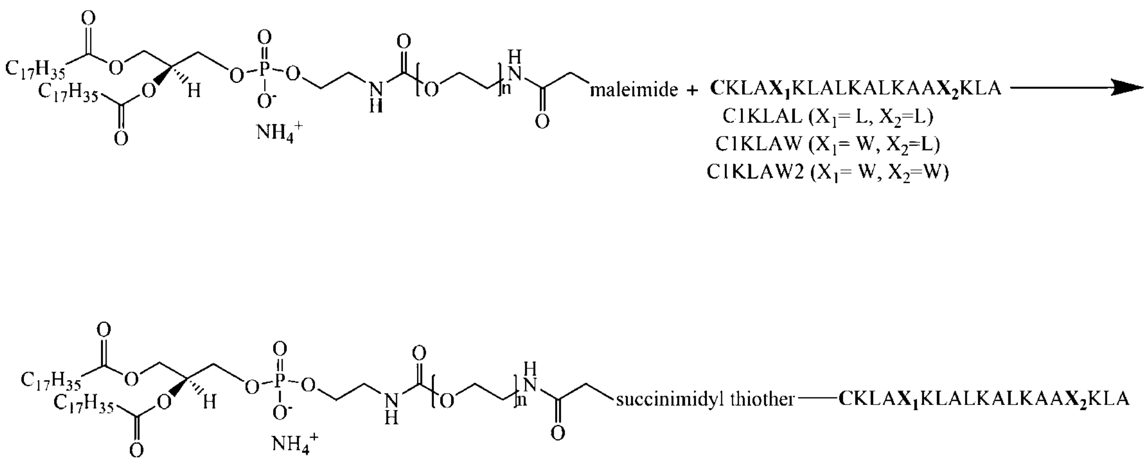


In one embodiment, a DSPE-PEG4k-KLAW peptide conjugate can be prepared by reacting a KLA peptide (C19KLAL, C19KLAW, or C19KLAW2) with DSPE-PEG-MAL-4k as shown in the reaction formula below.

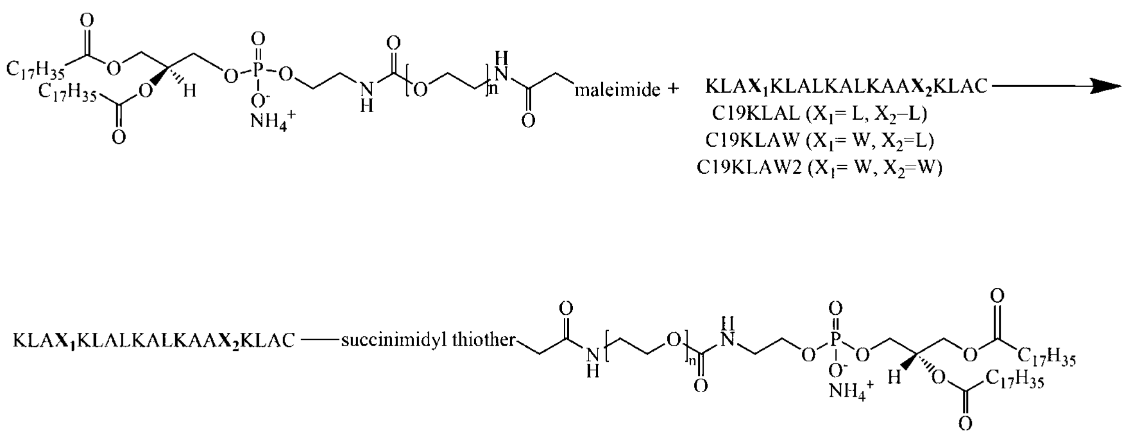


In one embodiment, a DSPE-PEG4k-KLAW peptide conjugate can be prepared by reacting a KLA peptide (KLAL, KLAW, or KLAW2) with DSPE-PEG-NHS as shown in the reaction formula below.

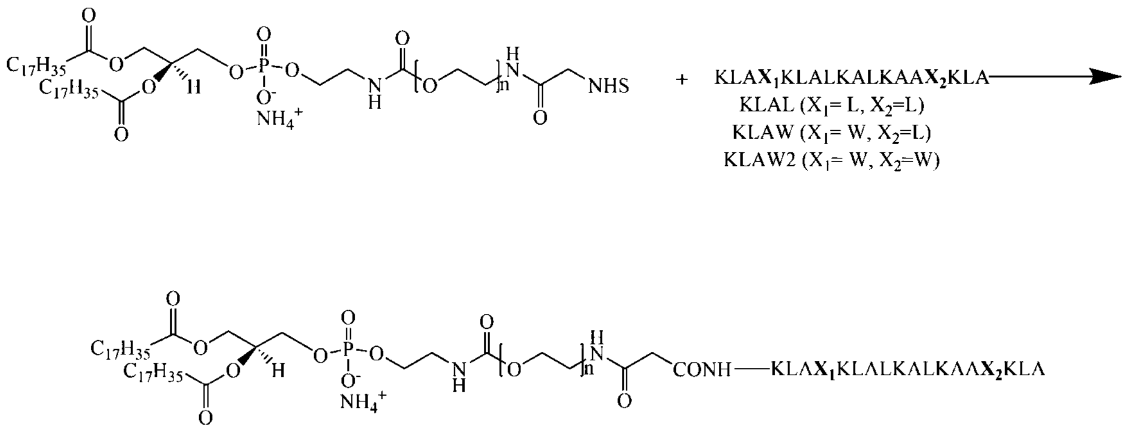


In one embodiment, a G4-PEG-c19KLAW conjugate can be prepared by reacting a PAMAM dendrimer G4, a polyethylene glycol linker (SCM-PEG-MAL), and a KLA peptide (C1KLAL, C1KLAW, or C1KLAW2) as shown in the reaction formula below.

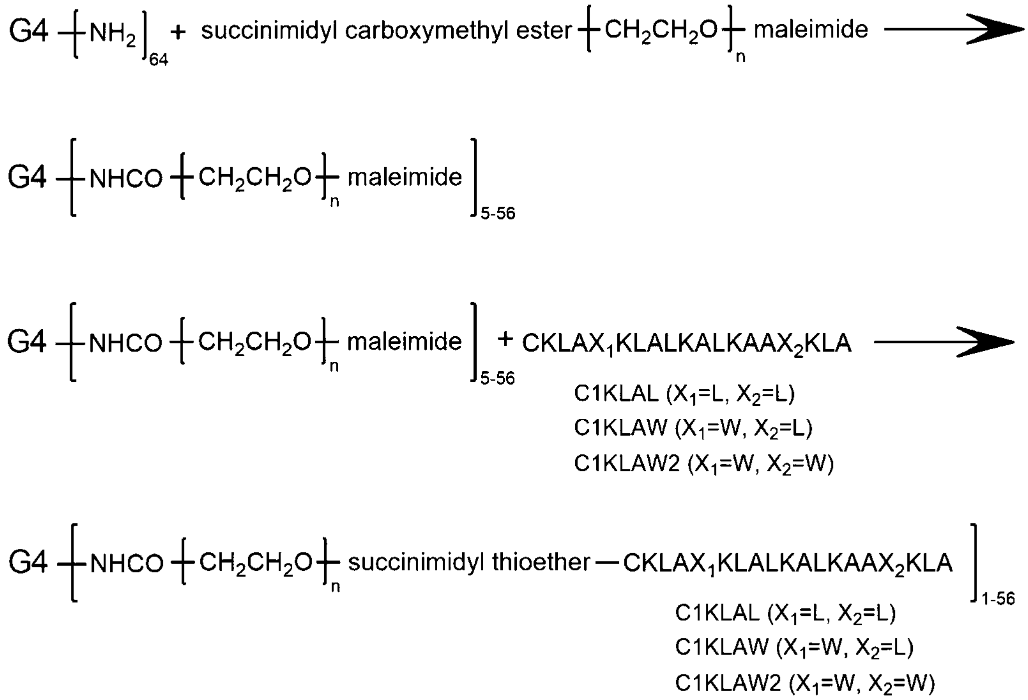


In one embodiment, a G4-PEG-c19KLAW conjugate can be prepared by reacting a PAMAM dendrimer G4, a polyethylene glycol linker (SCM-PEG-MAL), and a KLA peptide (C19KLAL, C19KLAW, or C19KLAW2) as shown in the reaction formula below.

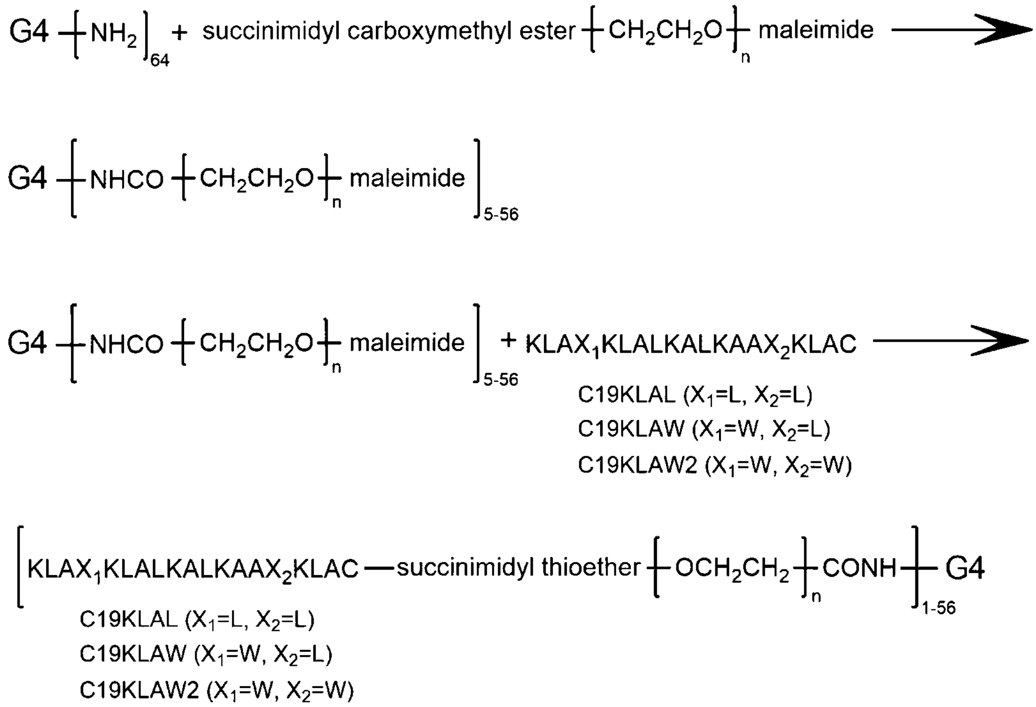


In one embodiment, a G4-PEG-c19KLAW conjugate can be prepared by reacting a PAMAM dendrimer G4, a polyethylene glycol linker (SCM-PEG-SCM), and a KLA peptide (KLAL, KLAW, or KLAW2) as shown in the reaction formula below.

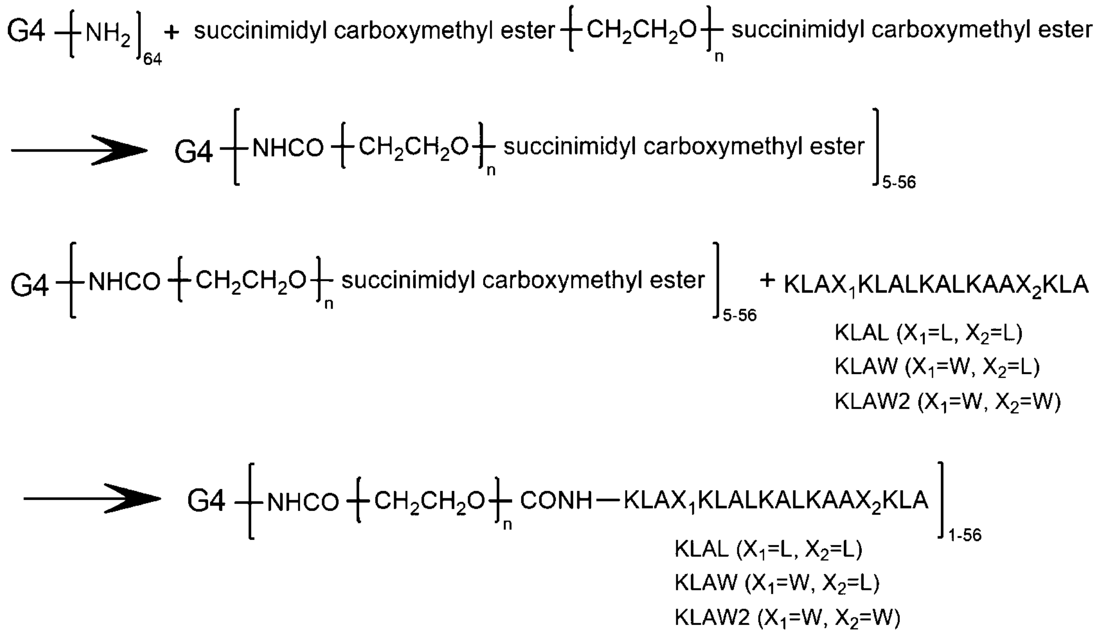


The conjugates of the present invention can enhance the absorption of a biodrug for oral administration in the gastrointestinal tract.

The biodrug may be a peptide, a protein, a polysaccharide, or an antibody.

The peptide may comprise a natural or synthetic protein, a protein fragment, or a peptide analog of a protein sequence. In addition, the term "peptide" of the present invention may be used interchangeably with the term "polypeptide", which may refer to a compound comprising multiple amino acids linked by peptide bonds.

The protein may comprise a peptide sequence of a protein active in the body, such as an antibody or a fragment thereof, a cytokine, a hormone or an analog thereof, or an antigen, an analog or a precursor thereof.

The polysaccharide may include hyaluronic acid, alginic acid, dextran, pectin, chondroitin sulfate, heparin,

hydroxypropyl cellulose, hydroxyethyl cellulose, methyl cellulose, sodium carboxymethyl cellulose, hydroxypropyl methyl cellulose acetate succinate, and derivatives thereof, but not always limited thereto.

The antibody represents a polypeptide or polypeptide complex that specifically recognizes an antigen and binds to it. The antibody may be a whole antibody and any antigen-binding fragment or a single chain thereof. The term "antibody" used in the present invention includes any protein or peptide containing a molecule comprising at least a portion of an immunoglobulin molecule having the biological activity of binding to an antigen. An antibody may comprise a complementarity determining region (CDR) of a heavy or light chain or a ligand binding region thereof, a heavy or light chain variable region, a heavy or light chain constant region, a framework (FR) region, or any portion thereof, or at least a portion of a binding protein.

In addition, the present invention provides a composition for enhancing the absorption of an oral drug in the gastrointestinal tract, which comprises the multi-arm polyethylene glycol- KLA peptide conjugate comprising a plurality of KLA peptides conjugated to a multi-structure made of polyethylene glycol and its chains, the PEGylated distearoyl phosphatidylethanolamine-KLA peptide conjugate, or the polyamidoamine dendrimer-polyethylene glycol-KLA peptide conjugate in which polyethylene glycol and a plurality of KLA peptides are conjugated to a polyamidoamine dendrimer, a branched compound, of the present invention as an absorption enhancer.

The composition for enhancing the absorption of an oral drug in the gastrointestinal tract may additionally contain a low molecular weight absorption enhancer having the properties of a surfactant.

The low molecular weight absorption enhancer having the properties of a surfactant includes C10 (sodium caprate), but not always limited thereto.

Hereinafter, the present invention will be described in detail by the following examples and experimental examples.

However, the following examples and experimental examples are only for illustrating the present invention, and the contents of the present invention are not limited thereto.

## ***Multi-arm polyethylene glycol-KLA peptide conjugate***

### <Example 1> Preparation of multi-arm polyethylene glycol-KLAW peptide conjugate

The present inventors prepared a multi-arm polyethylene glycol-KLAW peptide conjugate to develop a KLAW peptide having a tight junction modulation function and cell permeation function as an absorption enhancer for oral administration of biomacromolecules.

[Table 1]

| PEG | Molecular weight (Da) | Manufacturer |
|---|---|---|
| mPEG-MAL-5k | 5391 | NOF CORPORATION (Japan) |
| 4arm-PEG-MAL-10k | 11673 | NOF CORPORATION (Japan) |
| 4arm-PEG-MAL-20k | 20690 | NOF CORPORATION (Japan) |
| 2arm-PEG-MAL-5k | 4500 | Laysan Bio, Inc (Arab) |

Specifically, the C19-KLAW peptide with cysteine (C) introduced at position 19, the C-terminal part of the KLAW peptide, 2arm-PEG-MAL-5k with two maleimide reactive groups and an average molecular weight of 4500, and 4arm-PEG-MAL-10k (4arm-10K-KLAW and 4arm-PEG-10K-KLAW both refer to 4arm-PEG-MAL-10k) and 4arm-PEG-MAL-20k (4arm-20K-KLAW and 4arm-PEG-20K-KLAW both refer to 4arm-PEG-MAL-20k) with four maleimide reactive groups and molecular weights of 11673 and 20690, respectively, were used. The C19-KLAW peptide was dissolved in dimethyl sulfoxide at a concentration of 20 mg/mL, and then dissolved in 10 mM acetic acid buffer at pH 5.0 to give a reaction molar ratio of 2:1 for 2-arm-PEG-MAL (KLAW peptide : 2arm-PEG-MAL-5k) and 4:1 for the two types of 4-arm-PEG-MAL (KLAW peptide : 4arm-PEG-MAL), and then reacted at 25°C. A small amount of the product was taken and analyzed by HPLC, and the remaining product was purified twice with deionized water using centrifugal ultrafiltration (molecular weight cut-off 10,000), and finally purified with 'Hank's Balanced Sodium Solution containing 25 mM HEPES, pH 7.4 (HBSS)'. The purified product was analyzed by HPLC. All HPLC analyses were performed using 'Thermo Ultimate 3000 HPLC system' and 'Gemini C18 column (4.6 x 150 mm, 5 micron particle size, Phenomenex)'. The mobile phase was '0.1% trifluoracetic acid in water and acetonitrile', and the flow rate was '1 mL/min'. The eluted material was detected by measuring absorbance at UV 280 nm and fluorescence at Ex 280 nm and Em 340 nm (data not shown) .

**<Example 2> Measurement of molecular weight and size of multi-arm polyethylene glycol-KLAW peptide conjugate**

**<2-1> Measurement of molecular weight of multi-arm polyethylene glycol-KLAW peptide conjugate**

The molecular weights of the multi-arm polyethylene glycol before the reaction and the multi-arm polyethylene glycol-KLAW peptide conjugate prepared in Example 1 were measured.

Specifically, the molecular weight was measured using size exclusion chromatography and multi-angle light scattering techniques. At this time, the size exclusion chromatography analysis was performed using 'Thermo Ultimate 3000 HPLC system' and the column used was 'TSKgel Supermultipore PW-M column (6.0 mm I.D x 15cm, 5 micron particle size, Thermo scientific) '. When analyzing 4arm-PEG-MAL-20k, '5 mM NaCl' was used as the mobile phase and the flow rate was '0.6 mL/min', and when analyzing 4arm-PEG-MAL 20k-KLAW conjugate, '100 mM acetate buffer (pH 4.0) containing 100 mM $Na_2SO_4$' was used as the mobile phase and the flow rate was '0.35 mL/min'. 'MiniDAWN TREOS (Wyatt Technology)' was used as a multi-angle light scattering meter, and 'RI-101 (Shodex)' was used as a refractive index detector.

As a result, as shown in Tables 2 and 3, the molecular weight of 4arm-PEG-MAL-20k before reaction was measured to be approximately 20,000 (Table 2), and it was confirmed that the molecular weight of the 4arm-PEG-MAL-20k-KLAW peptide complex increased by approximately 8,000 due to the binding of four C19KLAWs (Table 3).

[Table 2]

| Mw (Da) | Mn (Da) | Polydispersity |
|---|---|---|
| 20260 (± 2.6%) | 20050 (± 2.7%) | 1.011 |

<Molecular weight of 4arm-PEG-MAL-20k measured by size exclusion chromatography and multi-angle light scattering techniques>

Mw: weight average molecular weight, Mn: number average molecular weight

[Table 3]

| Mw (Da) | Mn (Da) | Polydispersity |
|---|---|---|
| 27680 (± 0.4%) | 27640 (± 0.4%) | 1.001 |

<Molecular weight of 4arm-PEG-MAL-20k-KLAW conjugate measured by size exclusion chromatography and multi-angle light scattering techniques>

**<2-2> Measurement of size of multi-arm polyethylene glycol-KLAW peptide conjugate**

The hydrodynamic diameters of the multi-arm polyethylene glycol before the reaction and the multi-arm polyethylene glycol-KLAW peptide conjugate prepared in Example 1 were measured.

Specifically, the hydrodynamic diameter was measured by dynamic light scattering using Dynapro NanoStar (Wyatt Technology). The 4arm-PEG-MAL-20k and 4arm-PEG-MAL-20k-KLAW conjugates were measured at concentrations of 5 mg/mL and 200 μM (as KLAW concentration), respectively, and all were diluted in 10 mM acetate buffer (pH 5.0).

As a result, an increase in diameter of approximately 0.64 nm was observed due to the formation of the 4arm-PEG-MAL-20k-KLAW conjugate.

**<Example 3> Confirmation of trypsin hydrolysis stability of multi-arm polyethylene glycol-KLAW peptide conjugate**

The formation of the multi-arm polyethylene glycol-KLAW peptide conjugate was confirmed to have a protective effect on the KLAW peptide from enzymes in the gastrointestinal tract after oral administration by trypsin hydrolysis experiments.

Specifically, the KLAW peptide and the 4arm-PEG-MAL-20k-KLAW conjugate were diluted in '50 mM Tris HCl buffer (pH 6.8)' to a concentration of 100 μM. The trypsin solution was prepared to a final activity of 9.35 BAEE U/mL and mixed with the KLAW peptide and the 4arm-PEG-MAL-20k-KLAW conjugate solution in a 1:1 volume ratio, respectively,

and then hydrolyzed at 37°C, 300 rpm. After predetermined times (5, 10, 20, 30, and 60 minutes), the enzyme reaction was terminated using 2% TFA and analyzed by HPLC. HPLC was performed using 'Thermo Ultimate 3000 HPLC system' and 'Gemini C18 column (4.6 x 150 mm, 5 micron particle size, Phenomenex)'. The mobile phase was '0.1% trifluoracetic acid in water and acetonitrile', the flow rate was '1 mL/min', and the eluted material was detected at 'UV 280 nm'.

As a result, as shown in Figure 1, it was confirmed that the resistance to trypsin hydrolysis was increased through the formation of the multi-arm polyethylene glycol-KLAW peptide conjugate, and that the half-life was increased by approximately 1.6 times.

### <Example 4> Cytotoxicity test of multi-arm polyethylene glycol-KLAW peptide conjugate

The cytotoxicity of the prepared multi-arm polyethylene glycol-KLAW peptide conjugate and the KLAW peptide was measured and compared.

First, a human colorectal adenocarcinoma cell line (Caco-2) was seeded at $9 \times 10^3$ cells/well in a 96-well plate and cultured in MEM (Minimum Essential Medium eagle) supplemented with 10% fetal bovine serum (FBS) and 1% penicillin/streptomycin for 3-5 days at 37°C, , 5% $CO_2$ in a Heracell 150i incubator (ThermoScientific, hereafter referred to as an incubator). All samples were diluted in HBSS and processed. For MTT assay, the samples were treated at various concentrations for 30 minutes. Then, the MTT sample was treated at a concentration of 0.5 mg/mL and cultured in a cell incubator for 2 hours. The formed formazan was then dissolved in dimethyl sulfoxide and the absorbance was measured at UV 540 nm using SpectraMax ABS Plus (Molecular device). The results are shown in Figure 2. LDH assay was performed using the CytoTox96 Non-Radioactive assay kit (Promega Corporation). After treating the samples of each condition for 30 minutes, the supernatant was diluted tenfold with HBSS and loaded into a 96-well plate, to which a substrate was then added and left at room temperature and protected from light for 30 minutes. After treating a reagent to stop the reaction, the absorbance was measured at UV 540 nm using SpectraMax ABS Plus (Molecular device). The results are shown in Figure 3.

As shown in Figures 2 and 3, in both the MTT assay and LDH assay, 5 μM of the KLAW peptide and 400 μM of the 4arm-PEG-MAL-20k-KLAW peptide conjugate exhibited similar levels of toxicity. That is, it was confirmed that the 4arm-PEG-MAL-20k-KLAW peptide conjugate showed approximately 80-fold reduced cytotoxicity compared to the KLAW peptide. Therefore, it was confirmed that the cytotoxicity of the KLAW peptide was reduced by pegylation through multi-arm polyethylene glycol.

### <Example 5> Effect of inducing tight junction modulation function of multi-arm polyethylene glycol-KLAW peptide conjugate

To confirm the effect of inducing tight junction modulation function of the multi-arm polyethylene glycol-KLAW peptide conjugate, the prepared multi-arm polyethylene glycol-KLAW peptide conjugate was treated on a Caco-2 cell monolayer membrane, and then transepithelial/endothelial electrical resistance (TEER) was measured.

For the measurement of TEER, Caco-2 cells were cultured in a 12-well plate, Transwell (Corning, USA). Caco-2 cells were seeded at $5 \times 10^4$ cells/well in Transwell inserts and cultured for 21 days. During the first week of culture, the medium was replaced every two days, and during the remaining two weeks, the medium was replaced daily. TEER was measured using a Millicell ERS-2 Volt-ohmmeter (Millipore Corporation, USA). The multi-arm polyethylene glycol-KLAW peptide conjugate sample was diluted in HBSS and treated, and TEER was measured at 10-minute intervals for 30 minutes of treatment. Afterwards, the medium was replaced with MEM and the recovery pattern of the epithelial cell resistance value was measured. TEER was calculated as follows.

$$\text{TEER } (\Omega \times \text{cm}^2) = [\text{TEER}_{\text{measured}} (\Omega) - \text{TEER}_{\text{blank}} (\Omega)] \times A(\text{cm}^2)$$

0.1% Triton X-100 was used as a positive control, and HBSS without the sample was treated as a negative control. As an additional comparison group, the KLAW peptide was used at a concentration of 10 μM, at which reversible recovery of toxicity was observed in the cytotoxicity test. As examples of the multi-arm polyethylene glycol-KLAW peptide conjugate, experiments were performed with the 4arm-PEG-MAL-10k-KLAW conjugate and the 4arm-PEG-MAL-20k-KLAW conjugate.

As a result, as shown in Figures 4 and 5, it was confirmed both the 4arm-PEG-MAL-10k-KLAW conjugate and the 4arm-PEG-MAL-20k-KLAW conjugate reduced TEER values dose-dependently. The above results indicate that the multi-arm polyethylene glycol-KLAW peptide conjugate induces a tight junction modulation function. In addition, when observing the recovery pattern of TEER values, the 4arm-PEG-MAL-10k-KLAW conjugate was shown to restore the TEER value to levels above the negative control up to 50 μM in the investigated concentration range, and the 4arm-PEG-MAL-20k-KLAW

conjugate was shown to restore the TEER value to levels similar to the negative control at all investigated concentrations including the concentration of 200 μM.

**<Example 6> Effect of enhancing absorption of polysaccharide drugs using multi-arm polyethylene glycol-KLAW peptide conjugate as absorption enhancer**

The enhanced absorption of fluorescein isothiocyanate-dextran (FITC-dextran), a marker of the intercellular permeability pathway, by the prepared multi-arm polyethylene glycol-KLAW peptide conjugate was observed in a Caco-2 cell monolayer membrane.

To confirm the absorption-enhancing effect on biomacromolecules with various molecular weights, experiments were conducted using FITC-dextran with molecular weights ranging from 4 kDa to 150 kDa. First, the FITC-dextran with each molecular weight was mixed using HBSS as a solvent to have a final concentration of 0.4 mg/mL, and the multi-arm polyethylene glycol-KLAW peptide conjugate was mixed to have a preset concentration. After culturing for 21 days to form a Caco-2 cell monolayer membrane in Transwell, samples of each condition were treated thereto and cultured for 1 hour at 37°C, 5% $CO_2$. Then, 200 microliters of samples were taken from the upper part (donor site) and lower part (acceptor site) of the monolayer membrane, and the amount of FITC-dextran was analyzed by fluorescence analysis. Samples were loaded into Nunc™Microwell™ (USA) and fluorescence analysis was performed using a Flexstationi 3 Multi-Mode Microplate instrument (Molecular Devices, USA) at an excitation wavelength of 490 nm and an emission wavelength of 520 nm. Through this, the apparent permeability coefficient ($P_{app}$) of FITC-dextran for each condition was calculated as follows.

$$P_{app}\ (cm/s) = \frac{dQ}{dt} \times \frac{1}{AC_r} = \frac{V_a}{dt} \times \frac{C_a}{AC_r}$$

Herein, *dQ*/*dt* represents the flux (μmol $s^{-1}$) at steady state in the permeation of a substance, A represents the surface area of the Transwell filter, $C_r$ represents the concentration of the permeant substance (μM) in the donor site before the permeation test, $V_a$ represents the volume of the solution in the receptor site ($cm^3$), and $C_a$ represents the final concentration of the permeant substance (μM) in the receptor site at the time of completion of the permeation test. As examples of the multi-arm polyethylene glycol-KLAW peptide conjugates, the 4arm-PEG-MAL-10k-KLAW conjugate and the 4arm-PEG-MAL-20k-KLAW conjugate were used as absorption enhancers for FITC-dextran.

As a result, as shown in Figure 6, at a concentration of 100 μM each of the 4arm-PEG-MAL-10k-KLAW conjugate and the 4arm-PEG-MAL-20k-KLAW conjugate, the absorption-enhancing effect for FITC-dextran with molecular weights ranging from 4,000 Da to 40,000 Da was confirmed. Both substances significantly enhanced the absorption of FITC-dextran of all molecular weights compared to the control, and the absorption-enhancing effect of the 4arm-PEG-MAL-10k-KLAW conjugate was confirmed to be superior.

In addition, to confirm the absorption-enhancing effect on larger molecular weight biomacromolecules such as proteins and polysaccharides, FITC-dextran with molecular weights of 70,000 Da and 150,000 Da was treated with the 4arm-PEG-MAL-20k-KLAW conjugate at concentrations of 200 to 400 μM, and then the absorption-enhancing effect was observed.

As a result, as shown in Figure 7, the 4arm-PEG-MAL-20k-KLAW conjugate enhanced the absorption of all FITC-dextran of each molecular weight dose-dependently.

**<Example 7> Effect of enhancing absorption of peptide drugs using multi-arm polyethylene glycol-KLAW peptide conjugate as absorption enhancer (1)**

To confirm the absorption-enhancing effect on peptide drugs, the absorption-enhancing effect of the prepared multi-arm polyethylene glycol-KLAW peptide conjugate on the peptide drug Leuprolide (molecular weight 1209.4 Da) was observed in a Caco-2 cell monolayer membrane.

First, Leuprolide was mixed using HBSS as a solvent to a final concentration of 400 μM, and the multi-arm polyethylenglycol-KLAW peptide conjugate was mixed using HBSS as a solvent to a preset concentration. As the multi-arm polyethylene glycol-KLAW peptide conjugates, those prepared through 4arm-PEG-MAL-20K, 4arm-PEG-MAL-10K, and 2arm-PEG-MAL-5K were used. To compare the effectiveness of the multi-arm polyethylene glycol conjugate, its effectiveness was compared with that prepared via mPEG-MAL-5k having a molecular weight of 5000 and a single binding site. Samples of each condition were treated into Transwells that had formed a Caco-2 cell monolayer by culturing for 21 days, and then cultured at 37°C, 5% $CO_2$ for 30 minutes. Then, 200 microliters of samples were taken from the upper part (donor site) and the lower part (acceptor site) of the monolayer, and the amount of Leuprolide was analyzed by HPLC. HPLC was performed using Thermo Ultimate 3000 HPLC system and Gemini C18 column (4.6 x 150 mm, 5 micron particle

size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 8, compared to 10 μM of the KLAW peptide, the multi-arm polyethylene glycol-KLAW peptide conjugate using 4arm-PEG-MAL-20K, 4arm-PEG-MAL-10K, and 2arm-PEG-MAL-5K showed a significantly higher absorption-enhancing effect on Leuprolide. In addition, it was confirmed that for the mPEG-MAL-5k-KLAW conjugate with a single KLAW peptide, there was no significant difference from the control at concentrations below 200 μM, but at a concentration level of 500 μM, it could reach the concentration level of 50 to 100 μM of the multi-arm polyethylene glycol conjugates (4arm-PEG-MAL-20K, 4arm-PEG-MAL-10K, and 2arm-PEG-MAL-5K).

### <Example 8> Effect of enhancing absorption of peptide drugs using multi-arm polyethylene glycol-KLAW peptide conjugate as absorption enhancer (2)

To further confirm the absorption-enhancing effect on peptide drugs, the absorption-enhancing effect of the prepared multi-arm polyethylene glycol-KLAW peptide conjugate on the peptide drug Teriparatide (molecular weight 4117.8 Da) was observed in a Caco-2 cell monolayer membrane.

First, Teriparatide was mixed using HBSS as a solvent to a final concentration of 400 μM, and the multi-arm polyethylenglycol-KLAW peptide conjugate was mixed using HBSS as a solvent to a preset concentration. The multi-arm polyethylene glycol-KLAW peptide conjugate prepared using 4arm-PEG-MAL-20K was used, and the experiment was conducted using the KLAW peptide at a concentration of 10 μM as a comparison target. Samples of each condition were treated into Transwells that had formed a Caco-2 cell monolayer by culturing for 21 days, and then cultured at 37°C, 5% $CO_2$ for 1 hour. Then, 200 microliters of samples were taken from the upper part (donor site) and the lower part (acceptor site) of the monolayer, and the amount of Teriparatide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 9, the multi-arm polyethylene glycol-KLAW peptide conjugate using 4arm-PEG-MAL-20K showed a higher absorption-enhancing effect on Teriparatide than the control group in the group treated with a concentration of 20 μM or higher.

### <Example 9> Effect of enhancing absorption of peptide drugs using multi-arm polyethylene glycol-KLAW peptide conjugate as absorption enhancer (3)

To further confirm the absorption-enhancing effect on peptide drugs, the absorption-enhancing effect of the prepared multi-arm polyethylene glycol-KLAW peptide conjugate on the peptide drug Exenatide (molecular weight 4186.6 Da) was observed in a Caco-2 cell monolayer membrane.

First, Exenatide was mixed using HBSS as a solvent to a final concentration of 200 μM, and the multi-arm polyethylenglycol-KLAW peptide conjugate was mixed using HBSS as a solvent to a preset concentration. The multi-arm polyethylene glycol-KLAW peptide conjugate prepared using 4arm-PEG-MAL-20K and 4arm-PEG-MAL-10K was used, and the experiment was conducted using the KLAW peptide at a concentration of 10 μM as a comparison target. Samples of each condition were treated into Transwells that had formed a Caco-2 cell monolayer by culturing for 21 days, and then cultured at 37°C, 5% $CO_2$ for 1 hour. Then, 200 microliters of samples were taken from the upper part (donor site) and the lower part (acceptor site) of the monolayer, and the amount of Exenatide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 10, compared to 10 μM of the KLAW peptide, the multi-arm polyethylene glycol-KLAW peptide conjugate using 4arm-PEG-MAL-20K and 4arm-PEG-MAL-10K showed a significantly higher absorption-enhancing effect on Exenatide. In particular, in the case of the multi-arm polyethylene glycol-KLAW peptide conjugate using 4arm-PEG-MAL-10K, a similar level of absorption-enhancing effect was observed as the control group at a concentration of 50 μM, and a significantly higher absorption-enhancing effect was confirmed at a concentration of 100 μM or higher.

### <Example 10> Effect of enhancing absorption of peptide drugs using multi-arm polyethylene glycol-KLAW peptide conjugate as absorption enhancer (4)

To further confirm the absorption-enhancing effect on acylated peptide drugs, the absorption-enhancing effect of the prepared multi-arm polyethylene glycol-KLAW peptide conjugate on the acylated peptide drug Semaglutide (molecular weight 4113.6 Da) was observed in a Caco-2 cell monolayer membrane.

First, the multi-arm polyethylenglycol-KLAW peptide conjugate was mixed using HBSS as a solvent to concentrations of 100, 150, and 200 μM, and Semaglutide was mixed using HBSS as a solvent to a concentration of 200 μM. The multi-arm polyethylene glycol-KLAW peptide conjugate prepared using 4arm-PEG-MAL-20K was used, and the experiment was conducted using the KLAW peptide at a concentration of 10 μM as a comparison target. The multi-arm polyethylenglycol-KLAW peptide conjugate samples of each concentration condition were treated into donor sites of Transwells that had formed a Caco-2 cell monolayer by culturing for 21 days, and then cultured at 37°C, 5% $CO_2$ for 30 minutes. After removing the treated samples, Transwells were washed with HBSS, and then treated with Semaglutide sample, followed by culturing for 30 minutes under the same conditions. Then, 200 microliters of samples were taken from the upper part (donor site) and the lower part (acceptor site) of the monolayer, and the amount of Semaglutide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 11, in the group treated with the multi-arm polyethylene glycol-KLAW peptide conjugate using 4arm-PEG-MAL-20K at a concentration of 150 μM or higher, a higher absorption-enhancing effect on Semaglutide was confirmed compared to the control group.

**<Example 11> Effect of enhancing absorption of protein drugs using multi-arm polyethylene glycol-KLAW peptide conjugate as absorption enhancer (1)**

To confirm the absorption-enhancing effect on insulin, a representative protein drug, the absorption-enhancing effect of the prepared multi-arm polyethylene glycol-KLAW peptide conjugate on insulin (molecular weight approximately 5.8 kDa) was observed in a Caco-2 cell monolayer membrane.

First, insulin was mixed using HBSS as a solvent to a final concentration of 300 μM, and the multi-arm polyethylenglycol-KLAW peptide conjugate was mixed using HBSS as a solvent to a preset concentration. The multi-arm polyethylene glycol-KLAW peptide conjugate prepared using 4arm-PEG-MAL-20K was used, and the experiment was conducted using the KLAW peptide at a concentration of 10 μM as a comparison target. Samples of each condition were treated into Transwells that had formed a Caco-2 cell monolayer by culturing for 21 days, and then cultured at 37°C, 5% $CO_2$ for 1 hour. Then, 200 microliters of samples were taken from the upper part (donor site) and the lower part (acceptor site) of the monolayer, and the amount of insulin was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 12, in the group treated with the multi-arm polyethylene glycol-KLAW peptide conjugate using 4arm-PEG-MAL-20K at a concentration of 150 μM or higher, a significantly higher absorption-enhancing effect on bovine pancreatic insulin was confirmed compared to the control group. This was the absorption-enhancing effect that was not observed in the comparative group treated with the KLAW treatment at a concentration of 10 μM. In the group treated with the multi-arm polyethylene glycol-KLAW peptide conjugate using 4arm-PEG-MAL-20K at the highest concentration of 200 μM, an absorption-enhancing effect of about 3 times compared to the control group and about 2 times compared to the comparative group (10 μM KLAW) was confirmed.

**<Example 11> Effect of enhancing absorption of protein drugs using multi-arm polyethylene glycol-KLAW peptide conjugate as absorption enhancer (2)**

To confirm the absorption-enhancing effect on a hormone drug, a representative protein drug, the absorption-enhancing effect of the prepared multi-arm polyethylene glycol-KLAW peptide conjugate on growth hormone (molecular weight 22 kDa) was observed in a Caco-2 cell monolayer membrane.

First, growth hormone was mixed using HBSS as a solvent to a final concentration of 300 μM, and the multi-arm polyethylenglycol-KLAW peptide conjugate was mixed using HBSS as a solvent to a preset concentration. The multi-arm polyethylene glycol-KLAW peptide conjugate prepared using 4arm-PEG-MAL-20K was used, and the experiment was conducted using the KLAW peptide at a concentration of 10 μM as a comparison target. Samples of each condition were treated into Transwells that had formed a Caco-2 cell monolayer by culturing for 21 days, and then cultured at 37°C, 5% $CO_2$ for 1 hour. Then, 200 microliters of samples were taken from the upper part (donor site) and the lower part (acceptor site) of the monolayer, and the amount of growth hormone was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 13, In the control group that was not treated with the absorption enhancer, the permeated amount of growth hormone was below the limit of quantification, and the groups treated with the multi-arm polyethylene glycol-KLAW peptide conjugate at all preset concentrations showed higher permeability than the group treated with the KLAW peptide at a concentration of 10 μM.

**<Example 13> Effect of enhancing absorption of protein drugs using multi-arm polyethylene glycol-KLAW peptide conjugate as absorption enhancer (3)**

To confirm the absorption-enhancing effect on protein drugs, the absorption-enhancing effect of the prepared multi-arm polyethylene glycol-KLAW peptide conjugate on NLY01 (molecular weight approximately 57 kDa), the PEGylated Exenatide, was observed in a Caco-2 cell monolayer membrane.

First, NLY01 was mixed using HBSS as a solvent to a final concentration of 5 mg/mL, and the multi-arm polyethylenglycol-KLAW peptide conjugate was mixed using HBSS as a solvent to a preset concentration. The multi-arm polyethylene glycol-KLAW peptide conjugate prepared using 4arm-PEG-MAL-20K was used. Samples of each condition were treated into Transwells that had formed a Caco-2 cell monolayer by culturing for 21 days, and then cultured at 37°C, 5% $CO_2$ for 1 hour. Then, samples were taken from the lower part (acceptor site) of the monolayer, and the amount of NLY01 was analyzed by HPLC. This was performed using the Exendin-4 EIA kit (Phoenix Pharmaceuticals, Germany), which is a secondary antibody-coated kit, and the quantitative method was a competitive ELISA technique to quantify Exenatide. To calculate the apparent permeability coefficient, the concentration of NLY01 in the mixed solution of the 4arm-PEG-MAL-20K-KLAW peptide conjugate and NLY01 to be treated on the upper part (donor site) of the monolayer membrane was quantified by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 220 nm.

As a result, as shown in Figure 14, it was confirmed that the apparent permeability coefficient significantly increased in the groups treated with 200 μM and 400 μM of the 4arm-PEG-MAL-20K-KLAW peptide conjugate compared to the control group.

**<Example 14> Effect of enhancing absorption of protein drugs using multi-arm polyethylene glycol-KLAW peptide conjugate as absorption enhancer (4)**

To confirm the absorption-enhancing effect on antibody drugs, the absorption-enhancing effect of the prepared multi-arm polyethylene glycol-KLAW peptide conjugate on human immunoglobulin-G (molecular weight approximately 150 kDa) was observed in a Caco-2 cell monolayer membrane.

First, human immunoglobulin-G was mixed using HBSS as a solvent to a final concentration of 20 mg/mL, and the multi-arm polyethylenglycol-KLAW peptide conjugate was mixed using HBSS as a solvent to a preset concentration. The multi-arm polyethylene glycol-KLAW peptide conjugate prepared using 4arm-PEG-MAL-20K was used. Samples of each condition were treated into Transwells that had formed a Caco-2 cell monolayer by culturing for 21 days, and then cultured at 37°C, 5% $CO_2$ for 1 hour. To determine the concentration of human immunoglobulin-G to be treated on the upper part (donor site) of the monolayer membrane for the calculation of the apparent permeability coefficient, the concentration of human immunoglobulin-G before mixing 1:1 with the 4arm-PEG-MAL-20K-KLAW was measured using Lunatic (Unchained Labs, CA, USA), a UV-Vis spectrophotometer, and half of the measured value was substituted. After the permeability test, samples were taken from the lower part (acceptor site) of the monolayer and analyzed by an amine assay, the fluorescamine assay.

As a result, as shown in Figure 15, the apparent permeability coefficient significantly increased in the groups treated with the 4arm-PEG-MAL-20K-KLAW peptide conjugate at concentrations of 200 to 400 μM compared to the control group, and a high permeability and dose-dependent permeation enhancement pattern were also observed compared to the comparative group treated with 10 μM of the KLAW peptide.

**<Example 15> Synergistic effect of absorption enhancement by combination of single- and multi-arm polyethylene glycol-KLAW peptide conjugates and surfactant absorption enhancer**

The absorption synergistic effect was observed by combining the prepared single- and multi-arm polyethylene glycol-KLAW peptide conjugates with sodium caprate (C10), an absorption enhancer with surfactant properties.

Specifically, the single polyethylene glycol-KLAW peptide conjugate was prepared using mPEG-MAL-5k, and the multi-arm polyethylene glycol-KLAW peptide conjugate was prepared using 4arm-PEG-MAL-20K. In both experiments, the synergistic effect was observed by comparing the group treated with the multi-arm polyethylene glycol-KLAW alone, the group treated with C10 alone, and the group treated with a combination of the two. At this time, the target substance for absorption was Leuprolide. Leuprolide was mixed using HBSS as a solvent to a final concentration of 400

μM, the multi-arm polyethylenglycol-KLAW peptide conjugate was mixed using HBSS as a solvent to a preset concentration, and C10 was mixed using HBSS as a solvent to 2.5 millimolar. For the samples containing C10, HBSS without calcium and magnesium was used as a solvent for the samples to be treated on the upper part (donor site) to prevent precipitation of C10. To ensure the integrity of a Caco-2 cell monolayer membrane, HBSS containing calcium and magnesium was used as a solvent for the samples to be treated on the lower part (acceptor site). Samples of each condition were treated into Transwells that had formed a Caco-2 cell monolayer by culturing for 21 days, and then cultured at 37°C, 5% $CO_2$ for 30 minutes. Then, 200 microliters of samples were taken from the upper part (donor site) and the lower part (acceptor site) of the monolayer, and the amount of Leuprolide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm. The results of the synergistic effect of the mPEG-MAL-5k-KLAW peptide conjugate and C10 are shown in Figure 16, and the results of the synergistic effect of the 4arm-PEG-MAL-20K-KLAW peptide conjugate and C10 are shown in Figure 17.

As a result, as shown in Figure 16, the mPEG-MAL-5k-KLAW peptide conjugate in combination with 2.5 mM C10 resulted in a similar level of absorption enhancement at a concentration of 10 μM as the 100 μM concentration of the mPEG-MAL-5k-KLAW peptide conjugate alone. The above results suggest that when the two absorption enhancers are used in combination, there is a synergistic absorption-enhancing effect.

In addition, as shown in Figure 17, in the case of the 4arm-PEG-MAL-20K-KLAW peptide conjugate, a statistically significant increase in an absorption-enhancing effect was observed when co-administered with 2.5 mM C10.

The above results indicate that the combination of the single- and multi-arm polyethylene glycol KLAW peptide conjugates with an absorption enhancer with surfactant properties, such as C10, can lead to higher bioavailability for the oral administration of biodrugs.

***PEGylated distearoyl phosphatidylethanolamine-KLA peptide conjugate***

**<Example 16> Preparation of PEGylated distearoyl phosphatidylethanolamine-KLAW peptide conjugate**

The present inventors prepared a PEGylated distearoyl phosphatidylethanolamine-KLAW peptide conjugate to develop a KLAW peptide having a tight junction modulation function as an absorption enhancer for the oral administration of biodrugs.

[Table 4]

| PEG | Molecular weight (Da) | Manufacturer |
|---|---|---|
| DSPE-PEG-MAL-4k | 4,188 | NOF CORPORATION (Japan) |

Specifically, a C19-KLAW peptide in which cysteine (C) was introduced at position 19, the C-terminal part of the KLAW peptide, and DSPE-PEG-MAL-4k, which has one maleimide reactive group and an average molecular weight of 4188, were used. The C19-KLAW peptide was dissolved in phosphate buffer to 5 mg/mL, and DSPE-PEG-MAL-4k was dissolved in 40 mM phosphate buffer (pH 6.0) with a reaction molar ratio of 1:1 (KLAW peptide: DSPE-PEG-MAL-4k), and then reacted at 25°C. A small amount of the product was taken and analyzed by HPLC, and the remaining product was purified twice with deionized water using an osmotic membrane (molecular weight cut-off 3,500), and finally purified with '10 mM phosphate-buffered saline, pH 7.4 (PBS)'. The purified product was analyzed by HPLC. All HPLC analyses were performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

**<Example 17> Mass spectrometry** of **PEGylated distearoyl phosphatidylethanolamine-KLAW peptide conjugate**

The mass of the PEGylated distearoyl phosphatidylethanolamine-KLAW peptide conjugate before the reaction was measured by MALDI-TOF mass spectrometry.

At this time, the MALDI-TOF mass spectrometry was performed using a Microflex MALDI-TOF Mass Spectrometer (Bruker Daltonics, Bremen, Germany). For the analysis of DSPE-PEG-MAL-4k and DSPE-PEG4k-KLAW, the matrix sinapic acid and the solvent (50% acetonitrile in 0.1% TFA) were mixed, loaded onto a sample stage, and dried to prepare a mass spectrometry sample, which was then subjected to mass spectrometry.

As a result, as shown in Table 5, before the reaction, the DSPE-PEG-MAL-4k was measured to have a molecular

weight of approximately 3990, and the DSPE-PEG-MAL-4k-C19KLAW peptide conjugate was confirmed to have the KLAW peptide conjugated through the mass difference.

[Table 5] Mass spectrometry results of DSPE-PEG-MAL-4k and DSPE-PEG4k-KLAW conjugate

| Sample | **Mw (Da)** |
|---|---|
| DSPE-PEG-MAL-4k | 3990.00 |
| DSPE-PEG4k-KLAW | 6592.37 |
| Mw: weight average molecular weight | |

**<Example 18> Measurement of hydrodynamic diameter of PEGylated distearoyl phosphatidylethanolamine-KLAW peptide conjugate**

The hydrodynamic diameter of the PEGylated distearoyl phosphatidylethanolamine before the reaction and the PEGylated distearoyl phosphatidylethanolamine-KLAW peptide conjugate prepared in Example 16 were measured.

Specifically, the hydrodynamic diameter was measured by dynamic light scattering using Dynapro NanoStar (Wyatt Technology). The DSPE-PEG-MAL-4k and the DSPE-PEG4k-KLAW conjugate were measured at concentrations of 2 mg/mL and 200 μM (as KLAW concentration), respectively, and used after being diluted with 10 mM PBS (pH 7.4).

As a result, in the case of the DSPE-PEG4k-KLAW conjugate, the hydrodynamic diameter was increased by approximately 2.2 nm and the polydispersity (%Pd) was increased by approximately 19.7% compared to the peptide-unconjugated DSPE-PEG4k.

**<Example 19> Results** of **stability test for trypsin hydrolysis** of **PEGylated distearoyl phosphatidylethanolamine-KLAW peptide conjugate**

The prepared PEGylated distearoyl phosphatidylethanolamine-KLAW peptide conjugate was confirmed to have a protective effect on the KLAW peptide from proteolytic enzymes present in the body through trypsin digestion experiments.

Specifically, the KLAW peptide and the DSPE-PEG-4k-KLAW conjugate were diluted with 50 mM Tris HCl buffer (pH 6.8) to a concentration of 100 μM. The trypsin solution was prepared to have a final activity of 9.35 BAEE U/mL and was mixed with the KLAW peptide and DSPE-PEG4k-KLAW conjugate solutions in a 1:1 volume ratio, and then incubated at 37°C, 300 rpm. After predetermined times (5, 10, 20, 30, and 60 minutes), the enzyme reaction was terminated using 5% TFA and analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm.

As a result, as shown in Figure 18, the PEGylated distearoyl phosphatidylethanolamine-KLAW peptide conjugate (DSPE-PEG4K-KLAW) exhibited resistance to trypsin digestion and had a half-life that was 50-fold increased compared to the KLAW peptide.

**<Example 20> Cytotoxicity test of PEGylated distearoyl phosphatidylethanolamine-KLAW peptide conjugate**

The cytotoxicity of the prepared PEGylated distearoyl phosphatidylethanolamine-KLAW peptide conjugate and KLAW peptide was measured and compared.

First, a human colorectal adenocarcinoma cell line (Caco-2 cells) was seeded at $9x10^3$ cells/well in a 96-well plate and cultured in MEM (Minimum Essential Medium eagle) supplemented with 10% fetal bovine serum (FBS) and 1% antibiotic/antimycotic for 3 to 5 days in a Heracell 150i incubator (ThermoScientific, hereinafter referred to as incubator) at 37°C, 5% $CO_2$. All samples were diluted in HBSS and processed. For MTT assay, the samples were treated at various concentrations for 60 minutes. Then, the MTT sample was treated at a concentration of 0.5 mg/mL and cultured in a cell incubator for 2 hours. The formed formazan was then dissolved in dimethyl sulfoxide and the absorbance was measured at UV 540 nm using SpectraMax ABS Plus (Molecular device). The results are shown in Figure 4. LDH assay was performed using the CytoTox96 Non-Radioactive assay kit (Promega Corporation). After treating the samples of each condition for 30 minutes, the supernatant was diluted tenfold with HBSS and loaded into a 96-well plate, to which a substrate was then added and left at room temperature and protected from light for 30 minutes. After treating a reagent to stop the reaction, the absorbance was measured at UV 540 nm using SpectraMax ABS Plus (Molecular device).

As shown in Figures 19 and 20, in both the MTT assay and LDH assay, 10 μM of the KLAW peptide and 200 μM of the DSPE-PEG4k-KLAW peptide conjugate exhibited similar levels of toxicity. That is, it was confirmed that the DSPE-PEG4k-KLAW peptide conjugate showed approximately 20-fold reduced cytotoxicity compared to the KLAW peptide.

Therefore, it was confirmed that the cytotoxicity of the KLAW peptide was reduced through the PEGylated distearoyl phosphatidylethanolamine conjugation.

**<Example 21> Effect of inducing tight junction modulation function** of **PEGylated distearoyl phosphatidylethanolamine-KLAW peptide conjugate**

To confirm the effect of inducing tight junction modulation function of the PEGylated distearoyl phosphatidylethanolamine-KLAW peptide conjugate, the prepared PEGylated distearoyl phosphatidylethanolamine-KLAW peptide conjugate was treated on a Caco-2 cell monolayer membrane, and then transepithelial/endothelial electrical resistance (TEER) was measured.

For the measurement of TEER, Caco-2 cells were cultured in a 12-well plate, Transwell (Corning, USA). Caco-2 cells were seeded at $5x10^4$ cells/well in Transwell inserts and cultured for 21 days. During the first week of culture, the medium was replaced every two days, and during the remaining two weeks, the medium was replaced daily. TEER was measured using a Millicell ERS-2 Volt-ohmmeter (Millipore Corporation, USA). The PEGylated distearoyl phosphatidylethanolamine-KLAW peptide conjugate sample was diluted in HBSS and treated, and TEER was measured at 15-minute intervals for 60 minutes of treatment. Afterwards, the medium was replaced with MEM and the recovery pattern of the epithelial cell resistance value was measured. TEER was calculated as follows.

$$TEER\ (\Omega x\ cm^2) = [TEER_{measured}\ (\Omega)\text{- } TEER_{blank}\ (\Omega)]\ x\ A\ (cm^2)$$

0.1% Triton X-100 was used as a positive control, and HBSS without the sample was treated as a negative control. As an additional comparison group, the KLAW peptide was used at a concentration of 10 $\mu$M, at which reversible recovery of toxicity was observed in the cytotoxicity test. As an example of the PEGylated distearoyl phosphatidylethanolamine-KLAW peptide conjugate, experiments were performed with the DSPE-PEG4k-KLAW.

As a result, as shown in Figure 21, it was confirmed that all the DSPE-PEG4k-KLAW conjugates reduced TEER values dose-dependently. The above results indicate that the PEGylated distearoyl phosphatidylethanolamine-KLAW peptide conjugate induces a tight junction modulation function. In addition, when observing the recovery pattern of TEER values, the DSPE-PEG4k-KLAW conjugate was shown to restore the TEER value to levels above the negative control up to 200 $\mu$M in the investigated concentration range, and was shown to restore the TEER value to levels similar to the negative control at all investigated concentrations.

**<Example 22> Effect of enhancing absorption of peptide drugs using PEGylated distearoyl phosphatidylethanolamine-KLAW peptide conjugate as absorption enhancer (1)**

To confirm the absorption-enhancing effect on peptide drugs, the absorption-enhancing effect of the prepared PEGylated distearoyl phosphatidylethanolamine-KLAW peptide conjugate on the peptide drug Leuprolide (molecular weight 1209.4 Da) was observed in a Caco-2 cell monolayer membrane.

First, Leuprolide was mixed using HBSS as a solvent to a final concentration of 400 $\mu$M, and the PEGylated distearoyl phosphatidylethanolamine-KLAW peptide conjugate was mixed using HBSS as a solvent to a preset concentration. As the PEGylated distearoyl phosphatidylethanolamine-KLAW peptide conjugates, those prepared through DSPE-PEG-MAL-4K were used. To compare the effectiveness of the PEGylated distearoyl phosphatidylethanolamine-KLAW conjugate, its effectiveness was compared with that of the PEGSk-KLAW prepared using phospholipid-free mPEG-MAL-5k. Samples of each condition were treated into Transwells that had formed a Caco-2 cell monolayer by culturing for 21 days, and then cultured at 37°C, 5% $CO_2$ for 60 minutes. Then, 200 microliters of samples were taken from the upper part (donor site) and the lower part (acceptor site) of the monolayer, and the amount of Leuprolide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 22, compared to 10 $\mu$M of the KLAW peptide, the PEGylated distearoyl phosphatidylethanolamine-KLAW peptide conjugate using DSPE-PEG-MAL-4K showed a significantly higher absorption-enhancing effect on Leuprolide. In addition, in the case of the phospholipid-free PEG5k-KLAW conjugate, no significant difference from the control group was observed up to a concentration of 100 $\mu$M. These results indicate that the phospholipid structure plays an important role in enhancing absorption in the PEGylated distearoyl phosphatidylethanolamine-KLAW peptide conjugate (DSPE-PEG4K-KLAW) of the present invention.

**<Example 23> Effect of enhancing absorption of peptide drugs using PEGylated distearoyl phosphatidylethanolamine-KLAW peptide conjugate as absorption enhancer (2)**

To further confirm the absorption-enhancing effect on peptide drugs, the absorption-enhancing effect of the prepared PEGylated distearoyl phosphatidylethanolamine-KLAW peptide conjugate on Semaglutide (molecular weight 4113.6 Da) was observed in a Caco-2 cell monolayer membrane.

First, the PEGylated distearoyl phosphatidylethanolamine-KLAW peptide conjugate was mixed using HBSS as a solvent to concentrations of 10 μM to 300 μM, and Semaglutide was mixed using HBSS as a solvent to a concentration of 200 μM. The PEGylated distearoyl phosphatidylethanolamine-KLAW peptide conjugate prepared using DSPE-PEG-MAL-4K was used, and the experiment was conducted using the KLAW peptide at a concentration of 10 μM as a comparison target. The PEGylated distearoyl phosphatidylethanolamine-KLAW peptide conjugate samples of each concentration condition were treated on the donor site of Transwells that had formed a Caco-2 cell monolayer by culturing for 21 days, and then cultured at 37°C, 5% $CO_2$ for 60 minutes. After removing the treated sample, Transwells were washed with HBSS solution, treated with Semaglutide sample, and incubated for 60 minutes under the same conditions. Then, 200 microliters of samples were taken from the upper part (donor site) and the lower part (acceptor site) of the monolayer, and the amount of Semaglutide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 23, the PEGylated distearoyl phosphatidylethanolamine-KLAW peptide conjugate (DSPE-PEG4k-KLAW) of the present invention showed a significantly higher absorption-enhancing effect on Semaglutide than the control group in the group treated with a concentration of 250 μM or higher.

**<Example 24> Effect of enhancing absorption of protein drugs using PEGylated distearoyl phosphatidylethanolamine-KLAW peptide conjugate as absorption enhancer (3)**

To confirm the absorption-enhancing effect on antibody drugs, the absorption-enhancing effect of the prepared PEGylated distearoyl phosphatidylethanolamine-KLAW peptide conjugate on human immunoglobulin-G (molecular weight approximately 150 kDa) was observed in a Caco-2 cell monolayer membrane.

First, human immunoglobulin-G was mixed using HBSS as a solvent to a final concentration of 20 mg/mL, and the PEGylated distearoyl phosphatidylethanolamine-KLAW peptide conjugate was mixed using HBSS as a solvent to a preset concentration. The PEGylated distearoyl phosphatidylethanolamine-KLAW peptide conjugate prepared using DSPE-PEG-MAL-4K was used. Samples of each condition were treated into Transwells that had formed a Caco-2 cell monolayer by culturing for 21 days, and then cultured at 37°C, 5% $CO_2$ for 1 hour. To determine the concentration of human immunoglobulin-G to be treated on the upper part (donor site) of the monolayer membrane for the calculation of the apparent permeability coefficient, the concentration of human immunoglobulin-G before mixing 1:1 with the DSPE-PEG4K-KLAW was measured using Lunatic (Unchained Labs, CA, USA), a UV-Vis spectrophotometer, and half of the measured value was substituted. After the permeability test, samples were taken from the lower part (acceptor site) of the monolayer and analyzed by fluorescamine assay.

As a result, as shown in Figure 24, the apparent permeability coefficient significantly increased in the group treated with the DSPE-PEG4K-KLAW peptide conjugate at concentrations of 100 to 200 μM compared to the control group, and a dose-dependent increase in permeability was observed.

***polyamidoamine dendrimer-polyethylene glycol-KLA peptide conjugate***

**<Example 25> Preparation of dendrimer-polyethylene glycol-KLAW peptide conjugate**

The present inventors prepared a dendrimer-polyethylene glycol-KLAW peptide conjugate to develop a KLAW peptide having a tight junction modulation function as an absorption enhancer for oral administration of biodrugs.

[Table 6]

| **Reagent** | Molecular weight (Da) | Manufacturer |
|---|---|---|
| Polyamidoamine (PAMAM) dendrimer generation 3 (G3) | 6, 909 | DENDRITECH (USA) |
| Polyamidoamine (PAMAM) dendrimer generation 4 (G4) | 14, 215 | DENDRITECH (USA) |
| SCM-PEG-MAL | 2,075 | JENKEM TECHNOLOGY (USA) |

Specifically, PAMAM dendrimer G3 (molecular weight 6,909) and PAMAM dendrimer G4 (molecular weight 14,215) with amine group surfaces, the polyethylene glycol linker SCM-PEG-MAL with one succinimidyl carboxymethyl ester (SCM) reactive group and one maleimide reactive group in the molecule (molecular weight 2,075), and the C19KLAW peptide with cysteine (C) introduced at position 19, which is the C-terminal part of the KLAW peptide, were used (Table 6).

First, for the preparation of the PAMAM dendrimer G4-PEG-c19KLAW conjugate, 12 mg of SCM-PEG-MAL was added to a solution of PAMAM dendrimer G4 dissolved in 40 mM phosphate buffer (pH 7.4) (1.25 mg/mL), and the mixture was reacted at 25°C for 1 hour. The reaction product was purified with deionized water using ultrafiltration (molecular weight cut-off 30,000), and the reaction buffer was replaced by a final purification with 40 mM phosphate buffer (pH 6). The purified reaction product was added to a c19KLAW solution containing (i) 5 mg of c19KLAW (G4-PEG-c19KLAW$_{max}$), (ii) 3 mg of c19KLAW (G4-PEG-c19KLAW$_{med}$), and (iii) 1 mg of c19KLAW (G4-PEG-c19KLAW$_{min}$) dissolved in 0.8 mL of 40 mM phosphate buffer, pH 6.0, followed by reaction at 25°C for 12 hours. The final reaction product was purified with deionized water using ultrafiltration (molecular weight cut-off 30,000).

Next, for the preparation of the PAMAM dendrimer G3-PEG-c19KLAW conjugate, 12 mg of SCM-PEG-MAL was added to a solution of PAMAM dendrimer G3 dissolved in 40 mM phosphate buffer (pH 7.4) (1.25 mg/mL), and the mixture was reacted at 25°C for 1 hour. The reaction product was purified with deionized water using ultrafiltration (molecular weight cut-off 10,000), and the reaction buffer was replaced by a final purification with 40 mM phosphate buffer (pH 6). The purified reaction product was added to a c19KLAW solution containing (i) 4.5 mg of c19KLAW (G3-PEG-c19KLAW$_{max}$), (ii) 3 mg of c19KLAW (G3-PEG-c19KLAW$_{med}$), and (iii) 1.5 mg of c19KLAW (G3-PEG-c19KLAW$_{min}$) dissolved in 0.8 mL of 40 mM phosphate buffer, pH 6.0, followed by reaction at 25°C for 12 hours. The final reaction product was purified with deionized water using ultrafiltration (molecular weight cut-off 30,000).

### <Example 26> $^{1}$H-NMR structural analysis, and molecular weight and particle size measurement of PAMAM dendrimer-polyethylene glycol-KLAW peptide conjugate

#### <26-1> $^{1}$H-NMR structural analysis of PAMAMdendrimer-polyethylene glycol-KLAW peptide conjugate

The structure of the PAMAM dendrimer-polyethylene glycol-KLAW peptide conjugate prepared in Example 25 was analyzed by $^{1}$H-NMR (600 MHz, $D_2O$, JEOL Ltd.) to measure the number of SCM-PEG-MAL molecules and the number of KLAW peptide molecules conjugated to one molecule of the PAMAM dendrimer.

As a result, through quantification of the hydrogen number of the PEG-specific peaks at positions 3.5-3.7 ppm and the c19KLAW-specific peaks at positions 0.6-0.9 ppm in the $^{1}$H-NMR spectra of the PAMAM dendrimer G4-PEG-c19KLAW$_{max}$ conjugate, it was confirmed that an average of 32 molecules of the polyethylene glycol linker and an average of 23 molecules of the c19KLAW peptide were conjugated to one molecule of PAMAM dendrimer G4 (data not shown).

In the case of the G4-PEG-c19KLAW$_{med}$, it was confirmed that an average of 32 molecules of the polyethylene glycol linker (SCM-PEG-MAL) and an average of 16 molecules of the c19KLAW peptide were conjugated. And in the case of the G4-PEG-c19KLAW$_{min}$, it was confirmed that an average of 32 molecules of the polyethylene glycol linker (SCM-PEG-MAL) and an average of 7 molecules of the c19KLAW peptide were conjugated.

#### <26-2> Measurement of molecular weight of PAMAMdendrimer-polyethylene glycol-KLAW peptide conjugate

The molecular weight of the PAMAM dendrimer-polyethylene glycol-KLAW peptide conjugate prepared in Example 25 was measured.

Specifically, the molecular weight was measured using size exclusion chromatography and multi-angle light scattering techniques. At this time, the size exclusion chromatography analysis was performed using Thermo Ultimate 3000 HPLC system and the column used was TSK G5000 PWXL-CP SEC column (7.8 mm × 300 mm, 10 μm; Tosoh, Tokyo, Japan). A 100 mM acetate buffer solution (pH 4) was used as the mobile phase and the flow rate was 0.5 mL/min. MiniDAWN TREOS (Wyatt Technology) was used as a multi-angle light scattering meter, and RI-101 (Shodex) was used as a refractive index detector.

As a result, as shown in Table 7, the molecular weight of the PAMAM dendrimer G4-PEG-C19KLAW$_{max}$ conjugate was measured to be approximately 120 kDa.

[Table 7]

| Molecular weight of PAMAM dendrimer G4-PEG-c19KLAW$_{max}$ measured by size exclusion chromatography and multi-angle light scattering techniques | | |
|---|---|---|
| **Mn (Da)** | **Mw (Da)** | **Polydispersity** |
| 114,900 (± 4.1%) | 121,600 (± 3.8%) | 1.058 |
| Mn: number average molecular weight, Mw: weight average molecular weight | | |

**<26-3> Measurement of particle size of PAMAMdendrimer-polyethylene glycol-KLAW peptide conjugate**

The hydrodynamic diameters of the multi-arm polyethylene glycol before the reaction and the multi-arm polyethylene glycol-KLAW peptide conjugate prepared in Example 1 were measured.

The hydrodynamic diameters of the PAMAM dendrimer G4 before the reaction, the reaction intermediate G4-PEG-MAL, and the final product PAMAM dendrimer G4-PEG-c19KLAW$_{max}$ conjugate were measured.

Specifically, all measurement samples were diluted with 5 mM phosphate buffer (pH 7.4), filtered through a 0.45 μm membrane filter, and then measured using Dynapro NanoStar (Wyatt Technology).

As a result, as the conjugate was formed from PAMAM dendrimer G4 (D: 4.6nm, %Pd: 19.8) to PAMAM dendrimer G4-PEG-MAL (D: 9.9nm, %Pd: 17.7) and finally PAMAM G4-PEG-c19KLAW (D: 13.7nm, %Pd: 11.3), an increase in particle hydrodynamic diameter was observed (data not shown).

**<Example 27> Confirmation of trypsin hydrolysis stability of PAMAMdendrimer-polyethylene glycol-KLAW peptide conjugate**

The formation of the PAMAM dendrimer-polyethylene glycol-KLAW peptide conjugate prepared in Example 25 was confirmed to have a protective effect on the KLAW peptide from enzymes in the gastrointestinal tract after oral administration by trypsin hydrolysis experiments (Figure 25).

Specifically, the KLAW peptide and the G4-PEG-c19KLAW conjugate were diluted in deionized water to a concentration of 250 μM, and the trypsin solution was diluted in 50 mM Tris-HCL buffer (pH 6.8) to a final activity of 20 BAEE U/mL. The trypsin solution was mixed with the KLAW peptide and the G4-PEG-c19KLAW conjugate solution in a 1:1 volume ratio, respectively, and then hydrolyzed at 37C, 300 rpm. At predetermined times (2, 5, 10, 15, 30, 60, and 120 minutes), the samples undergoing hydrolysis were taken, and the enzyme reaction was terminated using 5% TFA in 50% acetonitrile and analyzed by UHPLC. UHPLC was performed using Vanquish Thermo UHPLC system and Acquity UPLC® BEH C18 column (2.1 mm × 50 mm, 1.7 μm; Waters, Milford, MA, USA). The mobile phase was 0.1% trifluoracetic acid in water and acetonitrile, the flow rate was 1 mL/min, and the eluted material was detected by measuring absorbance at UV 280 nm.

As a result, as shown in Figure 25, it was confirmed that the resistance to trypsin hydrolysis was increased through the formation of the PAMAM dendrimer G4-polyethylene glycol-KLAW peptide conjugate, and that the half-life was increased by approximately 3 times.

**<Example 28> Cytotoxicity test of PAMAMdendrimer-polyethylene glycol-KLAW peptide conjugate**

The cytotoxicity of the prepared PAMAM dendrimer-polyethylene glycol-KLAW peptide conjugate prepared in Example 25 and the KLAW peptide was measured and compared (Figures 26A to 26C).

First, a human colorectal adenocarcinoma cell line (Caco-2 cells) was seeded at $6 \times 10^3$ cells/well in a 96-well plate and cultured in MEM (Minimum Essential Medium eagle) supplemented with 10% fetal bovine serum (FBS) and 1% penicillin/streptomycin for 3-5 days at 37°C, 5% $CO_2$ in a Heracell 150i incubator (ThermoScientific, hereafter referred to as an incubator). All samples were diluted in HBSS and processed. For MTT assay, the samples were treated at various concentrations for 30 minutes. Then, the MTT sample was treated at a concentration of 0.5 mg/mL and cultured in a cell incubator for 2 hours. The formed formazan was then dissolved in dimethyl sulfoxide and the absorbance was measured at UV 540 nm using SpectraMax ABS Plus (Molecular device). The results are shown in Figure 26A.

LDH assay was performed using the CytoTox96 Non-Radioactive assay kit (Promega Corporation). After treating the samples of each condition for 30 minutes, the supernatant was diluted tenfold with HBSS and loaded into a 96-well plate, to which a substrate was then added and left at room temperature and protected from light for 30 minutes. After treating a reagent to stop the reaction, the absorbance was measured at UV 490 nm using SpectraMax ABS Plus (Molecular device). The results are shown in Figure 26B.

In the cell recovery experiment, the samples were treated at different concentrations for 30 minutes, then the samples were removed, replaced with medium, and cultured in an incubator for 90 minutes under the same conditions

above. Then, the MTT sample was treated at a concentration of 0.5 mg/mL and cultured in a cell incubator for 2 hours. The formed formazan was then dissolved in dimethyl sulfoxide and the absorbance was measured at UV 540 nm using SpectraMax ABS Plus (Molecular device). The results are shown in Figure 26C.

As shown in Figures 26A and 26B, in both the MTT assay and LDH assay, 10 μM of the PAMAM dendrimer G4-PEG-c19KLAW conjugate exhibited lower levels of cytotoxicity compared to 10 μM of the KLAW peptide. In addition, 50 μM of the PAMAM dendrimer G4-PEG-c19KLAW conjugate exhibited similar levels of cytotoxicity compared to 10 μM of the KLAW peptide.

As shown in Figure 26C, in an experiment confirming cell recovery using MTT assay, the PAMAM dendrimer G4-PEG-c19KLAW conjugate was confirmed to recover cell viability in 90 minutes at a level that was not significantly different from the negative control group (control, C; untreated HBSS treated group) up to the highest concentration evaluated, 50 μM.

Therefore, it was confirmed that the cytotoxicity of the KLAW peptide was reduced through PAMAM dendrimer-polyethylene glycol conjugation.

## <Example 29> Effect of inducing tight junction modulation function of PAMAM dendrimer-polyethylene glycol-KLAW peptide conjugate

To confirm the effect of inducing tight junction modulation function of the PAMAM dendrimer G4-polyethylene glycol-KLAW peptide conjugate, the dendrimer G4-polyethylene glycol-KLAW peptide conjugate prepared in Example 25 was treated on the upper part of a Caco-2 cell monolayer membrane, and then transepithelial/endothelial electrical resistance (TEER) was measured (Figure 27).

For the measurement of TEER, Caco-2 cells were cultured in a 12-well plate, Transwell (Corning, USA). Caco-2 cells were seeded at $5x10^4$ cells/well in Transwell inserts and cultured for 21 days. During the first week of culture, the medium was replaced every two days, and during the remaining two weeks, the medium was replaced daily. TEER was measured using a Millicell ERS-2 Volt-ohmmeter (Millipore Corporation, USA). The PAMAM dendrimer G4-polyethylene glycol-KLAW peptide conjugate sample was diluted in HBSS and treated, and TEER was measured at 10-minute intervals for 30 minutes of treatment. Afterwards, the medium was replaced with MEM and the recovery pattern of the epithelial cell resistance value was measured. TEER was calculated as follows.

$$\mathrm{TEER}\ (\Omega x\ cm^2) = (\mathrm{R}_{\mathrm{Total}} - \mathrm{R}_{\mathrm{Blank}})(\Omega)\ \mathrm{x}\ \mathrm{A}\ (cm^2)$$

HBSS without the sample was treated as a negative control. As an additional comparison group, the KLAW peptide was used at a concentration of 10 μM, at which reversible recovery of toxicity was observed in the cytotoxicity test. The PAMAM dendrimer G4-polyethylene glycol-KLAW peptide conjugate was treated at concentrations of 10, 50, and 100 μM.

As a result, as shown in Figure 27, it was confirmed that the PAMAM dendrimer G4-PEG-c19KLAW conjugate decreased TEER values dose-dependently. The above results indicate that the PAMAM dendrimer G4-PEG-c19KLAW peptide conjugate induces a tight junction modulation function. In addition, when observing the recovery pattern of TEER values, the PAMAM dendrimer G4-PEG-c19KLAW conjugate was observed to restore the TEER value to levels of the negative control up to 50 μM in the investigated concentration range.

## <Example 30> Effect of enhancing absorption of polysaccharide drugs using PAMAM dendrimer-polyethylene glycol-KLAW peptide conjugate as absorption enhancer

The enhanced absorption of fluorescein isothiocyanate-dextran (FITC-dextran), a marker of the intercellular permeability pathway, by the prepared PAMAM dendrimer G4-polyethylene glycol-KLAW peptide conjugate was observed in a Caco-2 cell monolayer membrane.

To confirm the absorption-enhancing effect on biomacromolecules with various molecular weights, the permeation-enhancing effect of the polyamidoamine dendrimer-polyethylene glycol-KLAW peptide conjugate on FITC-dextran was investigated using FITC-dextran with molecular weights ranging from 4 kDa to 150 kDa. First, the FITC-dextran with each molecular weight was mixed using HBSS as a solvent to have a final concentration of 0.4 mg/mL, and the PAMAM dendrimer-polyethylene glycol-KLAW peptide conjugate was mixed to have a preset concentration.

Samples of each condition were treated on the upper part of a Caco-2 cell monolayer and then cultured for 30 minutes at 37°C, 5% $CO_2$. Then, 200 microliters of samples were taken from the upper part (donor site) and lower part (acceptor site) of the monolayer membrane, and the amount of FITC-dextran was analyzed by fluorescence analysis. Samples were loaded into Nunc™Microwell™ (USA) and fluorescence analysis was performed using a Flexstationi 3 Multi-Mode Microplate instrument (Molecular Devices, USA) at an excitation wavelength of 490 nm and an emission wavelength of 520 nm. Through this, the apparent permeability coefficient ($P_{app}$) of FITC-dextran for each condition was calculated as follows.

$$P_{app} = \frac{dQ}{dt} \times \frac{1}{AC_0}$$

Herein, *dQ*/*dt* represents the flux (μmol $s^{-1}$) at steady state in the permeation of a substance, A represents the surface area of the Transwell filter, and $C_0$ refers to the concentration (μM) of the permeant substance at the donor site before the permeation test.

As examples of the conjugate, the G3-PEG-c19KLAWmax, G4-PEG-c19KLAWmin, G4-PEG-c19KLAWmed, and G4-PEG-c19KLAWmax conjugates were used as absorption enhancers for FITC-dextran (molecular weight 4 kDa), and the permeation-enhancing effect on FITC-dextran (molecular weight 4 kDa) was observed (Figure 28). The KLAW peptide bonding numbers of the PAMAM dendrimer G3 and G4-based KLAW peptide conjugate absorption enhancers quantified by **$^1$H-NMR** are shown in Table 8.

[Table 8]

| Number of KLAW peptide bonds per PAMAM dendrimer molecule of PAMAM dendrimer-polyethylene glycol-KLAW peptide conjugate quantified by $^1$H-NMR | |
|---|---|
| **PAMAM dendrimer-polyethylene glycol-KLAW peptide conjugate absorption enhancer** | **Number of KLAW peptide bonds per PAMAM dendrimer molecule (molecules)** |
| PAMAM G3-PEG-c19KLAWmin | 8.5 |
| PAMAM G3-PEG-c19KLAWmed | 12.9 |
| PAMAM G3-PEG-c19KLAWmax | 17.1 |
| PAMAM G4-PEG-c19KLAWmin | 6.6 |
| PAMAM G4-PEG-c19KLAWmed | 14.6 |
| PAMAM G4-PEG-c19KLAWmax | 22.9 |

As a result, as shown in Figure 28, it was confirmed that all the polyamidoamine dendrimer-polyethylene glycol-KLAW peptide conjugates administered at a concentration of 50 μM showed a significant absorption-enhancing effect on FITC-dextran (molecular weight 4 kDa) compared to the negative control. Among the examples of the conjugates investigated, the G4-PEG-c19KLAWmax conjugate showed the most excellent absorption-enhancing effect on FITC-dextran (molecular weight 4 kDa).

Then, the absorption-enhancing effect on FITC-dextran (molecular weight 4 kDa) was observed after treating the G4-PEG-c19KLAWmax conjugate at concentrations of 10 to 100 μM (Figure 29). As a result, as shown in Figure 29, the G4-PEG-c19KLAWmax conjugate showed an absorption-enhancing effect on FITC-dextran dose-dependently, and from the investigated concentration of 50 μM, a permeation-enhancing effect on FITC-dextran of approximately 5 times that of the negative control group was confirmed.

In addition, to confirm the absorption-enhancing effect on larger molecular weight biomacromolecules such as proteins and antibodies, FITC-dextran with molecular weights of 10 kDa, 70 kDa, and 150 kDa was treated with the G4-PEG-c19KLAWmax conjugate at concentrations of 10 and 50 μM, and then the absorption-enhancing effect was observed (Figure 6). As a result, as shown in Figure 30, the G4-PEG-c19KLAWmax conjugate enhanced the absorption of all FITC-dextran of each molecular weight dose-dependently.

**<Example 31> Effect of enhancing absorption of peptide drugs using PAMAM dendrimer-polyethylene glycol-KLAW peptide conjugate as absorption enhancer (1)**

To confirm the absorption-enhancing effect on peptide drugs, the absorption-enhancing effect of the prepared PAMAM dendrimer-polyethylene glycol-KLAW peptide conjugate on the peptide drug Leuprolide (molecular weight 1209.42 Da) was observed in a Caco-2 cell monolayer membrane (Figure 31).

First, Leuprolide was mixed using HBSS as a solvent to a final concentration of 400 μM, and the PAMAM dendrimer-polyethylenglycol-KLAW peptide conjugate was mixed using HBSS as a solvent to a preset concentration. As a representative example of the PAMAM dendrimer-polyethylene glycol-KLAW peptide conjugate, G4-PEG-c19KLAWmax was used.

Samples of each condition were treated on the upper part of a Caco-2 cell monolayer membrane, and then cultured at 37°C, 5% $CO_2$ for 30 minutes. Then, 200 microliters of samples were taken from the upper part (donor site) and the lower part (acceptor site) of the monolayer, and the amount of Leuprolide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.
As a result, as shown in Figure 31, compared to the negative control group, significantly higher permeability ($P_{app}$) for Leuprolide was confirmed in the groups treated with 50 μM and 100 μM of the G4-PEG-c19kLAWmax conjugate.

**<Example 32> Effect of enhancing absorption of peptide drugs using PAMAM dendrimer-polyethylene glycol-KLAW peptide conjugate as absorption enhancer (2)**

To confirm the absorption-enhancing effect on peptide drugs with fatty acids, the absorption-enhancing effect of the prepared PAMAM dendrimer-polyethylene glycol-KLAW peptide conjugate on Semaglutide (molecular weight 4113.6 Da) was observed in a Caco-2 cell monolayer membrane.
First, the PAMAM-dendrimer-polyethylenglycol-KLAW peptide conjugate was mixed using HBSS as a solvent to a preset concentration, and Semaglutide was mixed using HBSS as a solvent to a concentration of 200 μM. As a representative example of the PAMAM dendrimer-polyethylene glycol-KLAW peptide conjugate, G4-PEG-c19KLAWmax was used.
Samples of each condition were treated on the upper part of a Caco-2 cell monolayer membrane, and then cultured at 37°C, 5% $CO_2$ for 30 minutes. After removing the samples from both the upper part (donor site) and the lower part (acceptor site) of the monolayer, the prepared Semaglutide samples were treated on the upper part of the cell monolayer membrane and then cultured at 37C, 5% $CO_2$ for another 30 minutes. Then, 200 microliters of samples were taken from the upper part (donor site) and the lower part (acceptor site) of the monolayer, and the amount of Semaglutide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.
As a result, as shown in Figure 32, compared to the negative control group, significantly higher permeability ($P_{app}$) for Semaglutide was confirmed in the groups treated with 30 μM and 50 μM of the G4-PEG-c19kLAWmax conjugate. In addition, the group treated with 50 μM of the G4-PEG-c19kLAWmax conjugate showed higher absorption for Semaglutide compared to the control group treated with 10 μM of the KLAW peptide.

**<Example 33> Effect of enhancing absorption of peptide drugs using PAMAM dendrimer-polyethylene glycol-KLAW peptide conjugate as absorption enhancer (3)**

To confirm the absorption-enhancing effect on Teriparatide, a peptide drug corresponding to 34 amino acid residues from the N-terminus of parathyroid hormone (PTH) and having a molecular weight of approximately 4 kDa (PTH(1-34), molecular weight 4,117.77 Da), the absorption-enhancing effect of the prepared PAMAM dendrimer-polyethylene glycol-KLAW peptide conjugate on Teriparatide was observed in a Caco-2 cell monolayer membrane (figure 33).
First, the PAMAM-dendrimer-polyethylene glycol-KLAW peptide conjugate was mixed using HBSS as a solvent to a preset concentration, and Teriparatide was mixed using HBSS as a solvent to a concentration of 400 μM. As a representative example of the PAMAM dendrimer-polyethylene glycol-KLAW peptide conjugate, G4-PEG-c19KLAWmax was used.
Samples of each condition were treated on the upper part of a Caco-2 cell monolayer membrane, and then cultured at 37°C, 5% $CO_2$ for 30 minutes. Then, 200 microliters of samples were taken from the upper part (donor site) and the lower part (acceptor site) of the monolayer, and the amount of Teriparatide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.
As a result, as shown in Figure 33, compared to the negative control group, significantly higher permeability ($P_{app}$) for Teriparatide was confirmed in the group treated with 50 μM of the G4-PEG-c19kLAWmax conjugate. In addition, the group treated with 50 μM of the G4-PEG-c19kLAWmax conjugate showed higher absorption for Teriparatide compared to the control group treated with 5 μM of the KLAW peptide.

**<Example 34> Effect of enhancing absorption of protein drugs using PAMAM dendrimer-polyethylene glycol-KLAW peptide conjugate as absorption enhancer**

To confirm the absorption-enhancing effect on antibody drugs, the absorption-enhancing effect of the prepared PAMAM dendrimer-polyethylene glycol-KLAW peptide conjugate on human immunoglobulin-G (molecular weight approximately 150 kDa) was observed in a Caco-2 cell monolayer membrane.

First, human immunoglobulin-G was mixed using HBSS as a solvent to a final concentration of 20 mg/mL, and the PAMAM dendrimer-polyethylene glycol-KLAW peptide conjugate was mixed using HBSS as a solvent to a preset concentration. As a representative example of the PAMAM dendrimer-polyethylene glycol-KLAW peptide conjugate, G4-PEG-c19KLAWmax was used. Samples of each condition were treated into Transwells that had formed a Caco-2 cell monolayer by culturing for 21 days, and then cultured at 37°C, 5% $CO_2$ for 1 hour. To determine the concentration of human immunoglobulin-G to be treated on the upper part (donor site) of the monolayer membrane for the calculation of the apparent permeability coefficient, the concentration of human immunoglobulin-G before mixing with G4-PEG-c19KLAWmax was measured using Lunatic (Unchained Labs, CA, USA), a UV-Vis spectrophotometer, and the final concentration of human immunoglobulin-G was diluted to 20 mg/mL. After the permeability test, samples were taken from the lower part (acceptor site) of the monolayer and analyzed by the fluorescamine assay.

As a result, as shown in Figure 34, in the negative control group that was not treated with the absorption enhancer, the permeated amount of human immunoglobulin-G was below the quantification limit, but the groups treated with the G4-PEG-c19KLAWmax conjugate at concentrations of 30 μM and 50 μM showed higher permeability and dose-dependent permeation enhancement for human immunoglobulin-G compared to the control group.

## Claims

1. A multi-arm polyethylene glycol-KLA peptide conjugate **characterized by** having a structure represented by any one of the following formulas 2 to 4:

[Formula 2]

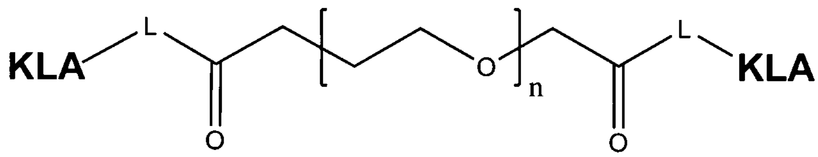

[Formula 3]

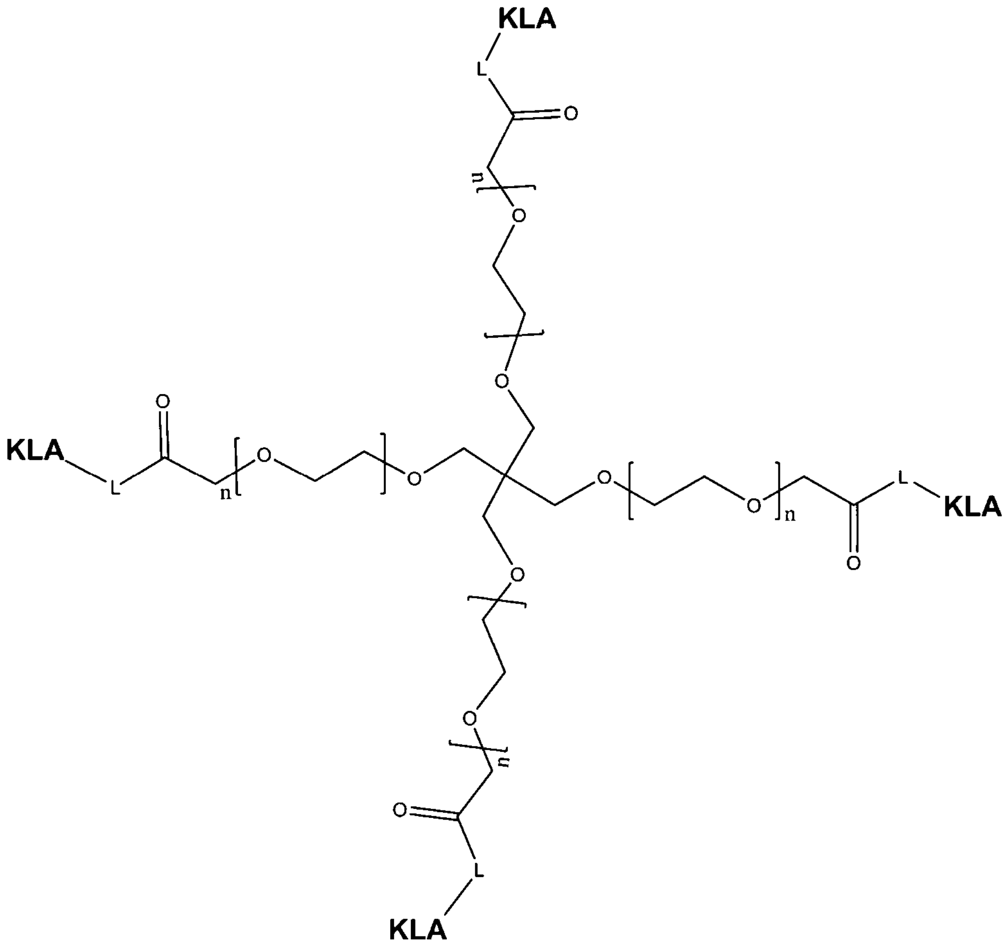

[Formula 4]

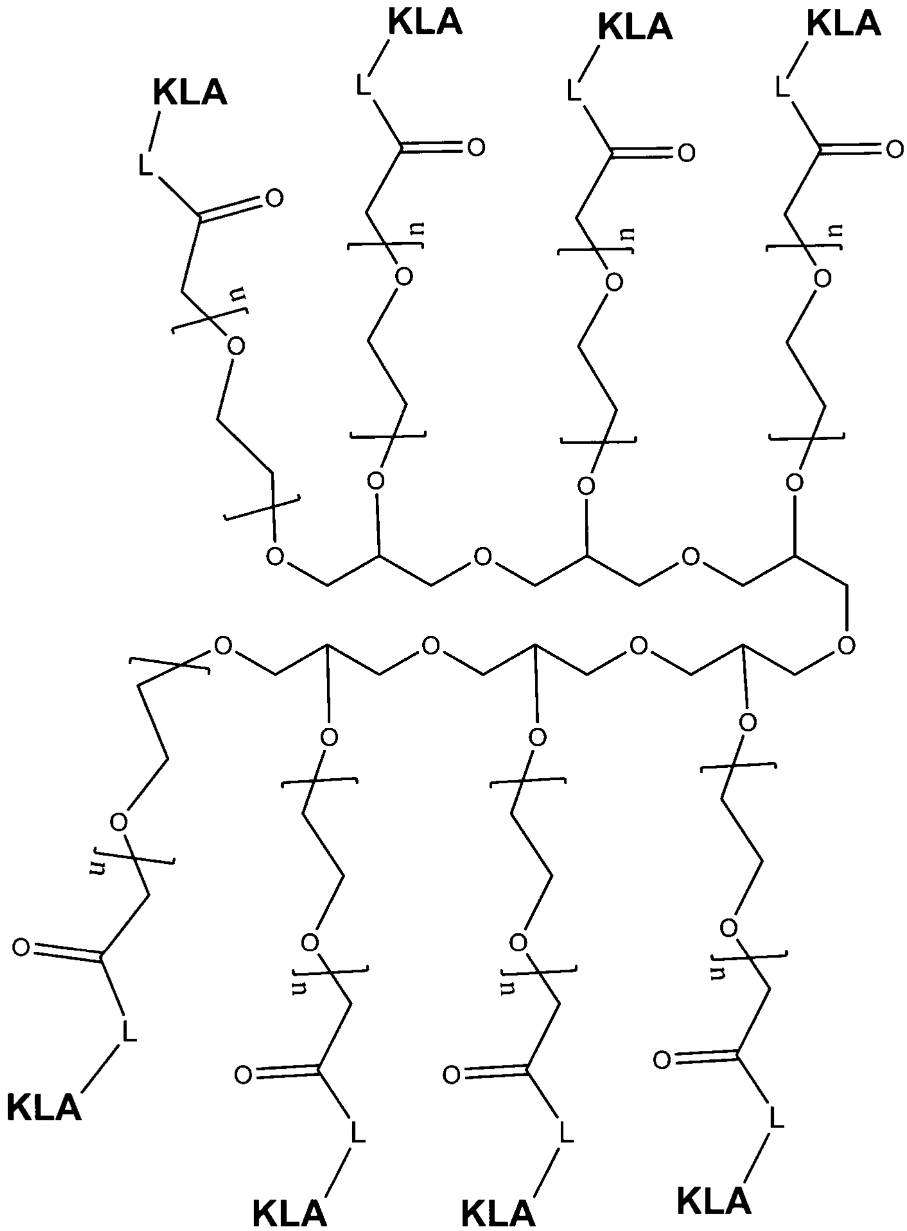

Herein,

KLA is a polypeptide with a length of 12 to 32 amino acids composed of Lys, Leu, and Ala,
L is a linker, and
n is 2 to 2000.

2. The conjugate according to claim 1, wherein the n is 10 to 500.

3. A PEGylated distearoyl phosphatidylethanolamine-KLA peptide conjugate **characterized by** having a structure represented by the following formula 5:

[Formula 5]

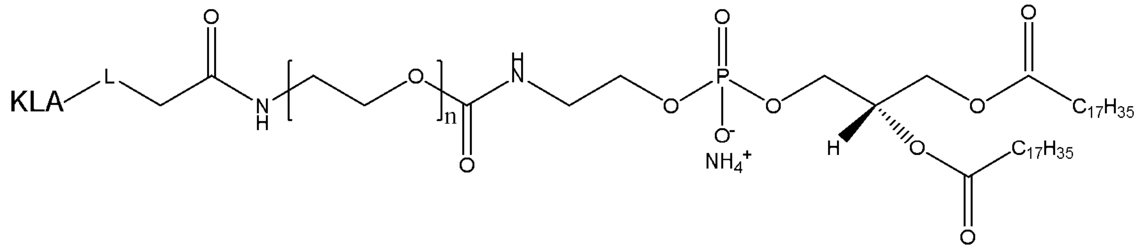

Herein,

KLA is a KLAL peptide or a modified KLAL peptide, wherein the KLAL peptide is a polypeptide having a length of 12 to 32 amino acids composed of three kinds of amino acids, Lys, Leu, and Ala, and the modified KLAL peptide is a polypeptide having a length of 13 to 40 amino acids composed of three kinds of amino acids, Lys, Leu, and Ala, plus one to two additional amino acids selected from Trp and Cys,
L is a linker, and
n is 2 to 1000.

**4.** The conjugate according to claim 3, wherein the n is 20 to 200.

**5.** A polyamidoamine dendrimer-polyethylene glycol linker-KLA peptide conjugate **characterized by** having a structure represented by the following formula 6:

[Formula 6] D - (L)a - (K)b

Herein,

D is a polyamidoamine (PAMAM) dendrimer of generation 0 (G0) to generation 7 (G7) with an amine group as the terminal;
L is a linker, which is a polyethylene glycol (PEG) linker structure containing 5 to 100 ethylene glycol structures;
a is the number of Ls conjugated to one D;
K is a KLA peptide or a variant thereof that has a tight junction modulation function;
KAL peptide (KLA) refers to a polypeptide containing 9 to 30 repeating links of Lys, Leu, and Ala;
The conjugate is a compound in which multiple Ks are chemically bonded to one molecule of D via the linker L; and
b is the number of Ks conjugated to one D.

**6.** The conjugate according to claim 5, wherein the polyamidoamine dendrimer of D is selected from the group consisting of polyamidoamine dendrimer G0, polyamidoamine dendrimer G1, polyamidoamine dendrimer G2, polyamidoamine dendrimer G3, polyamidoamine dendrimer G4, polyamidoamine dendrimer G5, polyamidoamine dendrimer G6, and polyamidoamine dendrimer G7.

**7.** The conjugate according to claim 5, wherein the L is a linker structure represented by the following formula 7.

[Formula 7] $R^1$-$Y^1$-$(CH_2CH_2O)_n$-$Y^2$-$R^2$

In the above formula, n is an integer of 10 to 100;
$Y^1$ and $Y^2$ denote $-Z^1-(CH_2)_{m1}-Z^2-$, $-Z^1-(CH_2)_{m1}-Z^2-(CH_2)_{m2}-$, amide bonds or single bonds, and m1 and m2 independently denote integers of 1 to 5, respectively;
$Z^1$ and $Z^2$ independently represent an ether bond, a urethane bond, an amide bond, a secondary amino group, a carbonyl group, or a single bond; and
$R^1$ and $R^2$ independently comprise a functional group selected from the group consisting of the following formulas (a) to (h).

(a) 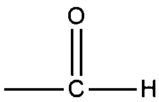

(e) 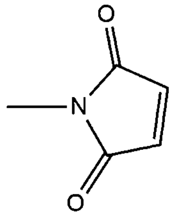

(b) 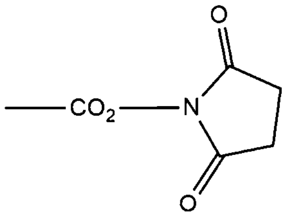

(f) 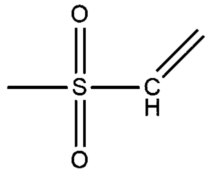

(c) 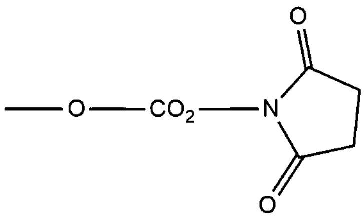

(g) 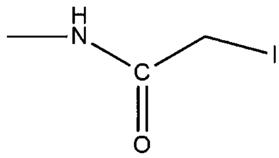

(d) 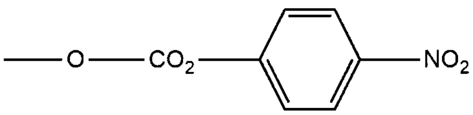

(h) 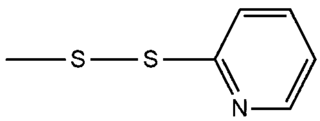

**8.** The conjugate according to claim 5, wherein the L is a polyethylene glycol linker structure comprising 5 to 100 integer units of ethylene glycol structure, and containing at both ends as a linker structure, any one of carbonyl, amide, urethane, secondary amine, thioether, succinimidyl thioether, disulfide or hydrazone.

**9.** The conjugate according to claim 5, wherein the a represents the number of L molecules bound to one D molecule,

when D is polyamidoamine dendrimer G0, a is 1 to 4,
when D is polyamidoamine dendrimer G1, a is 2 to 8,
when D is polyamidoamine dendrimer G2, a is 3 to 16,
when D is polyamidoamine dendrimer G3, a is 4 to 28,
when D is polyamidoamine dendrimer G4, a is 5 to 56,
when D is polyamidoamine dendrimer G5, a is 6 to 112,
when D is polyamidoamine dendrimer G6, a is 7 to 224, and
when D is polyamidoamine dendrimer G7, a is 8 to 448.

**10.** The conjugate according to claim 1, 3 or 5, wherein the KLA peptide is any one selected from the group consisting of the following Formulas 8 to 16:

[Formula 8]

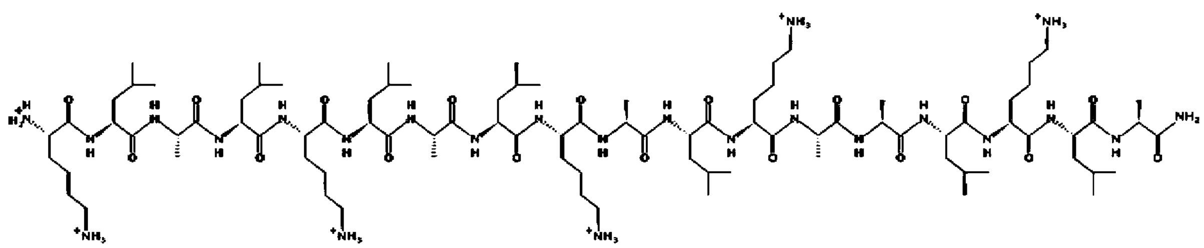

[Formula 9]

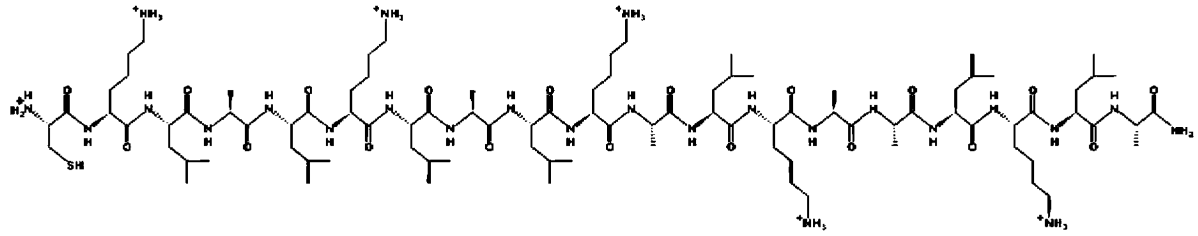

[Formula 10]

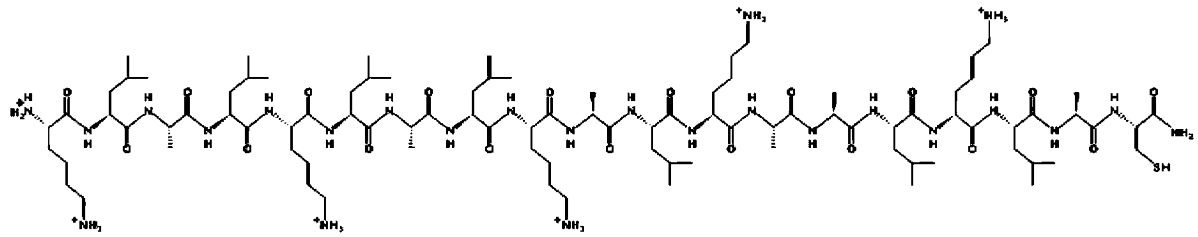

[Formula 11]

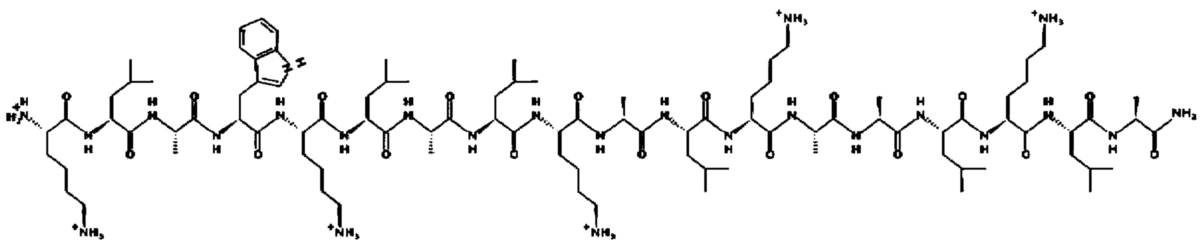

[Formula 12]

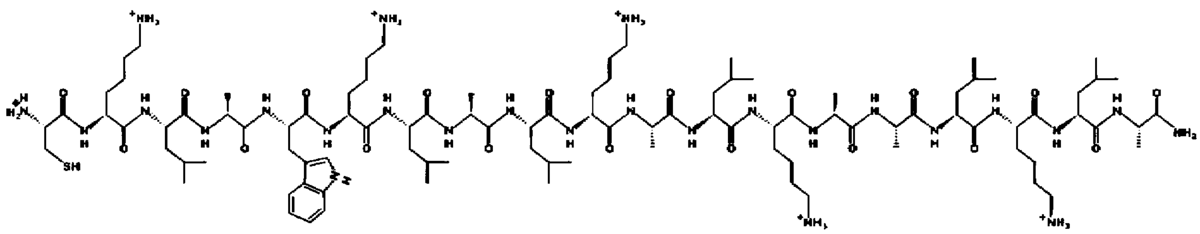

[Formula 13]

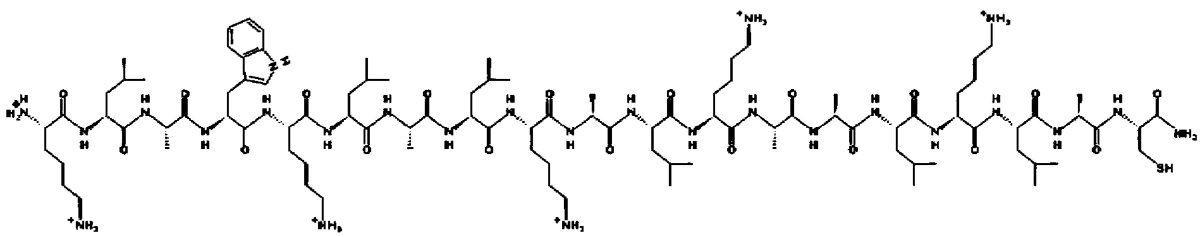

[Formula 14]

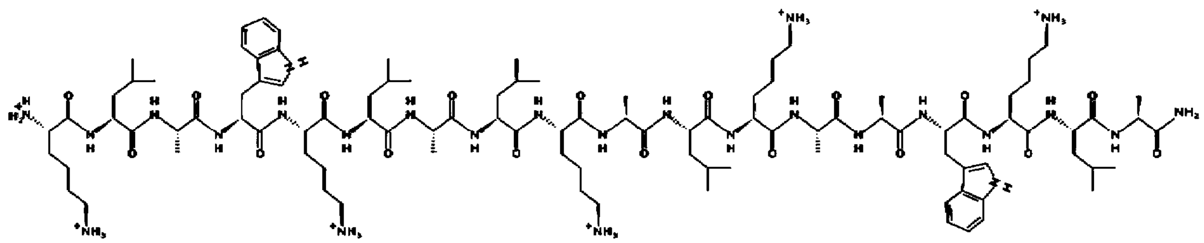

[Formula 15]

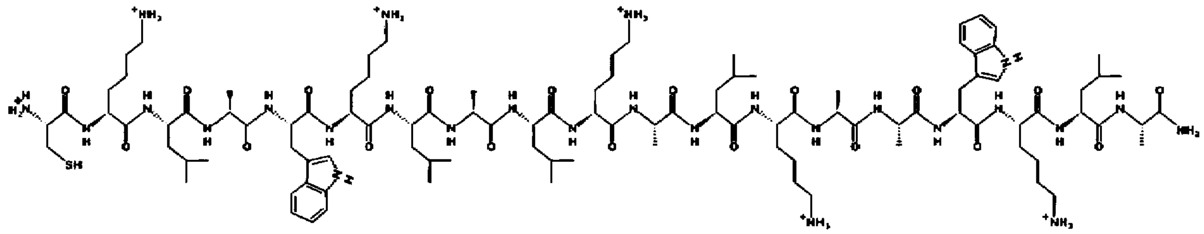

[Formula 16]

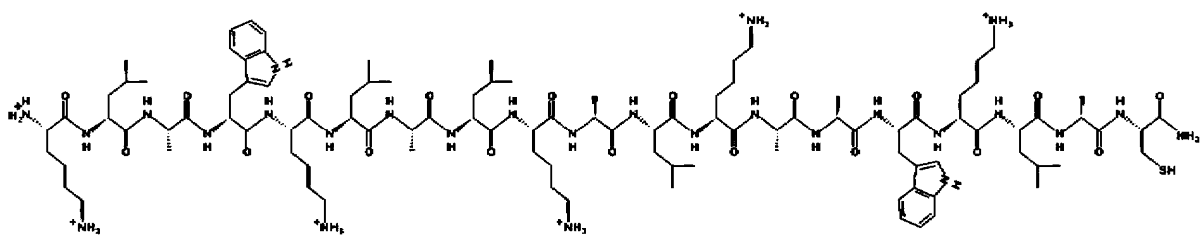

**11.** The conjugate according to claim 1 or 3, wherein the L is represented by the following formula.

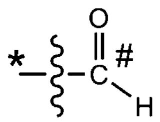

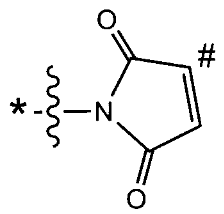

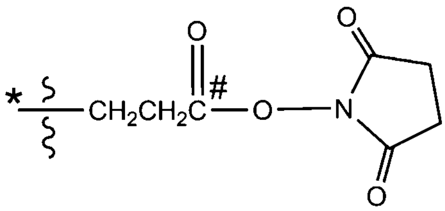

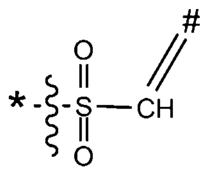

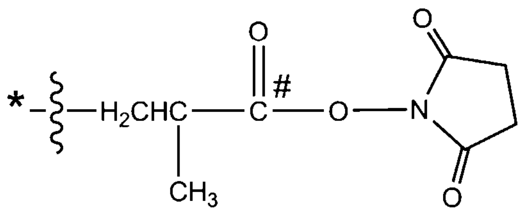

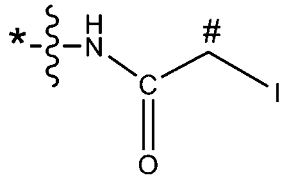

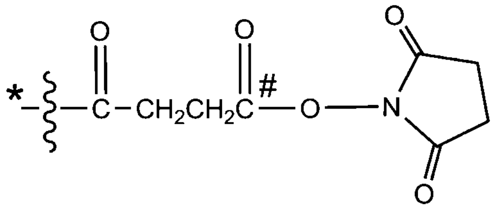 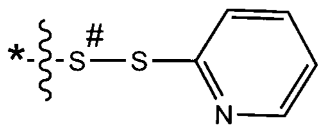

Herein, * indicates the binding point of PEG and the linker L, and # indicates the binding point of the linker L and the KLA structure.

12. The conjugate according to claim 5, wherein the b represents the number of K molecules conjugated to 1 polyamidoamine dendrimer D molecule via the linker L , and the number of K molecules in the D molecule is at least 1 and not more than a.

13. The conjugate according to claim 1, 3 or 5, wherein the KLA peptide modulates tight junctions.

14. The conjugate according to claim 1, 3 or 5, wherein the multi-arm polyethylene glycol-KLA peptide conjugate enhances the absorption of biodrugs for oral administration.

15. The conjugate according to claim 14, wherein the biodrugs are peptides, proteins, polysaccharides, or antibodies.

16. A composition for enhancing absorption of a biodrug for oral administration, comprising the conjugate of any one of claims 1 to 9.

FIG. 1

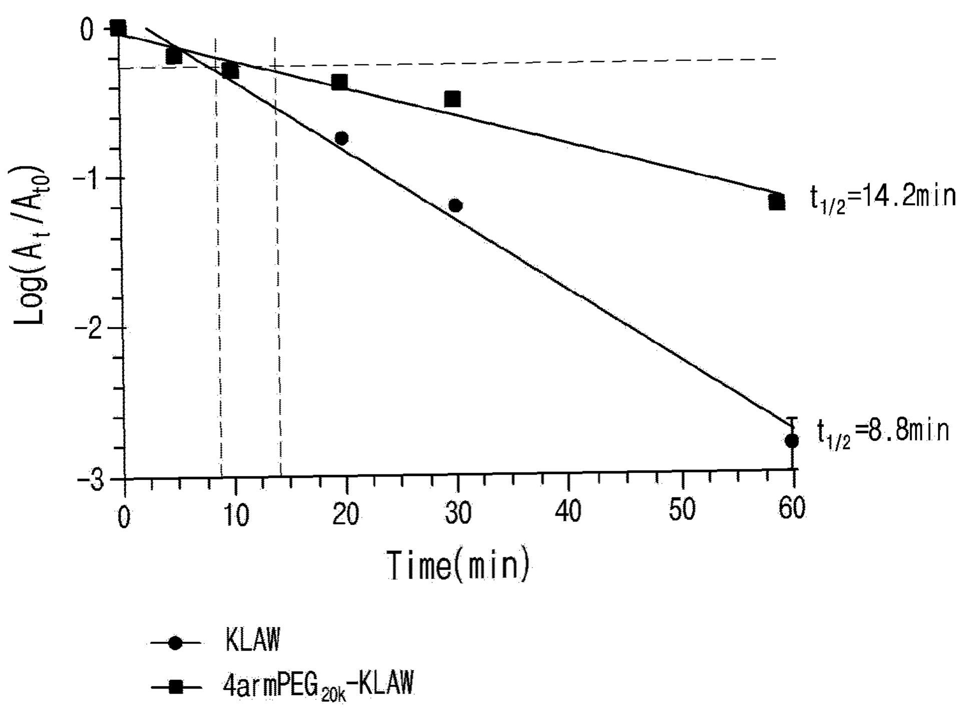
0
-1
-2
-3
Log(At /At0)
0
10
20
30
40
50
60
Time(min)
t1/2=14.2min
t1/2=8.8min
KLAW
4armPEG20k-KLAW

FIG. 2A

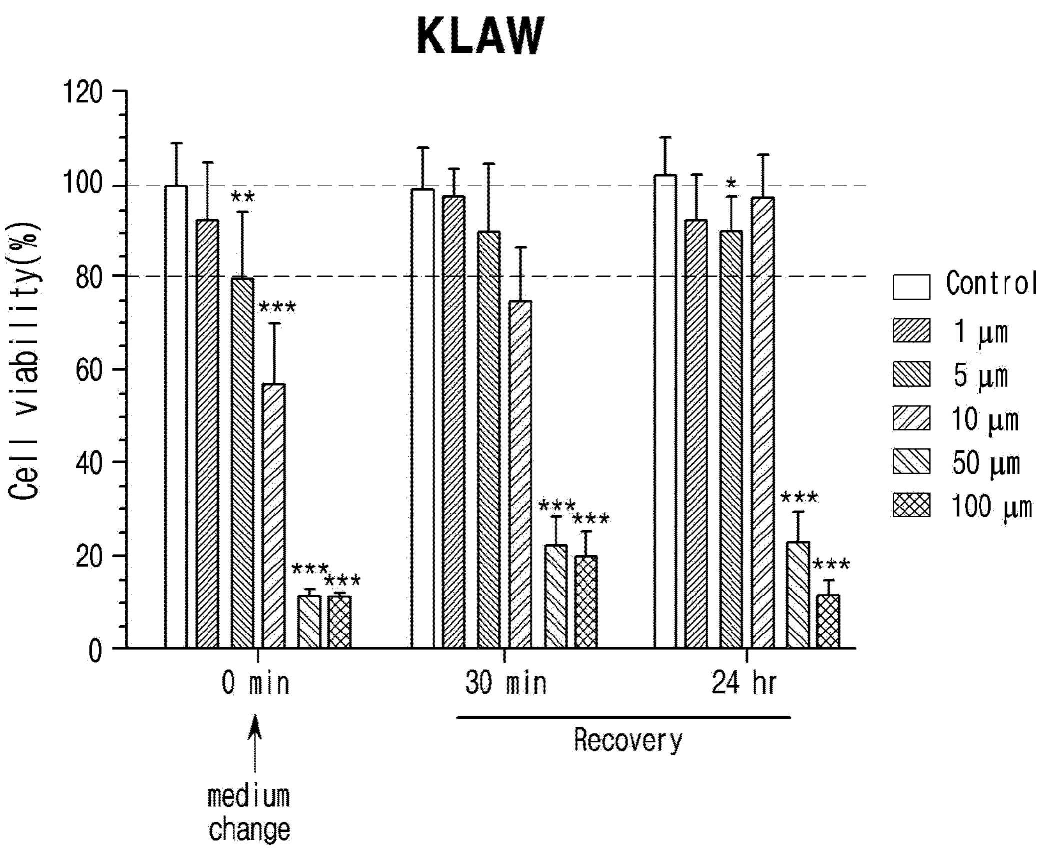
KLAW
Cell viability(%)
120
100
80
60
40
20
0
**
***
***
***
***
***
*
***
***
0 min
30 min
24 hr
Recovery
medium change
Control
1 μm
5 μm
10 μm
50 μm
100 μm

FIG. 2B

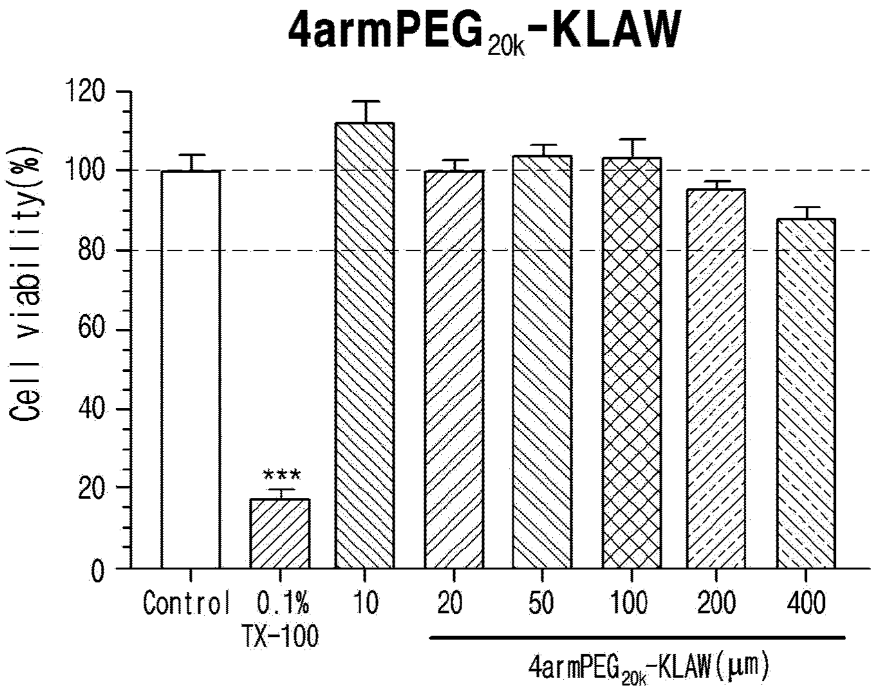
4armPEG20k-KLAW
Cell viability(%)
120
100
80
60
40
20
0
***
Control
0.1%
TX-100
10
20
50
100
200
400
4armPEG20k-KLAW(μm)

FIG. 3A

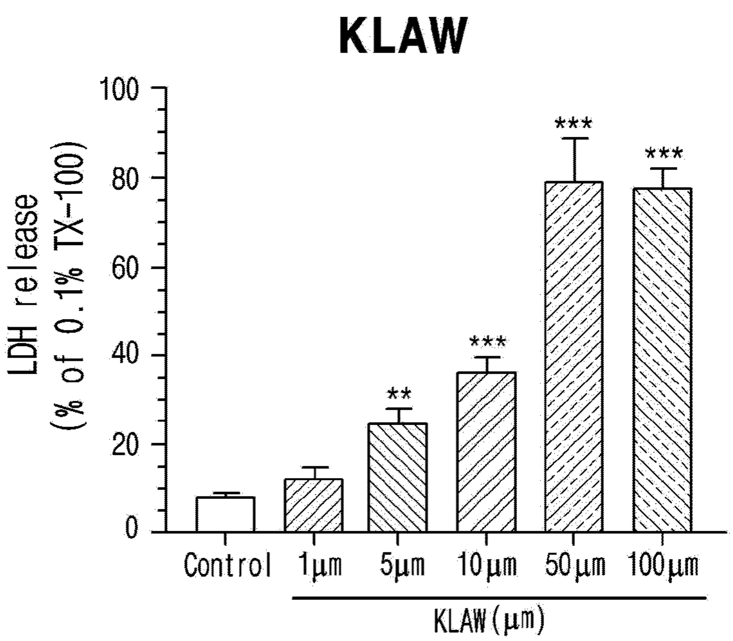
KLAW
LDH release
(% of 0.1% TX-100)
100
80
60
40
20
0
**
***
***
***
Control
1μm
5μm
10μm
50μm
100μm
KLAW(μm)

FIG. 3B

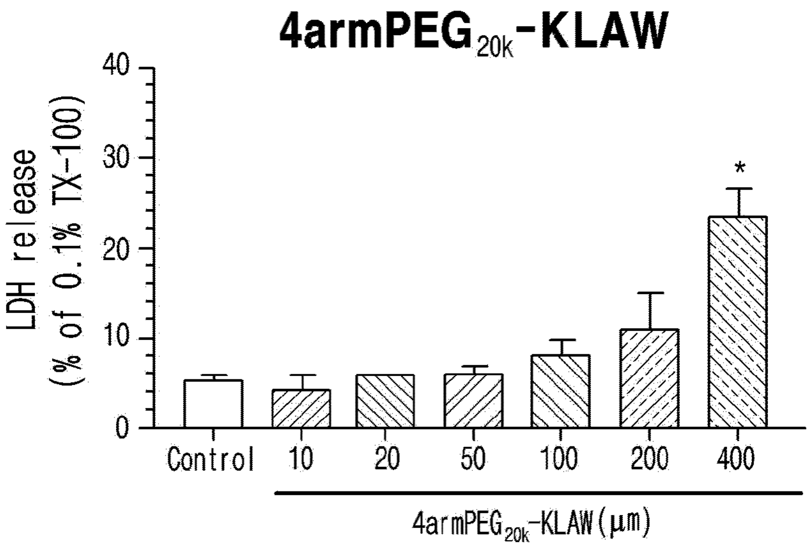
4armPEG20k-KLAW
LDH release
(% of 0.1% TX-100)
40
30
20
10
0
*
Control
10
20
50
100
200
400
4armPEG20k-KLAW(μm)

FIG. 4

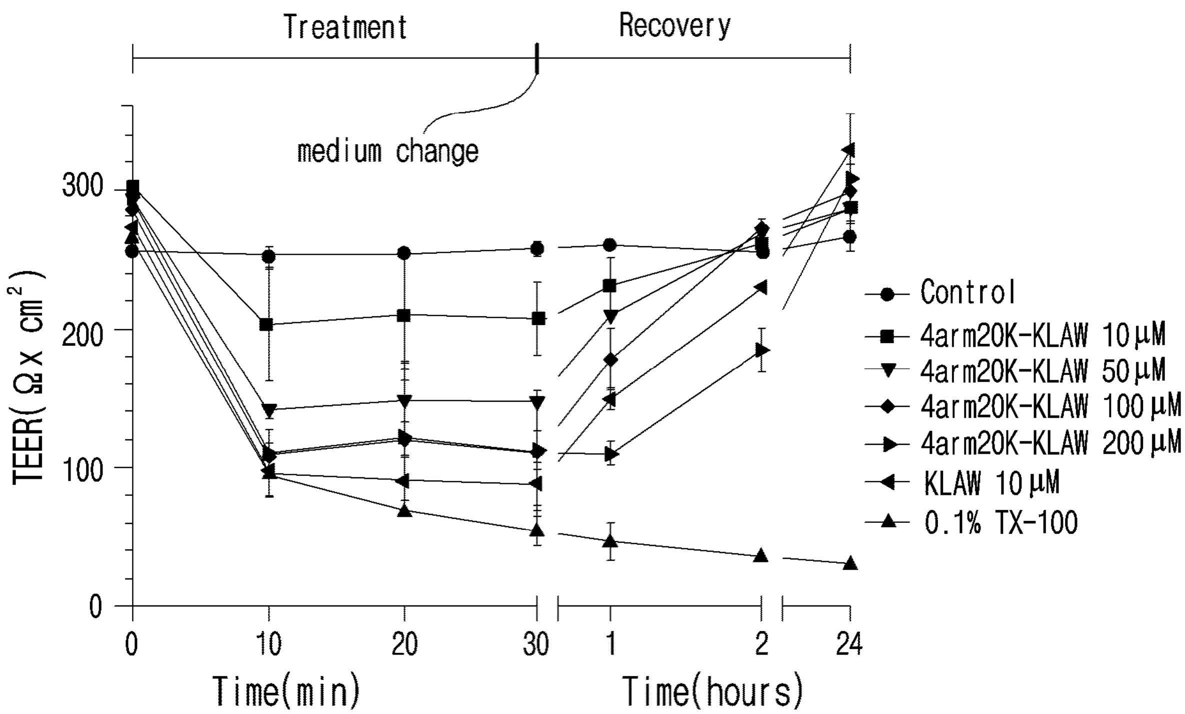
Treatment
Recovery
medium change
TEER(Ω x cm2)
300
200
100
0
0
10
20
30
1
2
24
Time(min)
Time(hours)
Control
4arm20K-KLAW 10 μM
4arm20K-KLAW 50 μM
4arm20K-KLAW 100 μM
4arm20K-KLAW 200 μM
KLAW 10 μM
0.1% TX-100

FIG. 5

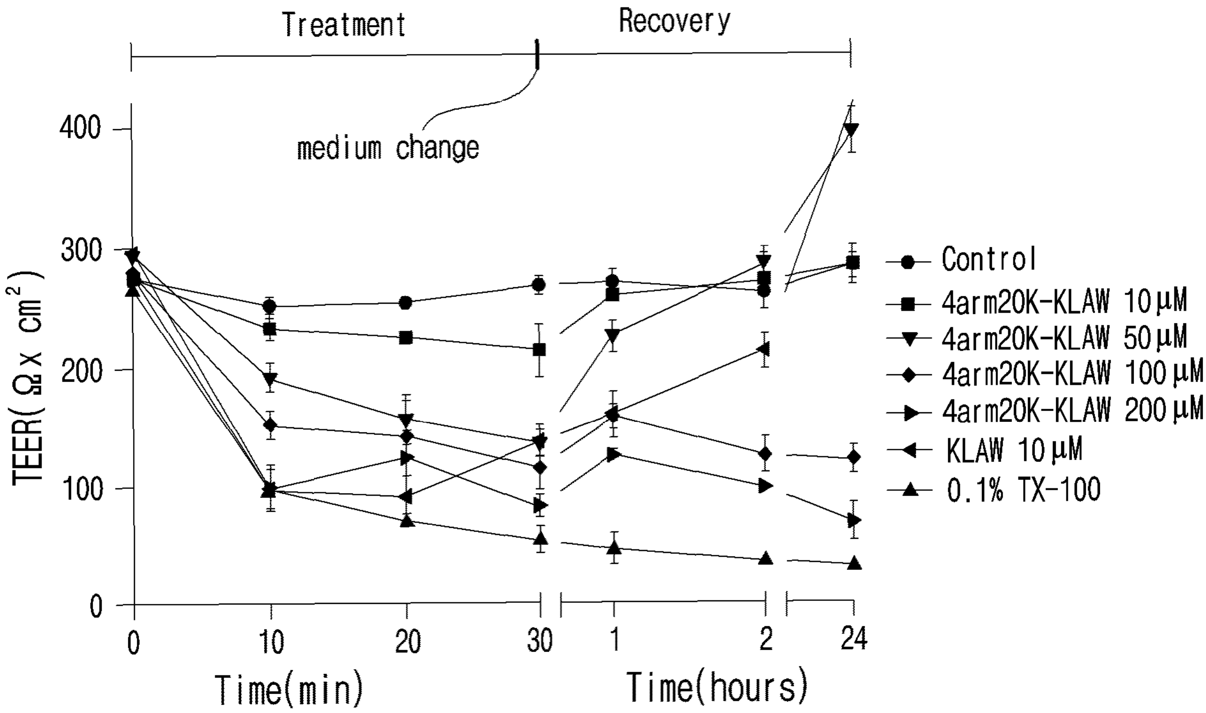

Treatment
Recovery
medium change
TEER(Ω x cm²)
400
300
200
100
0
0
10
20
30
1
2
24
Time(min)
Time(hours)
Control
4arm20K-KLAW 10 μM
4arm20K-KLAW 50 μM
4arm20K-KLAW 100 μM
4arm20K-KLAW 200 μM
KLAW 10 μM
0.1% TX-100

FIG. 6

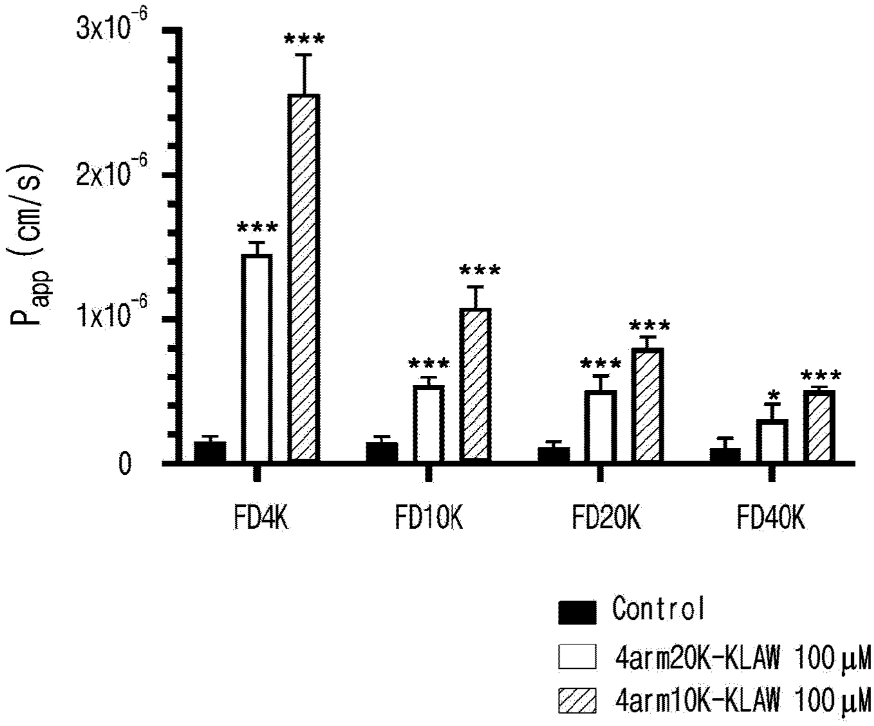
3x10$^{-6}$
2x10$^{-6}$
1x10$^{-6}$
0
$P_{app}$ (cm/s)
***
*
FD4K
FD10K
FD20K
FD40K
Control
4arm20K-KLAW 100 μM
4arm10K-KLAW 100 μM

FIG. 7

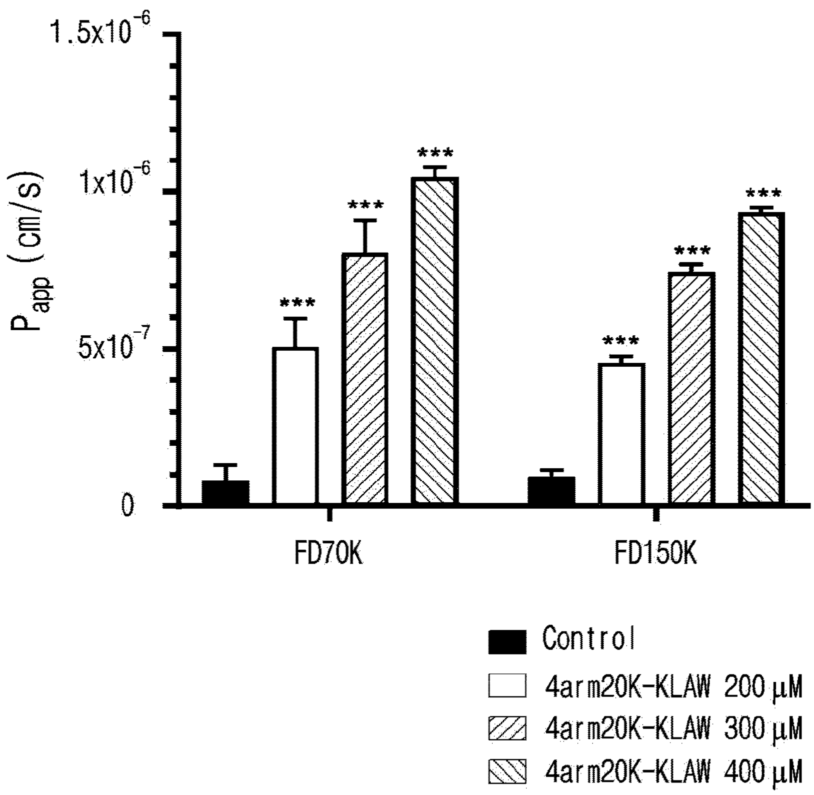
1.5x10^-6
1x10^-6
5x10^-7
0
Papp (cm/s)
***
FD70K
FD150K
Control
4arm20K-KLAW 200 μM
4arm20K-KLAW 300 μM
4arm20K-KLAW 400 μM

FIG. 8

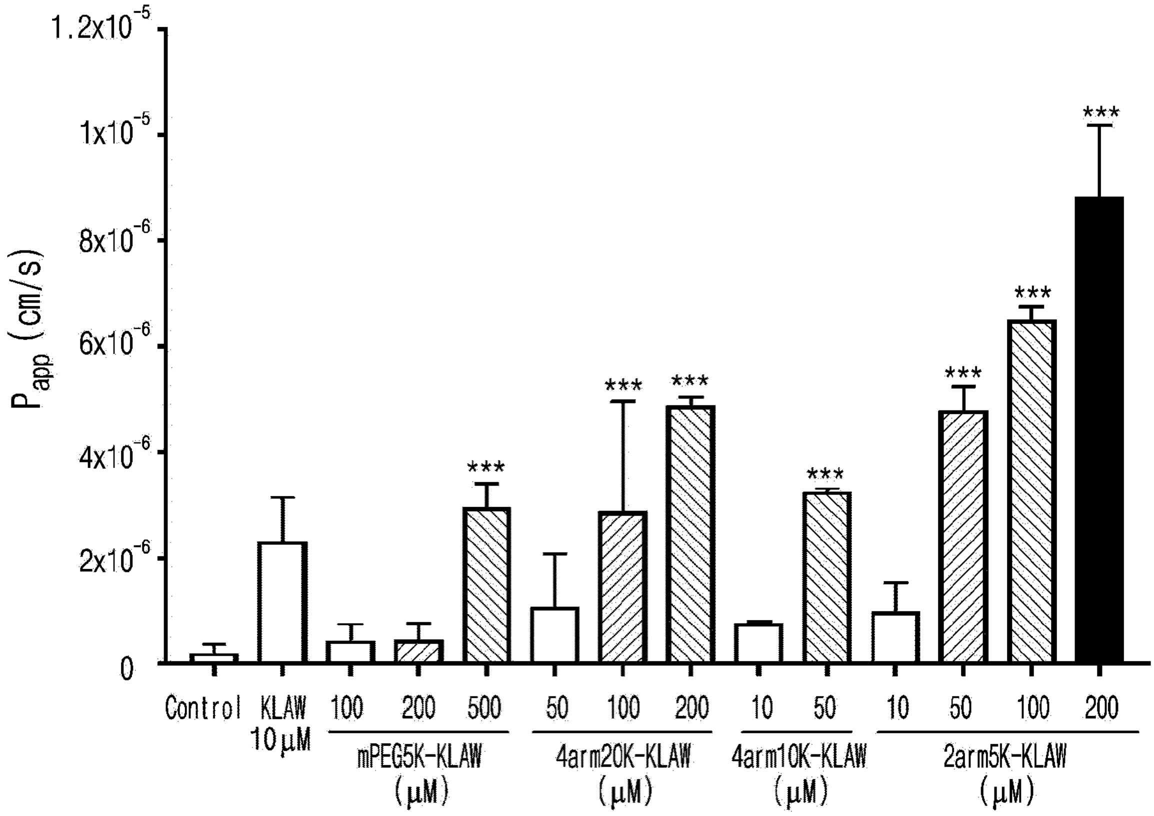
$1.2x10^{-5}$
$1x10^{-5}$
$8x10^{-6}$
$6x10^{-6}$
$4x10^{-6}$
$2x10^{-6}$
0
$P_{app}$ (cm/s)
***
Control
KLAW 10μM
100
200
500
mPEG5K-KLAW (μM)
50
100
200
4arm20K-KLAW (μM)
10
50
4arm10K-KLAW (μM)
10
50
100
200
2arm5K-KLAW (μM)

FIG. 9

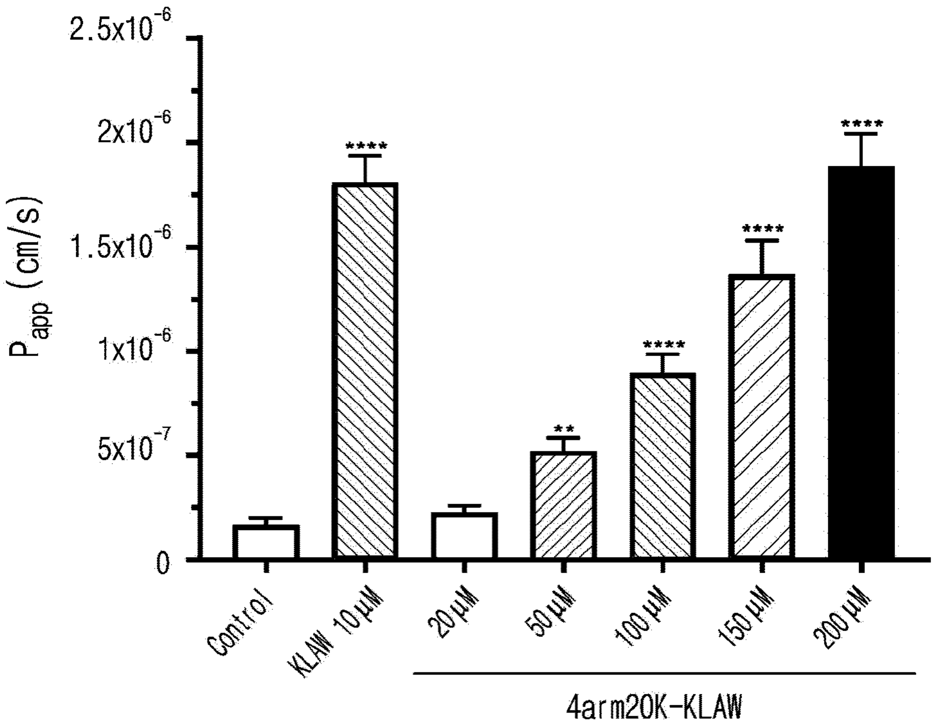
2.5x10^-6
2x10^-6
1.5x10^-6
1x10^-6
5x10^-7
0
P_app (cm/s)
****
****
****
****
**
Control
KLAW 10μM
20μM
50μM
100μM
150μM
200μM
4arm20K-KLAW

FIG. 10

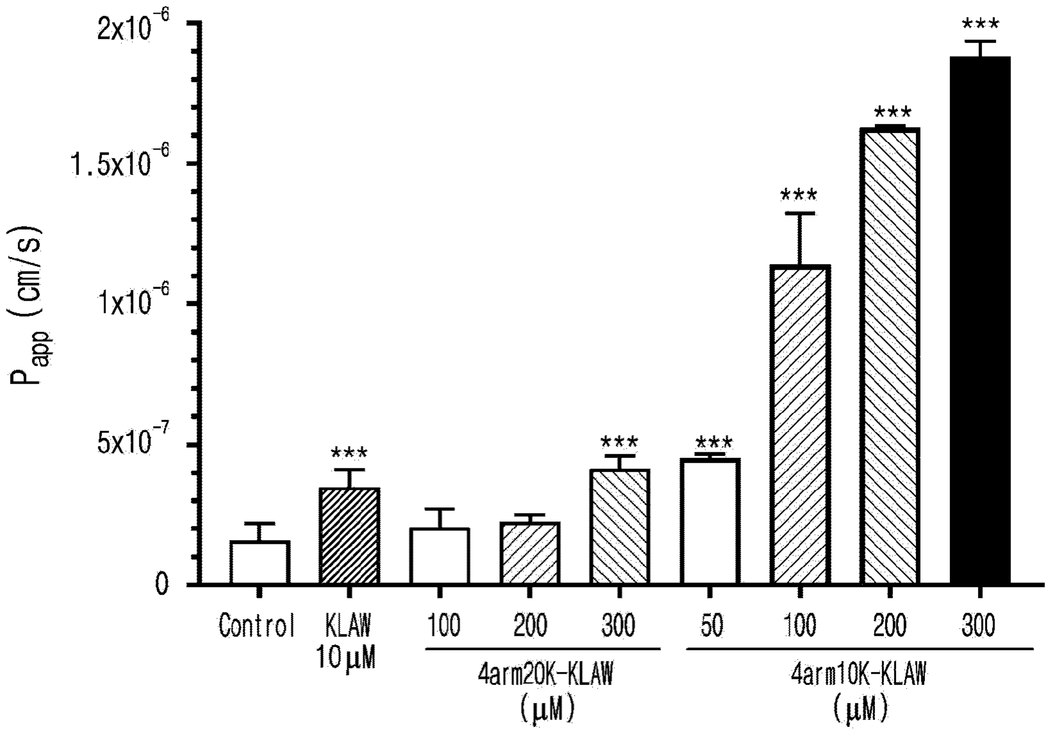
2x10^-6
1.5x10^-6
1x10^-6
5x10^-7
0
P_app (cm/s)
***
***
***
***
***
***
***
Control
KLAW 10μM
100
200
300
4arm20K-KLAW (μM)
50
100
200
300
4arm10K-KLAW (μM)

FIG. 11

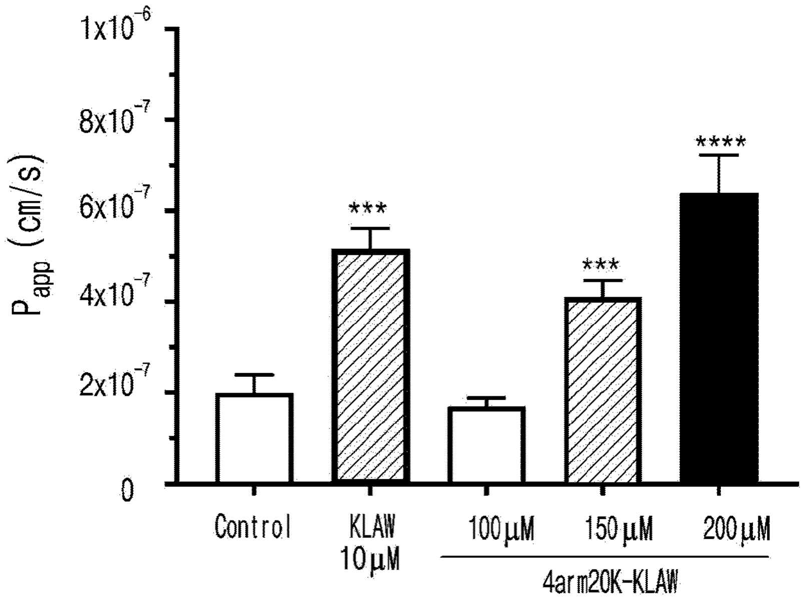
1x10^-6
8x10^-7
6x10^-7
4x10^-7
2x10^-7
0
P_app (cm/s)
***
***
****
Control
KLAW 10μM
100μM
150μM
200μM
4arm20K-KLAW

FIG. 12

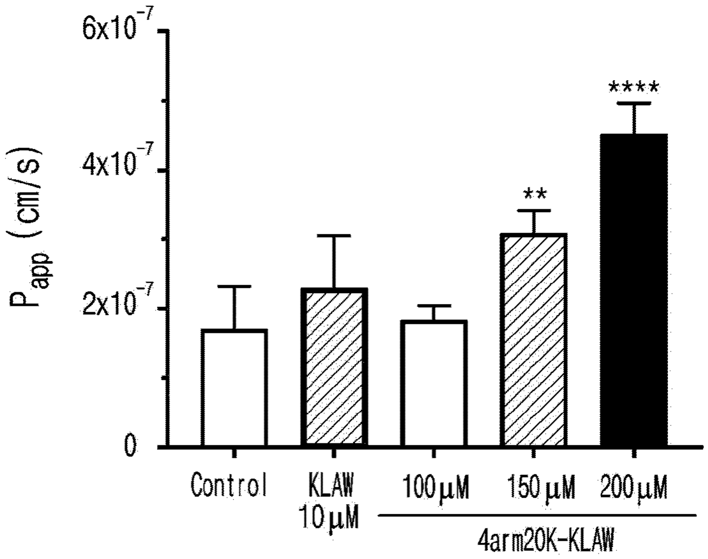
6x10-7
4x10-7
2x10-7
0
Papp (cm/s)
****
**
Control
KLAW
10µM
100µM
150µM
200µM
4arm20K-KLAW

FIG. 13

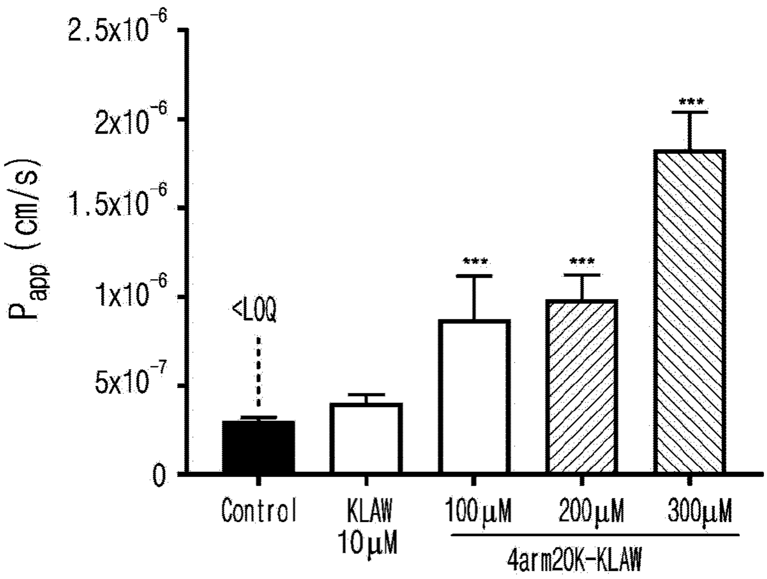
2.5x10-6
2x10-6
1.5x10-6
1x10-6
5x10-7
0
Papp (cm/s)
<LOQ
***
***
***
Control
KLAW
10µM
100µM
200µM
300µM
4arm20K-KLAW

FIG. 14

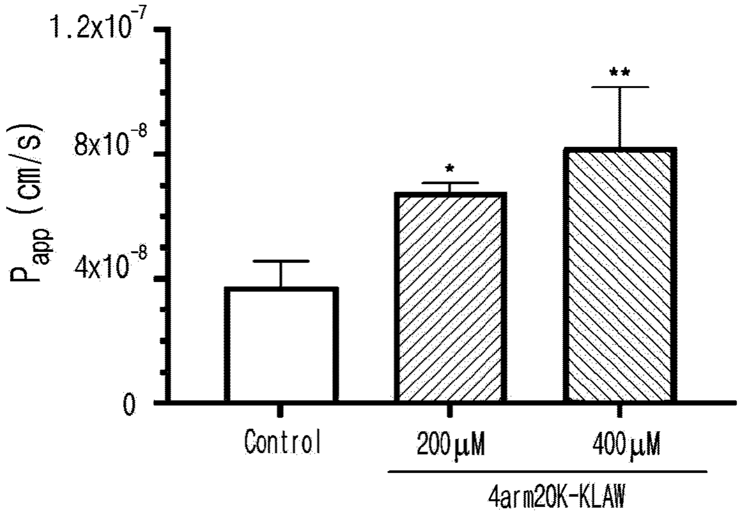
1.2x10^-7
8x10^-8
4x10^-8
0
Papp (cm/s)
**
*
Control
200μM
400μM
4arm20K-KLAW

FIG. 15

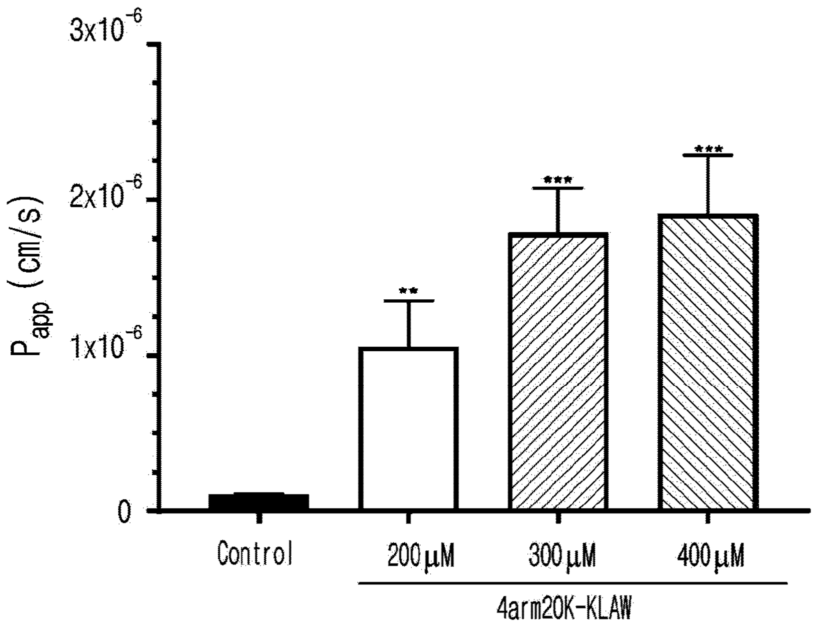
3x10^-6
2x10^-6
1x10^-6
0
Papp (cm/s)
**
***
***
Control
200μM
300μM
400μM
4arm20K-KLAW

FIG. 16

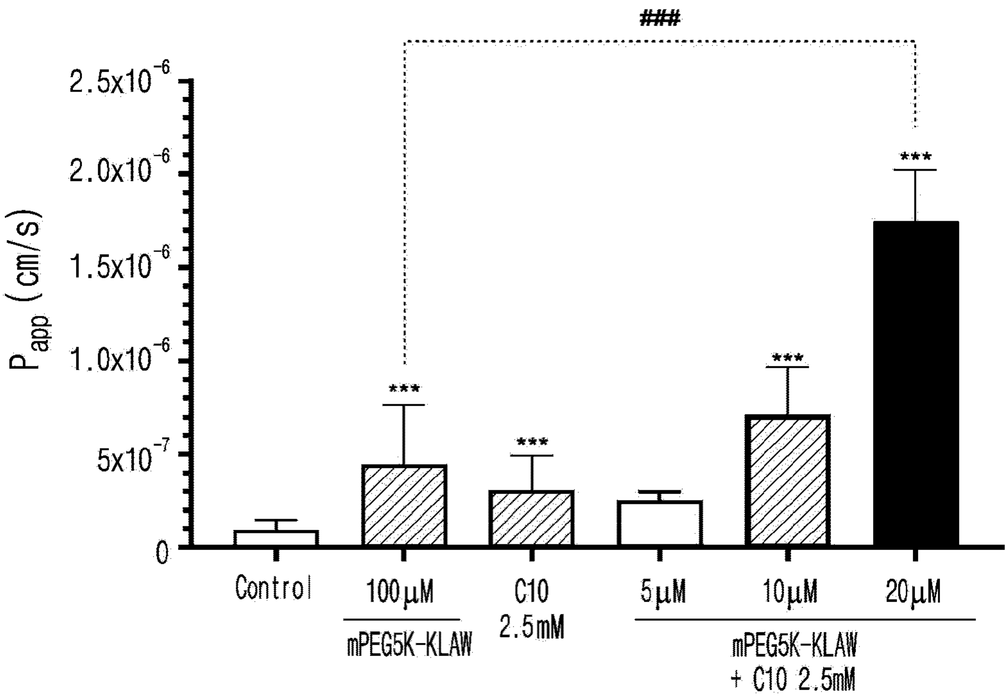
###
2.5x10^-6
2.0x10^-6
1.5x10^-6
1.0x10^-6
5x10^-7
0
P_app (cm/s)
***
***
***
***
Control
100μM
mPEG5K-KLAW
C10
2.5mM
5μM
10μM
20μM
mPEG5K-KLAW
+ C10 2.5mM

FIG. 17

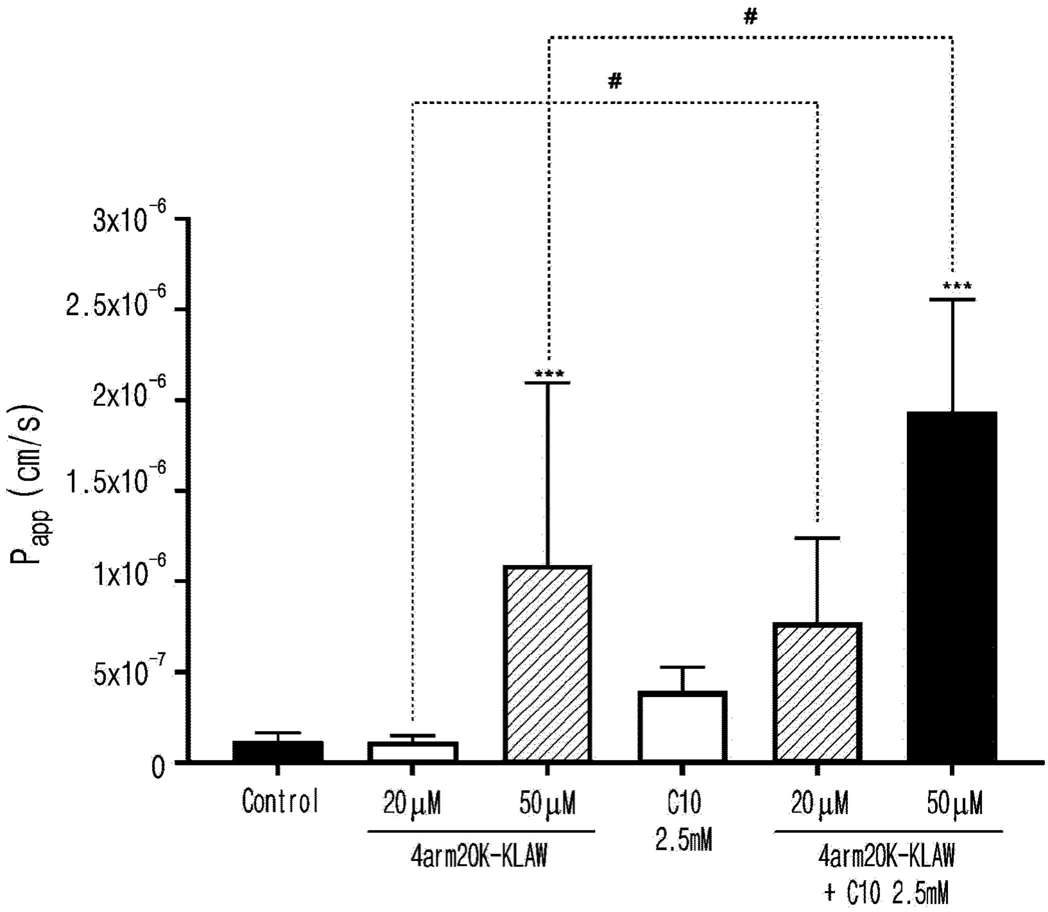
#
#
***
***
3x10^-6
2.5x10^-6
2x10^-6
1.5x10^-6
1x10^-6
5x10^-7
0
Papp (cm/s)
Control
20 µM
50 µM
4arm20K-KLAW
C10
2.5mM
20 µM
50 µM
4arm20K-KLAW
+ C10 2.5mM

FIG. 18

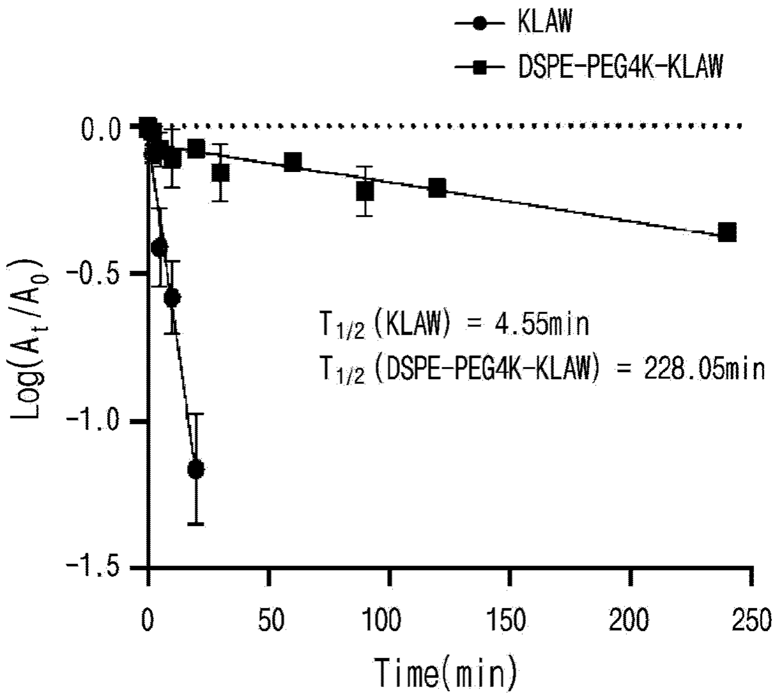
KLAW
DSPE-PEG4K-KLAW
0.0
-0.5
-1.0
-1.5
Log($A_t$/$A_0$)
0
50
100
150
200
250
Time(min)
$T_{1/2}$ (KLAW) = 4.55min
$T_{1/2}$ (DSPE-PEG4K-KLAW) = 228.05min

FIG. 19A

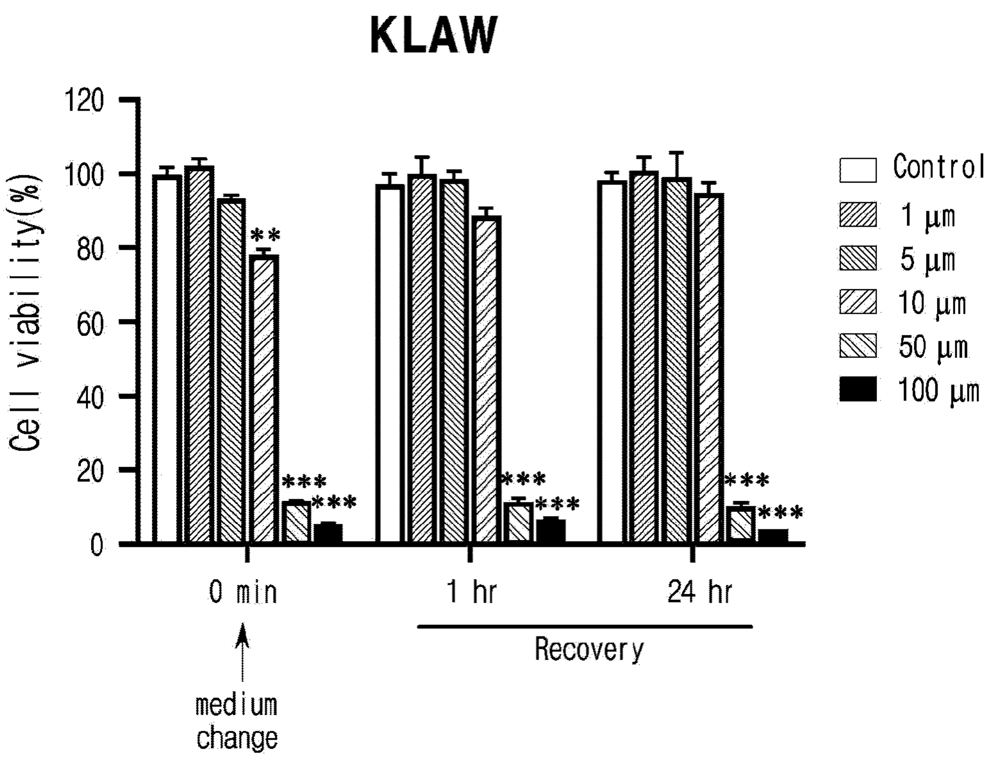
KLAW
Cell viability(%)
120
100
80
60
40
20
0
**
***
***
***
***
***
***
0 min
1 hr
24 hr
Recovery
medium
change
Control
1 µm
5 µm
10 µm
50 µm
100 µm

FIG. 19B

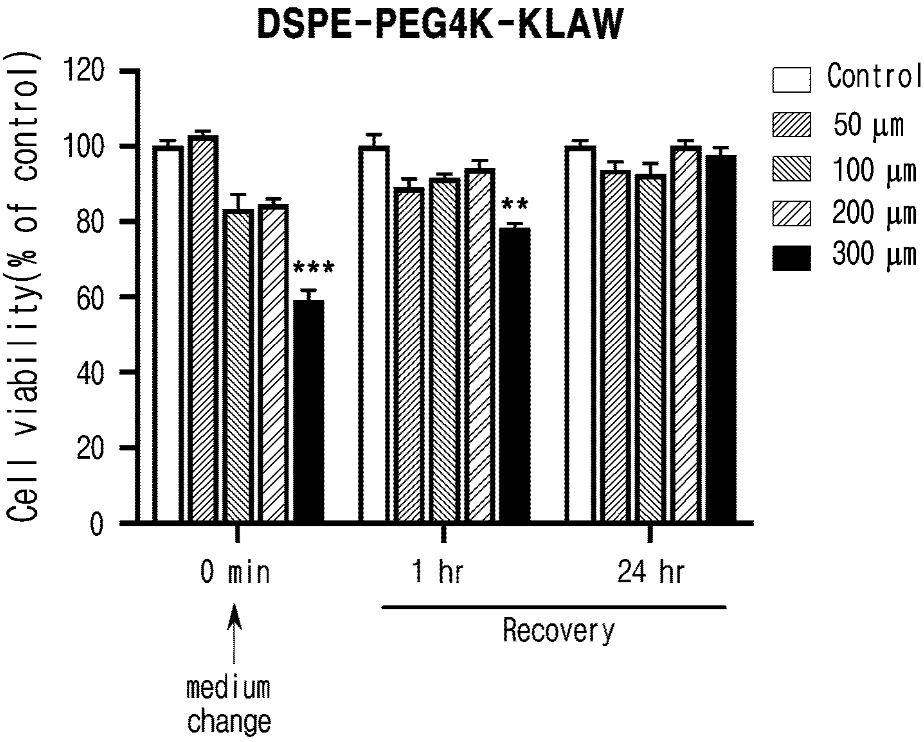


FIG. 20A

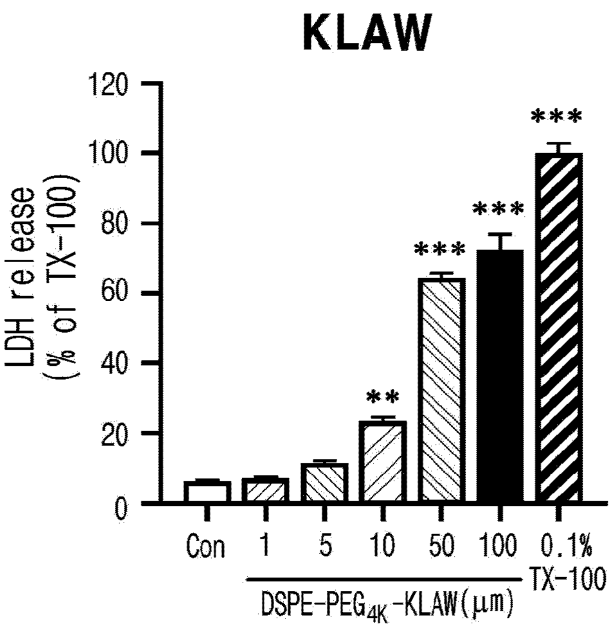

FIG. 20B

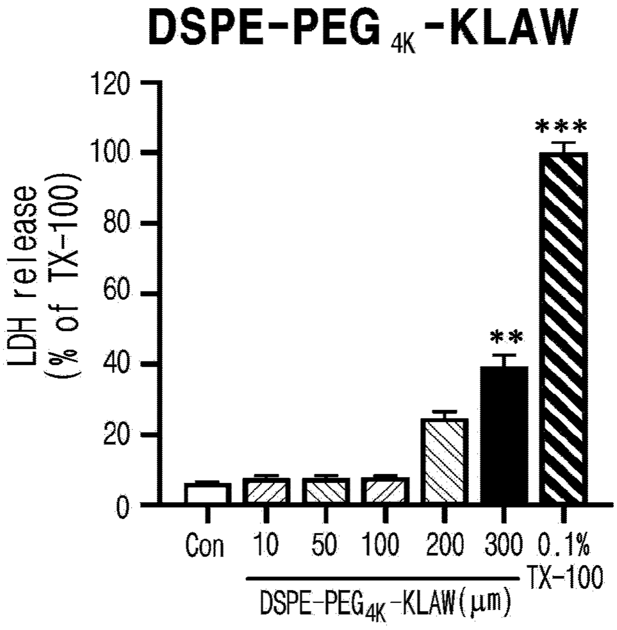


FIG. 21A

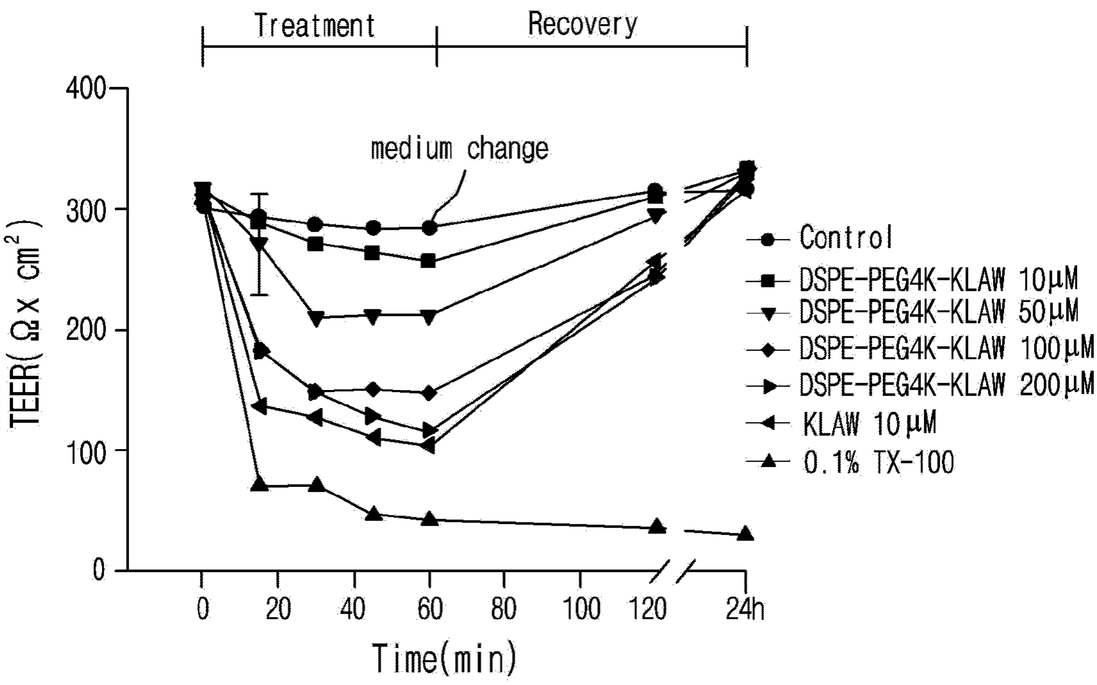

FIG. 21B

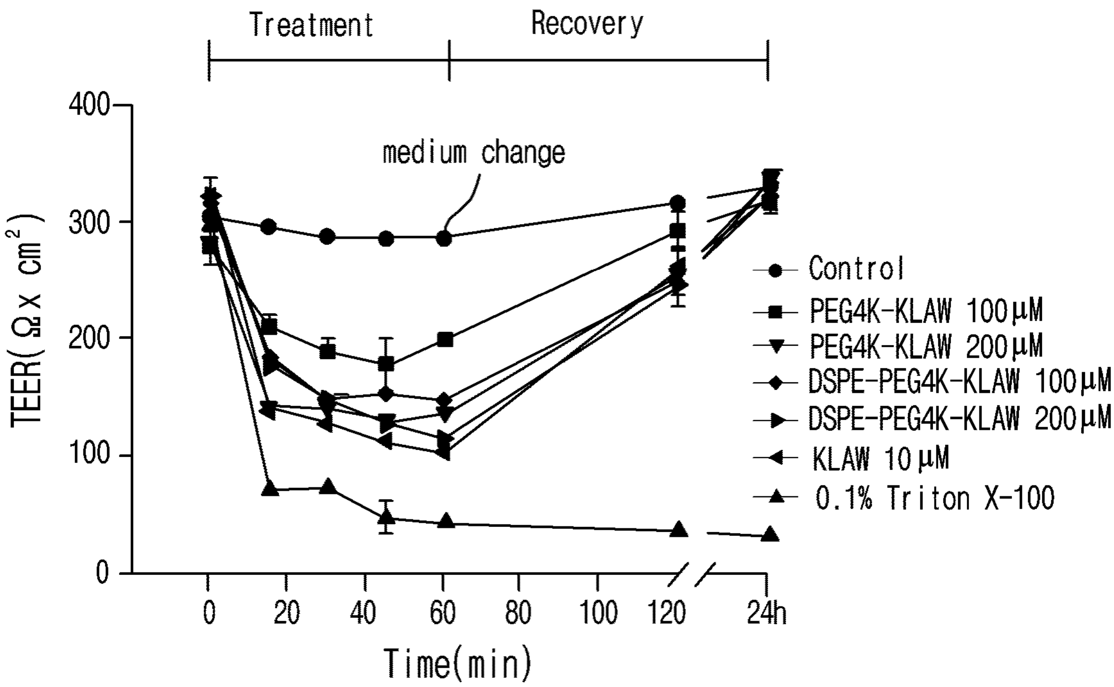
Treatment
Recovery
medium change
TEER( Ω x cm$^2$ )
400
300
200
100
0
0
20
40
60
80
100
120
24h
Time(min)
Control
PEG4K-KLAW 100μM
PEG4K-KLAW 200μM
DSPE-PEG4K-KLAW 100μM
DSPE-PEG4K-KLAW 200μM
KLAW 10μM
0.1% Triton X-100

FIG. 22

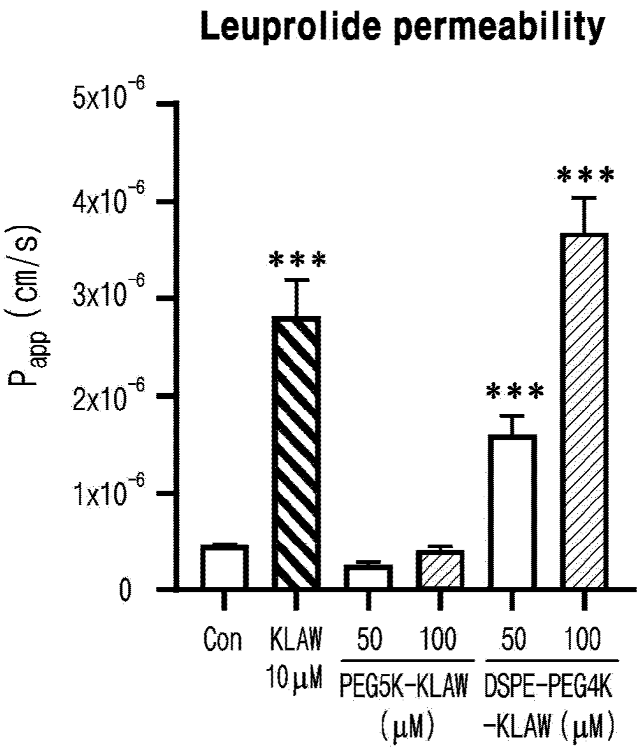
Leuprolide permeability
$P_{app}$ (cm/s)
5x10^-6
4x10^-6
3x10^-6
2x10^-6
1x10^-6
0
***
***
***
Con
KLAW 10 μM
50
100
PEG5K-KLAW (μM)
50
100
DSPE-PEG4K -KLAW (μM)

FIG. 23

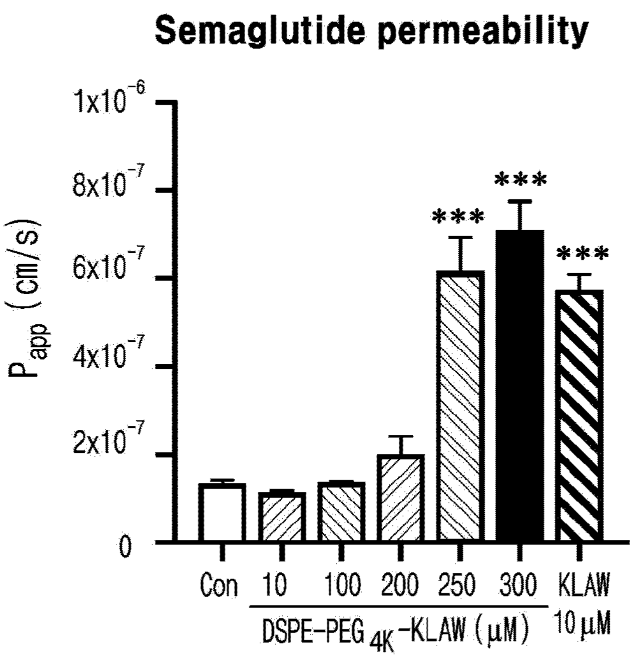
Semaglutide permeability
$P_{app}$ (cm/s)
1x10^-6
8x10^-7
6x10^-7
4x10^-7
2x10^-7
0
***
***
***
Con
10
100
200
250
300
KLAW 10 μM
DSPE-PEG 4K-KLAW (μM)

FIG. 24

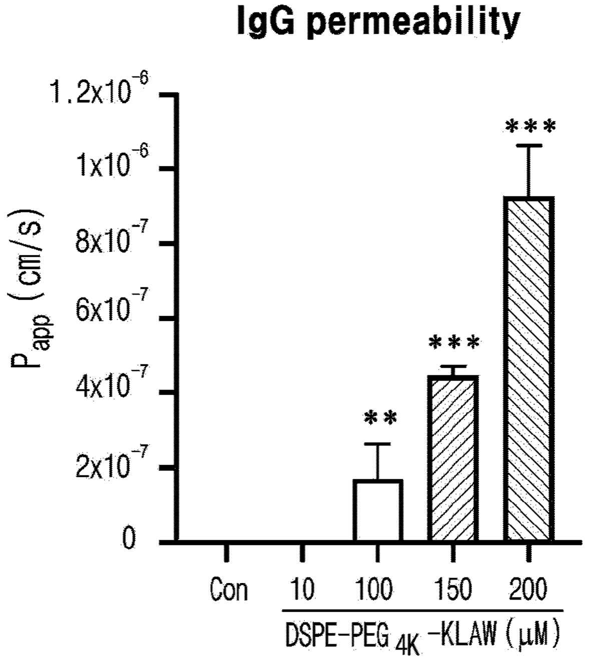
IgG permeability
1.2x10^-6
1x10^-6
8x10^-7
6x10^-7
4x10^-7
2x10^-7
0
Papp (cm/s)
**
***
***
Con
10
100
150
200
DSPE-PEG4K-KLAW (μM)

FIG. 25

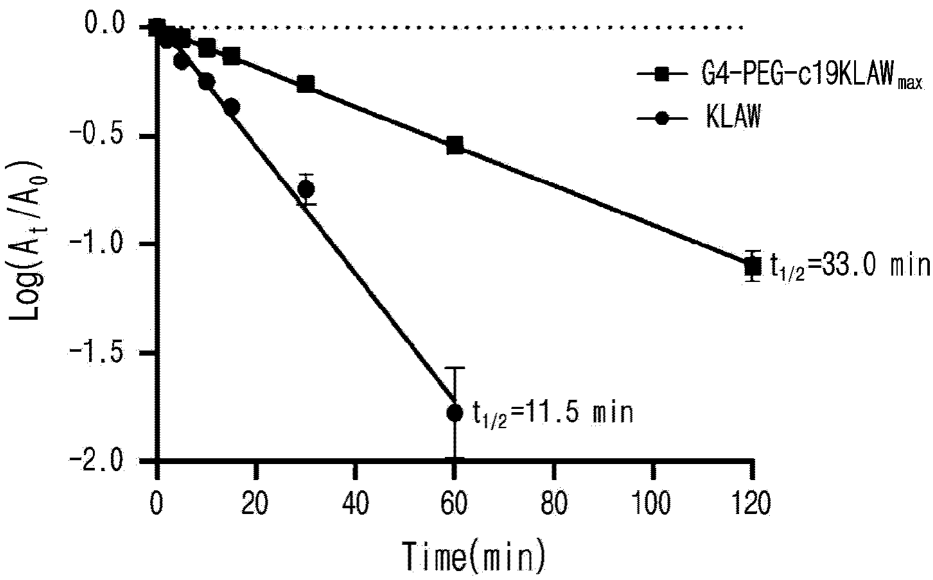
0.0
-0.5
-1.0
-1.5
-2.0
Log(At/A0)
G4-PEG-c19KLAWmax
KLAW
t1/2=33.0 min
t1/2=11.5 min
0
20
40
60
80
100
120
Time(min)

FIG. 26A

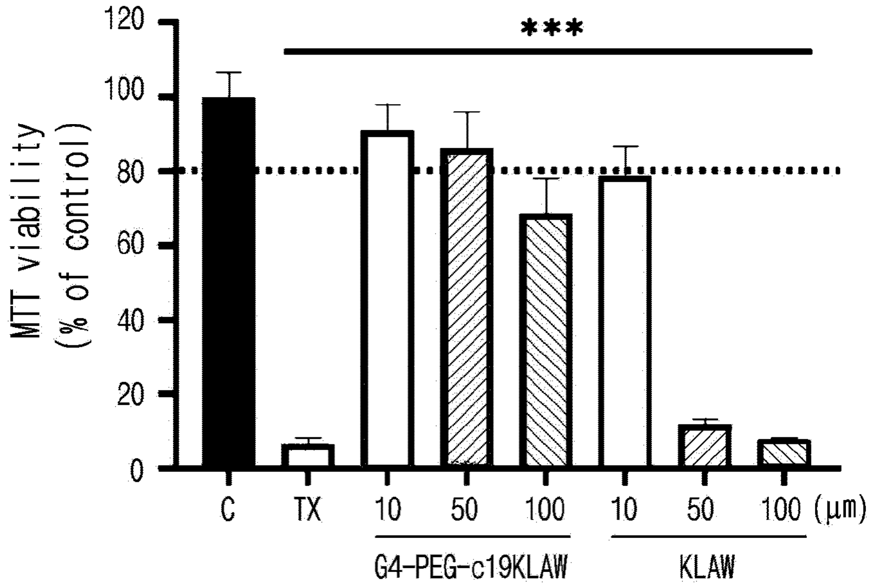


FIG. 26B

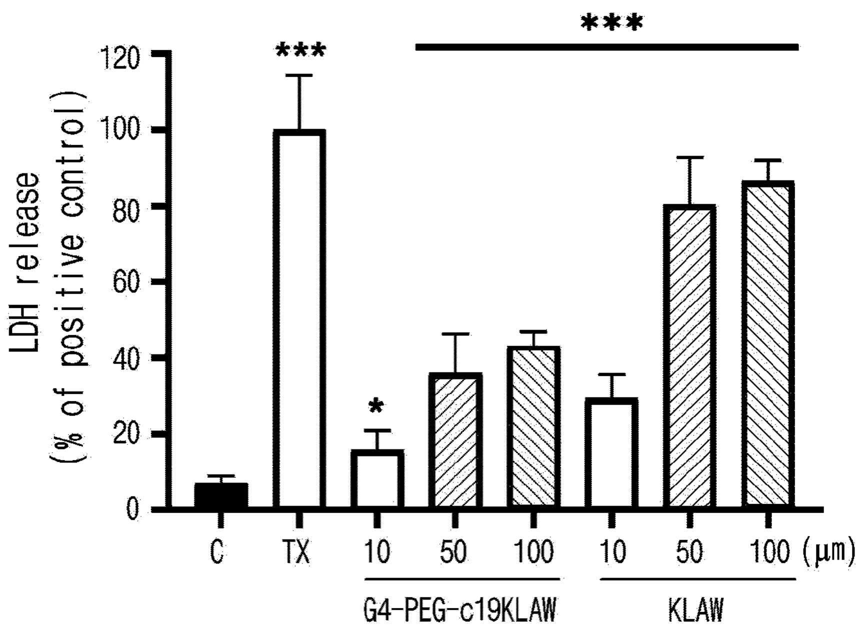

FIG. 26C

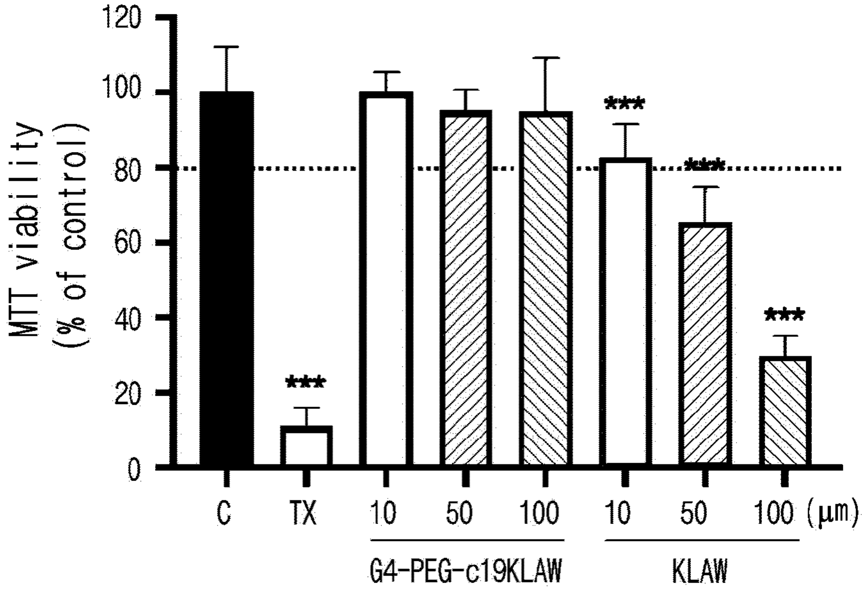


FIG. 27

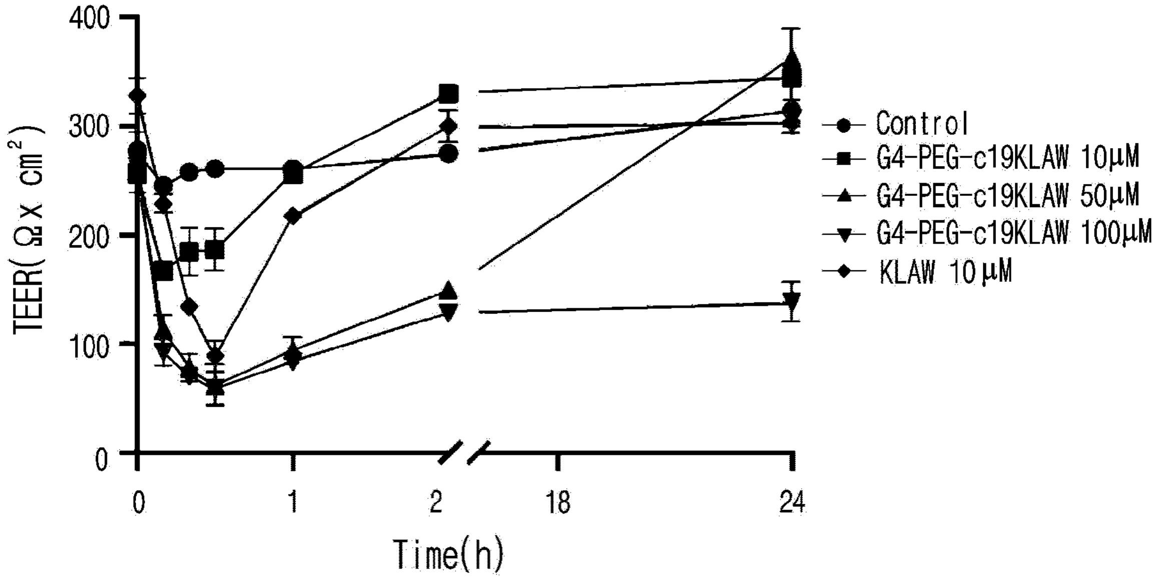

FIG. 28

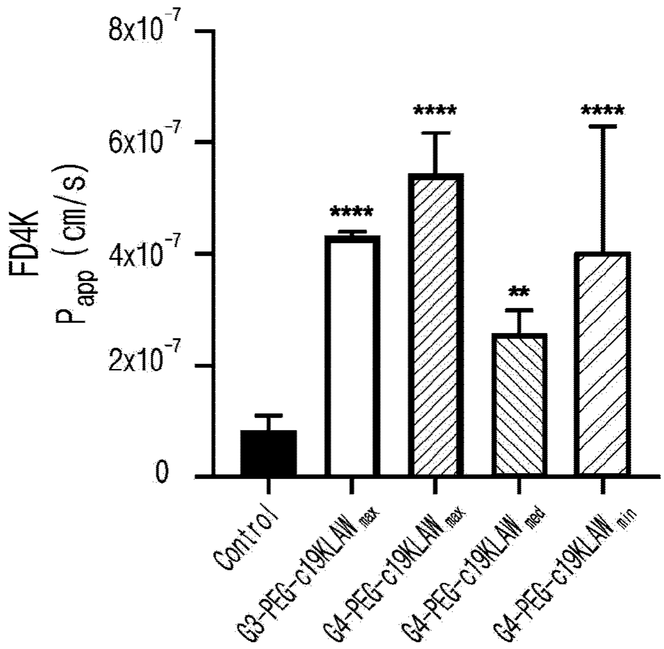
8x10^-7
6x10^-7
4x10^-7
2x10^-7
0
FD4K
Papp (cm/s)
****
****
**
****
Control
G3-PEG-c19KLAW max
G4-PEG-c19KLAW max
G4-PEG-c19KLAW med
G4-PEG-c19KLAW min

FIG. 29

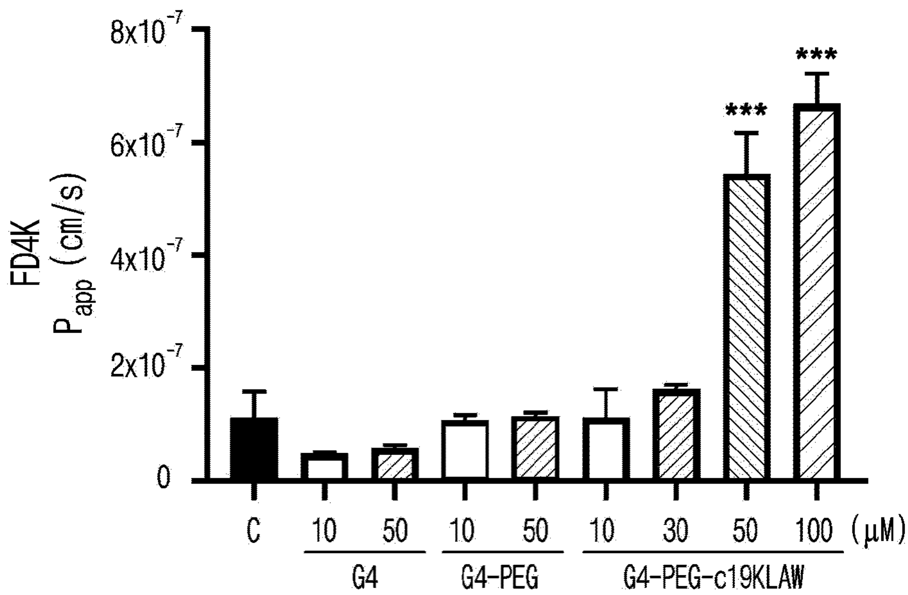
8x10^-7
6x10^-7
4x10^-7
2x10^-7
0
FD4K
Papp (cm/s)
***
***
C
10
50
10
50
10
30
50
100
(μM)
G4
G4-PEG
G4-PEG-c19KLAW

FIG. 30

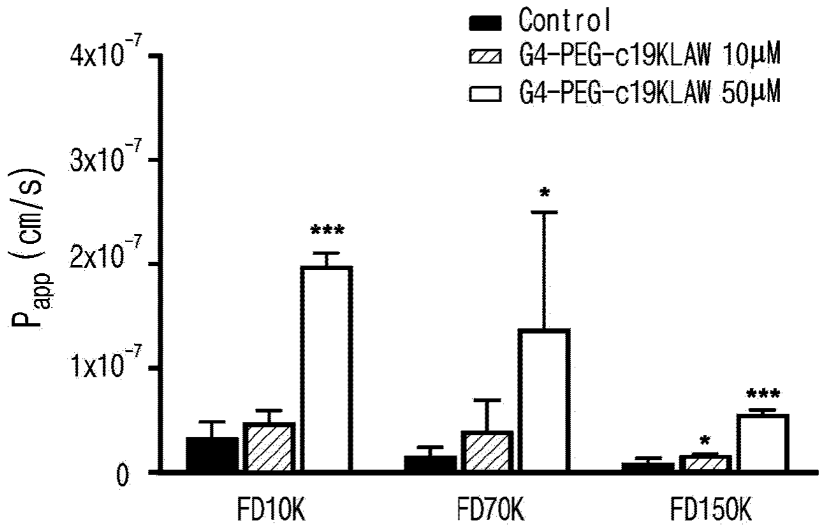
Control
G4-PEG-c19KLAW 10μM
G4-PEG-c19KLAW 50μM
4x10^-7
3x10^-7
2x10^-7
1x10^-7
0
Papp (cm/s)
***
*
***
*
FD10K
FD70K
FD150K

FIG. 31

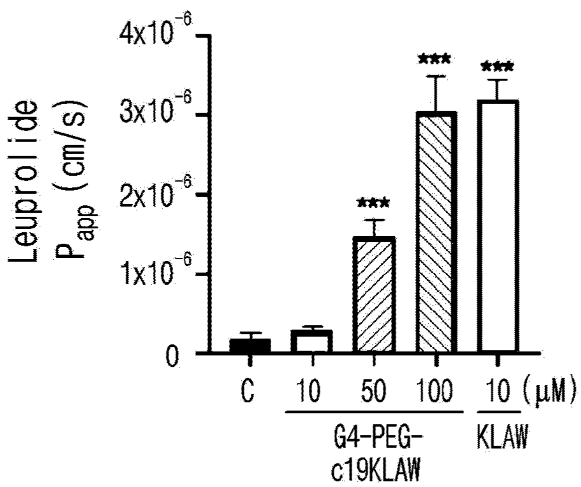
4x10^-6
3x10^-6
2x10^-6
1x10^-6
0
Leuprolide
Papp (cm/s)
***
***
***
C
10
50
100
10 (μM)
G4-PEG-
c19KLAW
KLAW

FIG. 32

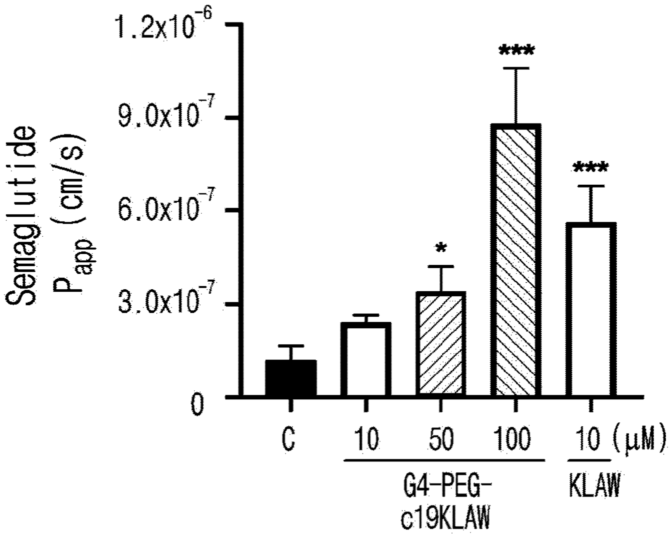
1.2x10^-6
9.0x10^-7
6.0x10^-7
3.0x10^-7
0
Semaglutide
P_app (cm/s)
***
***
*
C
10
50
100
10 (μM)
G4-PEG-
c19KLAW
KLAW

FIG. 33

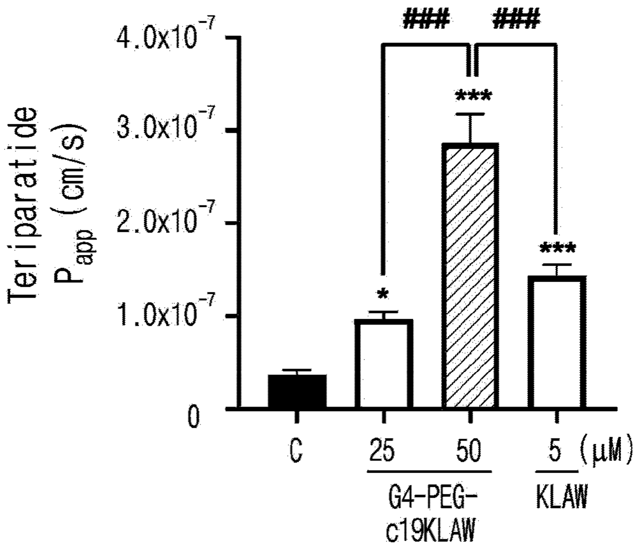
4.0x10^-7
3.0x10^-7
2.0x10^-7
1.0x10^-7
0
Teriparatide
P_app (cm/s)
###
###
***
***
*
C
25
50
5 (μM)
G4-PEG-
c19KLAW
KLAW

FIG. 34

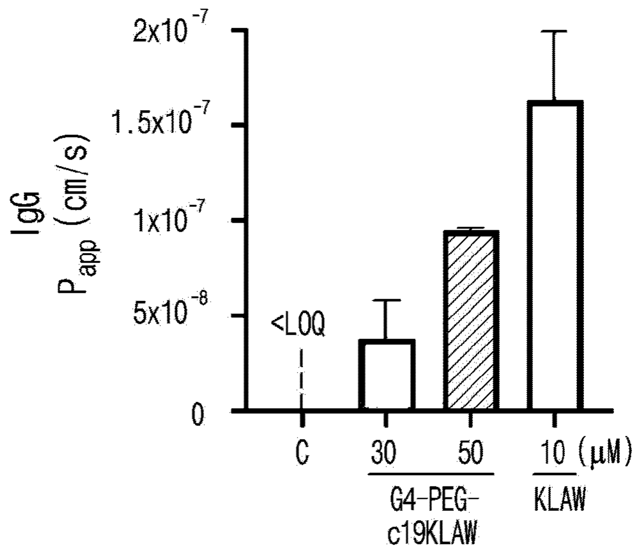
IgG
$P_{app}$ (cm/s)
2x10^-7
1.5x10^-7
1x10^-7
5x10^-8
0
<LOQ
C
30
50
10 (μM)
G4-PEG-
c19KLAW
KLAW

## INTERNATIONAL SEARCH REPORT

International application No.
**PCT/KR2024/002614**

### A. CLASSIFICATION OF SUBJECT MATTER

**C08G 81/00**(2006.01)i; **C08G 65/48**(2006.01)i; **C08G 69/10**(2006.01)i; **A61K 47/34**(2006.01)i; **A61K 47/42**(2006.01)i; **A61K 47/12**(2006.01)i; **A61K 9/00**(2006.01)i

According to International Patent Classification (IPC) or to both national classification and IPC

### B. FIELDS SEARCHED

Minimum documentation searched (classification system followed by classification symbols)

C08G 81/00(2006.01); A61K 38/00(2006.01); C07K 14/435(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌 글리콜 (polyethylene glycol), 펩타이드 접합체 (peptide conjugate), 덴드리머 (dendrimer), 흡수 증진 (improved absorption)

### C. DOCUMENTS CONSIDERED TO BE RELEVANT

| Category* | Citation of document, with indication, where appropriate, of the relevant passages | Relevant to claim No. |
|---|---|---|
| DX | KR 10-2008-0042843 A (NASTECH PHARMACEUTICAL COMPANY, INC.) 15 May 2008 (2008-05-15)<br>See claims 1-78; paragraphs [0039] and [0110]; example 34; table 33; and figures 8-13. | 1,2,10,13-16 |
| DY | | 5-9,11,12 |
| DA | | 3,4 |
| Y | SHI, L. et al. Effects of polyethylene glycol on the surface of nanoparticles for targeted drug delivery. Nanoscale. 2021, vol. 13, pp. 10748-10764.<br>See abstract; and figure 1. | 3,4,11 |
| Y | 막투과성 펩타이드 CPP 시리즈 제품-리포솜/나노셀 담체. 26 February 2018, non-official translation (Membrane-permeable Peptide CPP Series Products-Liposome/Nanocell Carrier). Retrieved from the Internet <https://www.chem17.com/st223282/news_1035300.html> (Korean Translation Version).<br>See sections 1 and 1.1. | 3,4 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2024** | **10 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/002614

C. DOCUMENTS CONSIDERED TO BE RELEVANT

| Category* | Citation of document, with indication, where appropriate, of the relevant passages | Relevant to claim No. |
|---|---|---|
| Y | LUONG, D. et al. PEGylated PAMAM dendrimers: Enhancing efficacy and mitigating toxicity for effective anticancer drug and gene delivery. Acta biomaterialia. 2016, vol. 43, pp. 14-29. See abstract; pages 17 and 20; and figures 4-6. | 5-9,12 |
| Y | BOCSIK, A. et al. Dual action of the PN159/KLAL/MAP peptide: Increase of drug penetration across caco-2 intestinal barrier model by modulation of tight junctions and plasma membrane permeability. Pharmaceutics. 2019, vol. 11, 73, pp. 1-21. See abstract. | 5-9,12 |

Form PCT/ISA/210 (second sheet) (July 2022)

**INTERNATIONAL SEARCH REPORT**
**Information on patent family members**

International application No.
**PCT/KR2024/002614**

| Patent document cited in search report | Publication date (day/month/year) | Patent family member(s) | Publication date (day/month/year) |
|---|---|---|---|
| KR 10-2008-0042843 A | 15 May 2008 | AU 2006-272483 A1 | 01 February 2007 |
| | | CA 2616778 A1 | 01 February 2007 |
| | | CN 101233151 A | 30 July 2008 |
| | | CN 101233151 C | 30 July 2008 |
| | | EP 1919939 A2 | 14 May 2008 |
| | | JP 2009-502967 A | 29 January 2009 |
| | | NZ 566281 A | 27 August 2010 |
| | | US 2006-0062758 A1 | 23 March 2006 |
| | | US 2007-0154449 A1 | 05 July 2007 |
| | | US 2009-0220435 A1 | 03 September 2009 |
| | | US 2009-0274658 A1 | 05 November 2009 |
| | | US 2010-0247482 A1 | 30 September 2010 |
| | | WO 2007-014391 A2 | 01 February 2007 |
| | | WO 2007-014391 A3 | 28 June 2007 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007014391 A
- US 20070154449 A


### Non-patent literature cited in the description


- *Adv. DrugDeliv. Rev.*, 2016, vol. 106, 277-319